# EUROPEAN PATENT SPECIFICATION

(11) **EP 1 472 597 B1**
(45) Date of publication and mention of the grant of the patent: **11.08.2010**
(21) Application number: 02772544.9
(22) Date of filing: 24.10.2002
(51) Int. Cl.: G06F 9/44

(54) **DATA PROCESSING SYSTEM AND METHOD**
DATENVERARBEITUNGSSYSTEM UND -VERFAHREN
SYSTEME ET PROCEDE DE TRAITEMENT DE DONNEES

(30) Priority: 24.10.2001 GB 0125531
(43) Date of publication of application: 03.11.2004
(73) Proprietor: Accenture Global Services GmbH, 8200 Schaffhausen (CH)
(72) Inventor: MENSAH, Trevor, c/o Imagine Broadband Limited, London WC2B 4HN (GB); PHILIPPE, Olivier, c/o Imagine Broadband SARL, 06410 Biot (FR)
(74) Representative: Müller-Boré & Partner Patentanwälte
(86) International application number: PCT/GB2002/004812
(87) International publication number: WO 2003/036471

(56) References cited:
- EP-A- 0 961 490
- WO-A-00/24192
- WO-A-00/72583
- WO-A-01/08410
- WO-A-98/46006
- WO-A-99/52083

## Description

The present invention relates to data processing systems and is particularly concerned with producing software that can run on processing systems of limited processing power without being constrained to specific hardware.

By way of general background, it is possible to run relatively complex applications on platforms of limited processing power if the application is tailored for the hardware platform. This may entail programming in a low level language such as assembler with references to any hardware being hard-coded. This can result in very efficient applications but suffers from the drawback that programming of complex tasks may require highly specialist skills, including detailed knowledge of the hardware platform, and it may be difficult to make applications portable. Any small change in the hardware configuration of such an application may result in failure of the application to work or may require an extensive reworking of the code.

At the other end of the spectrum, high-level languages have been developed which are intended to be essentially platform independent. For example, the Windows operating system achieves a level of hardware independence. However, this requires many hundreds of megabytes and processing power of several hundred million instructions per second (MIPS) to carry the operating system overheads in order to run successfully.

Java script and Java byte code have been developed which are intended to run on a virtual machine which is essentially hardware independent. Applications using these languages can be more compact than Windows applications but there is still operating overhead. These languages are essentially interpreted (i.e. an interpreter programme reads the instructions and determines what low-level steps must be performed, as compared to a compiled programme in which directly executable instructions are produced and operation is therefore generally relatively slow. For some applications where execution speed is not critical, this may not be unduly problematic but certain interactive applications, particularly games, may be very difficult to achieve using Java without sufficient processor speed.

The present invention is generally concerned with the problem of producing compact applications which can be created without undue difficulty (for example without having to code applications extensively in assembly language), which run efficiently on a hardware platform and are portable from one platform to another without undue difficultly. In a preferred application, the invention is concerned particularly (but not exclusively) with enabling an interactive user application (hereinafter "IUT"), particularly a game to be provided on processing devices of limited processing power, particularly set-top boxes such as are used for decoding of signals through a television. Typical set-top boxes in current use only allow of the order of about 8 megabytes for applications and only have a processor capable of the order of 100 MIPS (million instructions per second) which is an order of magnitude less than typical personal computers. However, the architecture is applicable to other devices, such as hand-held devices, mobile devices, dedicated games or entertainment devices and even in fact to general purpose computers where it is desired to provide an efficient processing architecture.

WO-A1-00/24192 discloses a software architecture framework for a set-top box which allows the consideration of application and middleware software functionality independent from the operating system and hardware.

WO-A1-01/08410 discloses a system for displaying graphics images in a cable television system, the system including means for converting the graphics image into a hardware-dependent or hardware-independent format at the headend before transmission of the image to the set-top box.

Aspects of the invention are set out in the claims. Preferred features are set out in the dependent claims. In the specification, unless otherwise stated or apparent from the context, references to set-top boxes are intended to encompass any form of decoder which receives (preferably digital) signals from a medium (satellite, cable, DSL, terrestrial being non-limiting examples) and provides (typically analogue, but digital output is not excluded) video signals for a display device (television, plasma screen, video projector being non-limiting examples). Whilst stand-alone set-top boxes are commonplace, the functionality of the set-top box may be integrated into a display device (for example a television with built in digital decoding) or other device (for example cable modem or other communication device).

There is described herein a device, preferably a set-top box, comprising:
a hardware platform including a processor, memory, at least one input interface and at least one output interface; and
a software platform including respective device drivers for the interfaces; characterised by:
   middleware optimised for said hardware platform providing an API (application program interface) for an interactive user interface application, the middleware being arranged to interface with an application comprising a code portion and an asset portion, wherein the code portion is portable between mutually different hardware platforms and the asset portion comprises assets selected for the hardware platform.

There is also described herein said middleware and said interactive user interface application.

This may facilitate portability of applications as the code portion of the application can be written in a substantially device independent manner. However, because the middleware is compiled specifically for the hardware platform and the assets (for example screen graphics) used by the application may also be optimised for a given hardware platform, performance may be optimised for a given hardware platform. The task of translating the assets may be relatively straightforward. For example, a screen image may be stored in a device-independent format and translated to a screen image based on the characteristics of the display driver used in the hardware platform. Similarly, sound effects may be stored in a device-independent format and translated based on the characteristics of the sound card in the hardware platform.

Preferably, the middleware provides at least one complex graphics function. By complex is preferably meant that a single call to the middleware results in multiple calls to the device drivers by the middleware. Preferably, the middleware provides means for performing dynamic loading of objects, particularly widgets. Preferably, the middleware provides means for performing dynamic linking of objects, particularly widgets. Preferably, the middleware provides means for performing intelligent caching of assets, for example by retrieving an asset when required for the first time and then making the previously retrieved asset subsequently available, particularly in the case where the asset is downloaded or decompressed. Preferably, the middleware provides means for decompressing assets. Each of these preferred features may independently improve application execution without increasing application complexity (and each may be provided independently). However, combination of these features is particularly advantageous as it has been found that this core set of features combines synergistically to enable an application to run effectively in a small "footprint", with the underlying architecture providing efficient use of the hardware resources.

There is also described herein an asset manager, preferably forming a part of the middleware for a device of the first aspect, for managing assets during execution of a real-time interactive application, the asset manager comprising:
means for receiving a plurality of assets in compressed form; and
means for making assets available to the application during execution thereof in decompressed form on request from the application.

By receiving assets in compressed form, download and storage requirements may be reduced. However, the asset manager makes the assets available in a decompressed (i.e. usable) form when an asset is requested (on the fly), thereby simplifying the task required by the application to access the asset. At least some of the assets may remain in uncompressed form at commencement of execution of the application.

Preferably the asset manager includes means for caching decompressed assets. The use of cache to store a decompressed asset may improve application execution times. Preferably a database is maintained of assets in the cache, the database preferably including a measure of decompression time or usage of the asset; this may facilitate management of the cache.

In a preferred implementation, the means for making assets available may comprise:- means for decompressing assets;
means for storing a decompressed version of at least one asset in a cache;
means for receiving a request from an application for an asset;
means for determining whether a decompressed version is stored and:-
if a decompressed version is stored, making the decompressed version available to the application, or
if a decompressed version is not stored, decompressing the asset and making the decompressed version available to the application.

In a most preferred implementation, the asset manager has means for receiving a signal from an application indicating whether or not a particular asset is likely to be used again and is arranged to control caching based on any such signals received.

In a preferred implementation, the asset manager returns a pointer to a decompressed version of the asset in response to a request for an asset (the request preferably including a label or numerical identifier of an asset). In this way, processing power is not required to copy the asset and the process is essentially seamless to an application. Preferably, the asset manager has means for receiving information linking asset identifiers to location of compressed versions of assets.

In a highly advantageous embodiment, the assets are received as a compressed file structure, particularly an archive file (most preferably as a "tar" or "jar" file, as this is found to be most suitable for real-time decompression, although "zip" files or the like may be used), with the asset identifiers corresponding to file names for the files defined within the structure. The asset manager then effectively functions as a virtual filing system.

Preferably, the asset manager provides multi-lingual language support. Preferably the asset manager is arranged to retrieve a version of an asset selected based on a language parameter. In a preferred implementation, language selection is only performed for certain assets (for example text and optionally images) but not for all assets.

It is important to note that the above system applies to asset management during real time execution. The use of compression per se is known to improve archival and storage of complete files, but this is distinct from the management of data objects used within a real-time application, particularly on a device of limited processing power; in such a case, data is normally integrated with the code of an application as a complete file. Conventionally, if compression is used, for example to facilitate download prior to installation, the entire file will be compressed and then decompressed as a whole prior to execution. It is a very surprising finding that application performance as a whole on a device of limited resources can be improved by decompressing assets on the fly; however, by providing an asset manager which manages decompression of assets, an application can take advantage of reduced memory requirements without having to become more complex.

The asset manager preferably includes means for updating assets, for example when a new version of an asset is received, for example over a communication link. The asset manager may include means for sending a download request over a communication link for an asset if a compressed version is not stored. The asset manager may include means for maintaining version information of assets and for replacing older versions of assets with newer versions. The asset manager may include means for receiving an asset, means for determining whether the received asset is newer than a stored asset, and means for replacing the stored asset with the received asset if the received asset is newer. The asset manager preferably has means for replacing or accessing individual ones of assets received together in compressed form as a file containing multiple assets.

As mentioned above, the system described is particularly suited to operation of a set-top-box and advantageously is arranged for an application to be downloaded over a communication link. In a preferred implementation, the application code and assets may be separately updateable.

There is also described herein a motion engine for animating a plurality of objects, the motion engine comprising means for executing a respective block of animation code for each object, each block of animation code defining motion for a respective one of the plurality of objects based on incremental steps, wherein the motion engine is arranged to execute an incremental step from each block of animation code at predetermined regular intervals.

It is a particular problem of animation to animate multiple objects so that they interact appropriately and this is particularly difficult for complex motions; this is normally achieved by careful planning of program code layout so that all objects are animated in the correct sequence, often requiring complex loops and delay loops. The motion engine aspect provides a radically different solution in that independent portions of code are provided defining the motion of each object but the synchronisation is achieved by virtue of the fact that the motion engine executes the code synchronously (or quasi-synchronously). This can dramatically simply the task of coding animation as the programmer need only code each motion with respect to the motion engine "timebase" and the motion engine will ensure that the motions are executed at the correct rate.

Preferably, the motion engine provides an independent object execution context for each object. Preferably each object is coded as if it were running on a simple virtual machine; this simplifies coding as the programmer need not worry about changes made to the context by the code unexpectedly affecting other objects.

Preferably at least one register is provided by the motion engine for each object execution context; this allows code to store one or more values for use in complex animation routines.

Preferably at least one implicit counter is provided by the motion engine for each object execution context. This may greatly facilitate coding of certain tasks, for example an instruction to repeat a step (or a wait) 'n' times may be coded and the motion engine may carry out the step the required number of times without the animation code requiring loops to be coded.

Preferably, the motion engine has means for making available a global program counter value to each object execution context. This may enable events to be globally synchronised easily.

In a highly advantageous implementation, the motion engine preferably has means for calculating the position of an object based on the trajectory of a point of a geometric shape under a defined constraint, preferably rotation, preferably with at least one parameter defined by the code. This may greatly simplify the animation code.

In a particularly powerful example, the object may be moved as if it were a point on a circle. The "circle" may have, but need not necessarily have constant radius; as explained below, commands may provide modification of the "circle" radius. Preferably the motion engine has means for receiving an instruction specifying that an object (or at least one co-ordinate) is to be moved as part of a (notional) circle and further specifying at least two of:
(a) the radius of the circle and the starting angle;
(b) the co-ordinates of the circle centre; and
(c) the object start point.

Preferably, a measure of angular rotation rate can be specified (for example angular measure (e.g. radians) per time increment). Preferably also, the number of time increments for which the motion continues may be specified. Preferably, the circle centre point is not constrained to be on the visible part of the screen. With such a command, arcuate or approximately straight motions of defined length and curvature can be coded with a single command. This allows arcs to be animated with a single coding instruction, greatly simplifying animation coding.

In an unusual development, it has been found that highly complex motions can be remarkably efficiently coded if this is extended to include further parameters.

In a preferred enhancement, at least two components of the object position (typically x and y co-ordinates (the z co-ordinate may be included for 3D animation)) are determined based on modelling the motion of at least two independently defined geometric entities. Most preferably, a first (preferably the x) component of an object position is modelled as a component (preferably the x-component) of a first (notional) transformable geometric entity (preferably a rotatable line) and a second (preferably they) component of an object-position is modelled as a component (preferably the y-component) of a second (notional) transformable geometric entity (preferably a rotatable line). Providing the two components based on two notional objects may allow complex motions to be defined concisely.

Most preferably, the motion engine comprises means for receiving a first animation code command specifying an initial position of an object based on the position of at least one (notional) geometric entity (preferably a rotatable line) and means for receiving a second animation command specifying a transformation (preferably including a rotation) of said at least one geometric entity.

In a particularly advantageous development, a change in angular position per incremental step and a change in rotational radius per incremental step can both be specified; this allows motion such as spiral motion to be coded easily. Most advantageously, change in angular position and change in rotational radius can be independently specified for each of at least two (typically x and y) components. This can allow very complex movements to be specified using only 4 parameters in a single command.

Preferably, a translation component can be specified in addition to a rotation component. This may allow complex motions which are generally translational to be efficiently coded.

Preferably, a transformation command includes means for specifying the number of incremental steps for which it is applied. This may allow a single command to describe a complete trajectory or defined portion without any need for looping.

In an extremely useful implementation, the motion engine has means for receiving a position defining command specifying:-
a starting position having x and y components;
a notional x radius and starting x angle for modelling motion of the x component;
a notional y radius and starting y angle for modelling motion of the y component.

The motion engine preferably also has means for receiving a movement defining command specifying:-
a number of incremental steps for which to repeat the command;
an incremental change to a notional x radius for modelling motion of an object x component;
an incremental change to a notional x angle for modelling motion of an object x component;
an incremental translation to the x component;
an incremental change to a notional y radius for modelling motion of an object y component;
an incremental change to a notional y angle for modelling motion of an object y component; and an incremental translation to the y component.

With this very powerful combination, extremely complex trajectories, including acceleration and deceleration, arcuate, spiral, looping, and translation motion can be specified in a single animation code command.

There is also described herein a development tool comprising means for determining at least one rotation command (preferably as aforementioned) to provide an approximation of an input trajectory. For example, an approximate trajectory may be input by hand, for example based on a mouse movement and one or more rotation commands which achieve an approximation may be generated.

There is also described herein a motion engine for interfacing with an interactive user application running on a target hardware platform having a graphics output, the motion engine comprising code optimised for the target hardware platform for receiving a high-level device-independent animation command from the application and for performing a plurality of low-level graphics output operations in response thereto.

There is also described herein a motion engine for interfacing with an interactive user application to animate a plurality of objects, the motion engine comprising means for providing an independent execution context for execution of each of a plurality of blocks of animation code corresponding respectively to said plurality of objects. Preferably the blocks of code are executed synchronously.

The motion engine may be arranged to interpret animation script or more preferably animation byte code to receive commands from the application or may be arranged to receive a call from the application in which an animation command is passed as a parameter. Preferably, the motion engine is arranged to execute a block of animation byte code.

In a preferred arrangement, objects to be animated are referenced by a pointer to an area of memory containing the object information. In this way, the object itself can be modified by the application independently of the operation of the motion engine. More preferably, the pointer comprises an indirect pointer (a pointer to a pointer) to an object image. In this way, the application can simply modify the pointer to the object image to change object appearance, for example to cycle through images for a moving object.

Preferably, the motion engine includes means for receiving a command including a call to a routine external to the animation code. Preferably also, the motion engine includes means for communicating an event to the animation code execution context. These may enable the motion engine to handle a degree of interactivity, with the application being invoked to handle more complex events. Preferably, the motion engine includes means for receiving a conditional instruction; this may facilitate more complex animation sequences and interactive sequences.

In a preferred implementation, the motion engine is optimised for a hardware platform on which it runs. Preferably the motion engine executes commands by performing low-level calls (which may be hardware platform specific) to a graphics driver. With this, there are two main points of note. Firstly, desirably, performance may be improved. Secondly, less desirably, coding of the motion engine may become platform specific. However, any lack of portability of the motion engine does not affect the portability of the application. It it a feasible task to produce motion engines optimised respectively for a plurality of hardware platforms (as this only need be done once by a developer familiar with the hardware platform) but developing applications for multiple specific platforms is much more onerous. Moreover, particularly for downloaded software, managing download of applications based on hardware platform may increase server side resource requirements.

There is also described herein a set-top-box comprising middleware for running an interactive user application, preferably an interactive real-time game.

Use of a set-top-box having a communication interface and functionality to display video received over the communication interface to provide an execution platform for an interactive user application, preferably an interactive real-time game, preferably wherein video images are generated in real time by the set-top-box is also described.

A method of producing an interactive user application for one of a plurality of target hardware platforms is described, the target hardware platforms having middleware for running said interactive user application, the method comprising:
providing application source code that is substantially independent of the hardware platforms;
compiling the application source code to provide object code optimised for a specified target hardware platform;
providing application resources optimised for the target hardware platform.

Preferably the resources are compressed into a file structure containing a plurality of resources.

The method may include providing the application and the resources as separate components over a communication link.

There is also described herein a method of operating a set-top-box, having a communication link for receiving video data for display and means for outputting a video display, the method comprising receiving, preferably over the communication link, an interactive user application, executing the application and generating a real time sequence of moving video images for display; and outputting a video display based on said generated images.

There is also described herein a set-top-box having an input device for providing real-time inputs for a real-time interactive game. This novel approach facilitates real-time applications.

Use of a remote control of a set-top-box to provide real time inputs for an interactive real-time game is also described. The novel use of a remote control facilitates gaming using existing hardware.

There is also described herein use of a set-top-box receiving a signal decodable to produce a video display to execute an application to display a real time sequence of synthetic video images in place of said received signal. This may make optimum use of the processing power of the set top box when the content received is not as desired by the user.

There is also described herein a method of operating a set-top-box connected to a communication link, the method comprising executing an interactive user application on the set-top-box and communicating a result of said executing to a server, preferably wherein the result is a score from a game. The result is preferably communicated over said communication link. This can facilitate user participation in distributed competitions.

There is also described herein a method of operating a set-top-box having means for receiving a sequence of video images comprising executing an interactive user application which generates a sequence of video images and combines the generated images with at least a portion of received video images. This can provide novel applications where "live" video is combined with synthetic borders or appears within a game.

There is also described herein an interactive user application which generates a sequence of video images and combines the generated images with at least a portion of received video images.

There is also described herein a motion engine for a set-top-box comprising means for combining a moving generated graphic with at least a portion of a video image received by the set-top-box.

There is also described herein a server comprising means for storing interactive user applications and resources for a plurality of set-top-boxes having mutually different hardware platforms and means for selecting an application and resources appropriate to a target hardware platform.

There is also described herein an object trajectory produced by a motion engine or a block of animation code for execution by a motion engine.

There is also described herein an interactive user application comprising a code portion compiled from substantially hardware independent code for a target platform in combination with a resource portion comprising assets selected for the target platform, preferably wherein the resource portion is compressed.

Many devices, even of low processing power, such as set-top-boxes, have graphics drivers capable of operating in more than one screen mode, for example a higher resolution and/or higher colour depth mode and a lower resolution and/or colour depth mode. Available modes may include a "true colour" (24 bit or higher, e.g. 32 bit), high colour (e.g. 16 bit), medium colour (typically 12 bit) a 256 colour mode (8 bit), and optionally lower colour modes, for example 4 bits per pixel or a monochrome mode. As is well appreciated, higher colour depths can give more pleasing displays, but require more memory and processing power. For simple applications, particularly set-top-boxes, a screen mode which is a compromise is chosen, typically a 16 bit mode. It has been appreciated pursuant to the invention that many graphics cards are at a hardware level capable of using more than one mode on the screen at once, subject to certain limitations dependent on the hardware (for example the regions may need to be at least vertically distinct). However, this capability is normally merely theoretical, particularly on a device of limited processing power, such as a set-top-box, as operating system constraints typically make this impossible and/or mean that an application wishing to make us of this would in most cases need to be so complex to drive the card that any small advantage of using a lower depth screen mode for a portion of the screen would be offset by the greater overall complexity required.

Middleware for a device, preferably a set-top-box is also described, including a graphics processor having a plurality of available screen modes, the middleware providing means for controlling the graphics processor to display more than one mode simultaneously on a screen and means for receiving drawing instructions from a plurality of applications. As with all methods and middleware disclosed herein, features of the method may be applied to the middleware and vice versa.

The middleware may be arranged to provide a first region of screen having a first graphics mode and a second region of screen having a second screen mode. The middleware may be arranged to receive drawing instructions for drawing on respective regions of screen from a plurality of concurrent applications. Preferably the modes have mutually different colour depth or number of bits per pixel. Additionally or alternatively, the modes may have mutually different resolutions. Preferably the regions of screen are vertically distinct (for example upper and lower or, in the case of more than two regions, corresponding to respective stripes); whilst provision of more than one mode horizontally may be achievable, this may complicate hardware requirements and software requirements for defining regions. Surprisingly a significant benefit is obtained when regions are distinct vertically. Drawing instructions may comprise anything required from instructions which require significant processing (e.g. draw text using a specified font) or memory copy (e.g. dma) instructions.

A significant advantage is obtained wherein the middleware enables memory copy instructions as applications can be optimised to copy native assets directly to the screen. By "native", as will be understood by one skilled in the art, is preferably meant optimised for a particular hardware platform, for example in the case of a displayable asset, this may comprise data which is in a format corresponding to that used by display hardware. There is also described herein a device having middleware enabling an application to copy an image directly to screen memory of a graphics processor and a plurality of applications each storing assets in a native form suitable for direct copy to screen memory, preferably wherein the middleware is arranged to control the graphics processor to operate in more than one concurrent mode in mutually distinct screen regions and wherein assets are stored in more than one native form, each form suitable for direct copy for a respective screen mode. Thus, the advantages of storing assets in native form, which drastically reduces processing required to display images can be achieved together with the flexibility to select an optimum screen mode for an application.

The multiple modes feature is particularly advantageous in the case that one of the applications comprises a browser application. The browser may be displayed in a screen region with colour depth appropriate to the browser (16 bits may be preferred in some cases but 256 colours may be used for increased speed of display) and a further application, for example a game, which may benefit from a lower colour depth to enhance execution speed or conserve memory may be displayed at, for example, 256 colour depth, or alternatively an application which may require a higher colour depth or resolution, for example an application for viewing stored or received images. The invention further provides a method of operating a device having a display, preferably a set-top-box, comprising displaying more than one graphics mode on the screen concurrently under the control of middleware.

There is also described herein a set-top-box having means for running a first application, preferably a browser application in a first region of screen in a first graphics mode and a second application in a second region of screen in a second graphics mode. A suite of applications including said first and second applications is also described.

In a highly preferred arrangement, the browser application is provided as a widget, which may be called by one of a plurality of applications. By providing the browser as a widget, very powerful applications which include, for example, some or all of the functionality of a browser may be efficiently constructed, simply by instantiating the browser widget, without having to repeat coding of the browser and without requiring multiple browser applications to be stored. It is a general advantage of preferred embodiments of the architecture disclosed herein that the widgets, which can be efficiently compiled to native code, can themselves provide complex functionality that might typically be associated with an application. By the term "native code", as used herein, as will be understood by one skilled in the art, is preferably meant binary code that is executable on a hardware platform. This will normally be machine language directly executable by a particular processor. However, where the context so requires, it may also include e.g. device independent byte code, which is interpreted by the middleware platform, but in which multi-byte integer variable values are formatted as "big-endian" or "little-endian" (i.e. most significant byte (MSB) first or least significant byte (LSB) first) and floating point numbers formatted according to the requirements of the underlying processor.

A further advantage of providing a browser as a widget is that multiple instances of a browser may be provided on a set-top-box or other device of limited processing power without unduly using memory and loading the processor. As explained in more detail below, a widget comprises a code portion which controls operation of the widget and one or more assets (typical examples being graphics or text). Although the code may be simple, for example in the case of a widget such as a basic drawing component, as mentioned in conjunction with the browser, complex code may be provided. Widgets need not necessarily include visible objects, but may include code for executing communication or other functions.

There is also described herein a set-top-box having means for executing multiple instances of a browser. As noted above, preferably means are provided for enabling a browser to execute in a region of screen separate from another application (or widget) and the other application may include another browser instance.

References to browsers are intended to encompass web browsers, that is browsers which are capable of displaying a representation of HTML or other code retrieved over a network such as the Internet. However, the term is not limited to conventional web browsers but may extend, for example, to browsers for retrieving information from a remote source in a proprietary manner.

An advantageous feature of the architecture described is that logic of widgets (e.g. compiled code or byte code or scripts) can be stored, updated and uploaded separately from assets. This may enable, for example a compressed file of assets to be uploaded (for example to be decompressed by the asset manager described herein) and code to be uploaded in uncompressed form suitable for execution. Furthermore, assets may be replaced independently of the logic, for example to change the look and feel of an application.

To facilitate separation of logic and assets, preferably widgets including displayable assets and code include information defining displayable asset attributes (preferably bounding shape, preferably rectangle, co-ordinates or height and width and index point) separate from the asset itself (preferably bound to the code). By defining displayable attributes, the asset can be substituted for another which will fit in a bounding box (which preferably is not constrained to be the same size as the asset and may be larger than the actual size of the asset to be displayed, to facilitate later substitution) of the same dimensions (e.g. another image or alternative text). To facilitate language selection, preferably assets are provided in a selection of languages and preferably the middleware has means for selecting an appropriate language asset. Applications may have a default language as an attribute of a widget or base screen or base object and this may be configurable by a user.

There is also described herein a method of defining a component of an application comprising providing a code portion defining an operation of the component, defining display attributes, preferably a bounding shape, for determining position of display of a displayable asset and providing a displayable asset, wherein preferably the displayable asset is interchangeable with another asset and/or is arranged to be stored or communicated separately from the code portion. Preferably the code portion is packaged or bound with the display attributes and a pointer (for example a file name or partial file name) to a location of the displayable asset; in this way the target of the pointer can be changed or downloaded independently of the code portion. There is also described herein a widget comprising a code portion bound to display attributes for a displayable asset and a displayable asset portion referenced by the widget arranged for separate storage from the widget code portion. As above, the display attributes may comprise a bounding shape, preferably bounding rectangle.

A method of displaying a widget (as defined above) is also described, preferably comprising displaying a displayable asset based on the display attributes associated with the widget. Displaying may comprise clipping an asset (e.g. image or text) to fit within a bounding shape. Clipping is preferable on devices of limited processing power. Displaying may comprise scaling a displayable asset that is larger or smaller than a bounding shape. Displaying may comprise centring a displayable asset. Displaying may comprise copying a displayable asset at a starting corner (this may be most processor efficient). Displaying may include scrolling an asset that is larger than a bounding box, either at a defined or definable rate or in response to user actuation of the widget or a command from an application. Displaying may include expanding the displayable asset to a larger size (for example larger than a bounding box) in response to user actuation of the widget or a command from an application. Widgets may include information defining a mode of display (clip, scroll, centre, offset etc).

Preferably displaying is performed by middleware of a device on which the widget is loaded; this simplifies application construction. There is also described herein middleware for handling a plurality of widgets comprising means for obtaining display attributes for the widgets, means for referencing a displayable asset of the widget (preferably using an asset manager as herein described, for example selecting an asset according to language, optionally decompressing or downloading an asset as required) and means for displaying the displayable asset in dependence on the display attributes. The middleware may include means for clipping an asset to fit within a bounding box. There is also described herein a device comprising means for storing a plurality of widgets each including a displayable asset and display attributes and middleware including means for displaying a selected displayable asset in dependence on the display attributes.

As explained herein, widgets are efficiently coded with image portions which may be optimised for display on a particular target and information determining display position. It has been appreciated, pursuant to the invention, that a significant processing problem in a browser is to obtain images, determine the correct location to display them and then process (which typically includes decompressing and/or converting from a generic format) and display them, with text formatted around the images. Pursuant to the invention, it has been appreciated that efficiencies gained in coding applications may be transported to the field of dynamic browsing.

A novel browsing method is also described comprising interpreting code for display (e.g. a markup language such as HTML) at a proxy and transmitting at least certain components of the code for display, preferably at least image components to a remote device in a form optimised for hardware display on the remote device, for example as data with position information and suitable for hardware assisted (e.g. memory copy) display by a graphics processor.

According to a complementary method, there is also described a method of displaying a markup language document available from a server on a target platform, the method comprising receiving at least a portion of the markup language document in a format optimised for display on the target platform via a proxy. Preferably the portion comprises an image portion. Preferably the format optimised for display includes data suitable for copying to graphics memory of the target platform. Preferably the portion is encoded as a widget, preferably as herein explained.

As explained above, the system described can be used to enable applications to execute efficiently on a variety of platforms. Further implementations of the system may facilitate development of applications efficiently.

There is also described herein a visual development tool for developing an application for one of a plurality of selected target platforms, the tool comprising means for editing code and assets for the application independently of the target platform and means for producing code optimised for a specified target platform. The tool may comprise means for processing a displayable asset received in a device independent format (e.g. bitmap, compressed formats such as JPEG, GIF etc) and means for producing a native format asset optimised for display on a target hardware platform, preferably in a format suitable for copy to a portion of screen memory (for example by dma copying). The visual tool may include means for storing target platform parameters for a plurality of target platforms. The parameters may include at least one or more of the following:-
processor byte order (MSB first or LSB first);
processor type or family;
graphics capability, which may be further sub-classified by:-
   graphics processor type;
   colour depth(s);
   available colour modes;
   colour format (e.g. RGB or YUV);
   bit allocation for each mode;
   available screen resolution(s);
   number of modes or regions available simultaneously;
available memory;
processor speed;
other hardware parameters;
an identifier of available or existing Middleware platform version(s).

Preferably the tool has means for storing a plurality of target platform profiles and preferably has means for storing a user name for each profile. In this way, a user need simply select the target platform and code will automatically be generated that is suitable for the processor and hardware present. Some parameters may be inferred from others, preferably based on other stored information; for example, if processor type is specified, byte order may be inferred and if a graphics device specific or family identifier is stored, graphics capabilities may be inferred from this information.

In a highly preferred arrangement, an application or widget created by the tool is stored as an XML document. This facilitates storage of complex structures and facilitates export of widgets and compilation for a selected target. The tool preferably has means for translating widget attributes stored in memory into XML and vice versa.

Preferably the tool has means for translating XML to a device independent byte code encoding the widgets. The tool preferably also has means for compiling a script portion in a fully compilable language (e.g. C, lua) to native code optimised for a target processor.

A highly advantageous feature of the tool will now be explained. A tool for developing an application for a selected target platform is described comprising means for editing a plurality of widgets (or application portions), including means for storing at least one code script portion for each widget and means for selecting an asset for each widget, wherein the tool comprises means for storing a code script language designator and means for producing output code for the target based on the code script portion and the code script language designator. This can facilitate rapid development of a wide variety of widgets and applications as certain languages lend themselves better than others to certain tasks. For example, the graphics commands described herein can be very useful in producing complex animations efficiently and may be combined with other commands into a proprietary language, that may be executed by a byte code interpreter on a variety of platforms. C (which is intended to include derivates) is useful for providing code which can be efficiently compiled to machine code. Lua is a language which compiles efficiently in a similar manner to C. With such a tool, language can be selected as appropriate for the task required.

Preferably, the tool comprises means for editing a plurality of code portions for each widget. Preferably the language for each code portion may be independently selectable. A default language for the widget, or a group of widgets, may be specified. Alternatively, code languages may vary between widgets but be constrained to be constant within a widget. Preferably the tool has means for providing a user with a selectable list of available languages, preferably from a drop-down list or selectable menu box. Preferably the tool has means for storing code script and a language designator for the script in a common document, preferably XML. Preferably the tool comprises means for compiling the code script portions based on information concerning the target platform (for example processor type) and the language of each code script portion. The code script language designator may be embedded in the code, for example in a meta command or comment. In some cases, the designator may be inferred from the code by the tool without being explicitly specified, for example from code structure or based on constructs unique to a particular language if present; in such a case, where the language cannot be uniquely identified, the tool may have means for selecting a default and/or prompting the user to specify the language. Preferably the tool has means for processing at least one language compiled to native code (i.e. in this case code which is directly executable by the processor of the target platform), suitable examples being. C or lua and at least one language compiled to a byte code, examples being Java (although this is relatively processor intensive to execute) and a proprietary code optimised for the function performed by typical applications and preferably based on the graphics commands outlined herein.

An application development tool is also described comprising means for editing a code script portion, means for selecting a code language and means for producing output code derived from the code script portion based on the selected code language. Such a tool is not limited to the context described herein but may be provided more generally for developing any desired application. The too may further comprise means for selecting a target platform, wherein the code is produced based on the selected target platform. The means for producing output code preferably comprises at least one compiler.

The tool may itself be readily or dynamically upgradeable, for example by installing new modules for recognising and processing new languages. This may readily be achieved by simply calling a compiler module selected according to the language designator; in such a case, to add a new language capability requires mapping the language designator e.g. to the file name of a new module containing the new language processor and passing control of processing/compilation to the new module. This permits easy tailoring of the tool itself to a user's preferences. The tool may have means for recognising at least one language designator and compiler means for compiling the recognised at least one language pre-installed and having means for receiving at least one new language designator and for interfacing with at least one new compiler means for processing a new code language.

There is also described herein a method of processing an application for a target platform comprising storing code script, providing an editing interface for enabling a user to edit the code script, storing a language designator for the code, compiling the code after editing based on the language designator. A plurality of code script portions may be stored and the language designator may be permitted to vary between portions.

There is also described herein graphical user interfaces, intermediate code and data structures produced by or used by such tools, as well as applications and widgets generated by such tools, optionally as further described herein or as illustrated. In particular, any of the features of the user interfaces depicted in the accompanying drawings may be incorporated into the system described.

As explained herein, the system may facilitate running more processor intensive applications, such as games, for example interactive action or "arcade-type" games on devices of limited power such as set-top-boxes. An advantage of this combination is that games results may be communicated to a network centre and rewards provided based on games results.

There is also described herein a method comprising running an interactive game application downloaded over a network on a set-top-box and communicating a result of the game, for example a score, to a remote network element. There is further described a method of controlling a network comprising distributing an interactive game application to a user over the network, receiving a result of user participation in the game from the game application, comparing the result to qualifying criteria and providing the user with a reward if the result meets qualifying criteria. The reward may be selected as desired. Preferred rewards may comprise provisioning of a network service, for example making available for free or at a discount a previously unavailable or chargeable programme or service or application, for example providing a further application such as a sequel to the game, or may include providing a usage or billing credit, for example by communicating with a billing application. The reward may simply comprise communicating a user achievement to other users, for example in a winning scores table. The game is preferably an interactive action game.

There are also described herein data processing apparatus, methods of operation, apparatus embodying methods, particularly set-top-boxes (as herein defined), computer programs or computer program products, a signal containing downloadable code or code fragments, middleware, applications or widgets arranged to co-operate with middleware, assets for widgets or applications, XML code encoding widgets or applications, a server arranged to store or to transmit code and output signals corresponding to the systems preferred features disclosed herein (above and below) unless explicitly stated otherwise or positively precluded by the context. References to apparatus are intended to encompass code fragments and modules (for example a motion engine or asset manager), whether or not embodied in tangible form.

An embodiment of the invention will now be described, by way of example only, with reference to the accompanying drawings in which:-
Fig. 1 is a schematic overview of a system embodying the invention;
Fig. 2 is a schematic view of the architecture of a set-top-box embodying the invention;
Fig. 3 is a screenshot from a development tool embodying the invention;
Fig. 4 is a schematic diagram illustrating one of the motion commands provided by the motion engine;
Fig. 5 is a schematic diagram illustrating a process of web browsing using a set-top-box according to an embodiment;
Fig. 6 is a schematic diagram illustrating the process of widget creation using the widget factory described herein;
Fig. 7 is a schematic diagram of the process of loading widgets that are available to the user according to one embodiment of the system described herein;
Fig. 8 is a screen shot of a step in the process of creating an application according to one embodiment of the system described herein showing an image object being added to the application;
Fig. 9 is a screen shot of a step in the process of creating an application according to one embodiment of the system described herein showing the appearance of the application when the image has been added;
Fig. 10 is a screen shot of a step in the process of creating an application according to one embodiment of the system described herein showing a number of objects in the application, including images and buttons;
Fig. 11 is a screen shot of a step in the process of creating an application according to one embodiment of the system described herein showing the addition of a list object into the application;
Fig. 12 is a screen shot of a step in the process of creating an application according to one embodiment of the system described herein showing the addition of text into the applciation;
Fig. 13 is a screen shot of a step in the process of creating a further application according to one embodiment of the system described herein showing the application with a number of images and buttons added;
Fig. 14 is a screen shot of a step in the process of creating an application according to one embodiment of the system described herein showing the application with a text object added;
Fig. 15 is a screen shot of a step in the process of creating an application according to one embodiment of the system described herein showing the process of adding an event to the applcation;
Fig. 16 is a screen shot of a step in the process of creating an application according to one embodiment of the system described herein showing the process of editing an event for the application;
Fig. 17 is a screen shot of a step in the process of creating an application according to one embodiment of the system described herein showing the application with a number of images and a list object added;
Fig. 18 is a screen shot of a step in the process of creating an application according to one embodiment of the system described herein showing the application with a number of images, text objects and buttons added;
Fig. 19 is a schematic diagram of a process for creating an application using one embodiment of the system described herein;
Fig. 20 is a schematic diagram of the process of starting an application according to one embodiment of the system described herein;
Fig. 21 is a schematic diagram of the components of one embodiment of the Visual IMP system described herein;
Figs. 22 to 29 are exemplary schematic diagrams of the structure associated with the widget factory described herein;
Figs. 30 and 31 are exemplary schematic diagrams of components of the system described herein.
Fig. 32 is a schematic diagram of some of the functions of one embodiment of the system described herein.

In the following description, an embodiment is described in the context of a set-top-box for decoding video signals, which is a particularly preferred application. However, the architecture (and portions thereof) may be applied to other systems, for example mobile devices, handheld devices, games platforms, general purpose computers or indeed any device having a processor, memory and input and output functions.

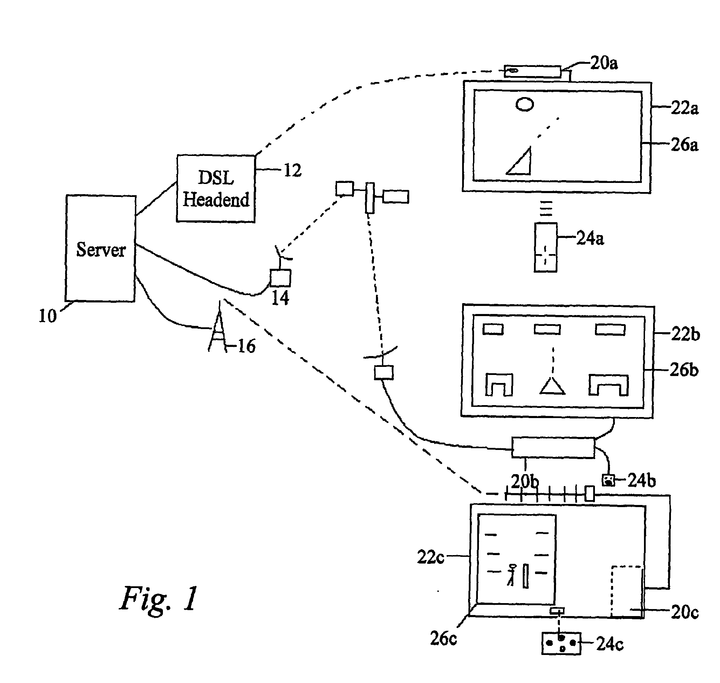

Referring to Fig. 1, a system according to the invention may comprise at least one server 10 coupled via at least one of a DSL (or cable) headend 12, a satellite link 14, a terrestrial transmitter 16, or other communication link (not shown) to a set-top-box 20a...20c. The set-top-boxes 20a...20c provide video signals to a display device such as a television 22a...22c to be displayed on a screen 26a...26c. The set-top-boxes receive input signals, for example from an infra-red remote control 24a, a direct coupled joystick or input device 24b or, in the case of a set-top-box 20c integrated with a television 22c, from a master control 24c for the television.

In normal use, the set-top-boxes decode video signals received over the communication medium to provide video output, as is well-known in the art. The set-top-boxes normally include limited functionality for providing a graphics display, for example to display static configuration and programme menus. In accordance with an embodiment of the invention, the graphics capability is made use of to provide real-time moving video (although the invention can be used to provide static video as well), for example to enable a user to play an arcade-style game.

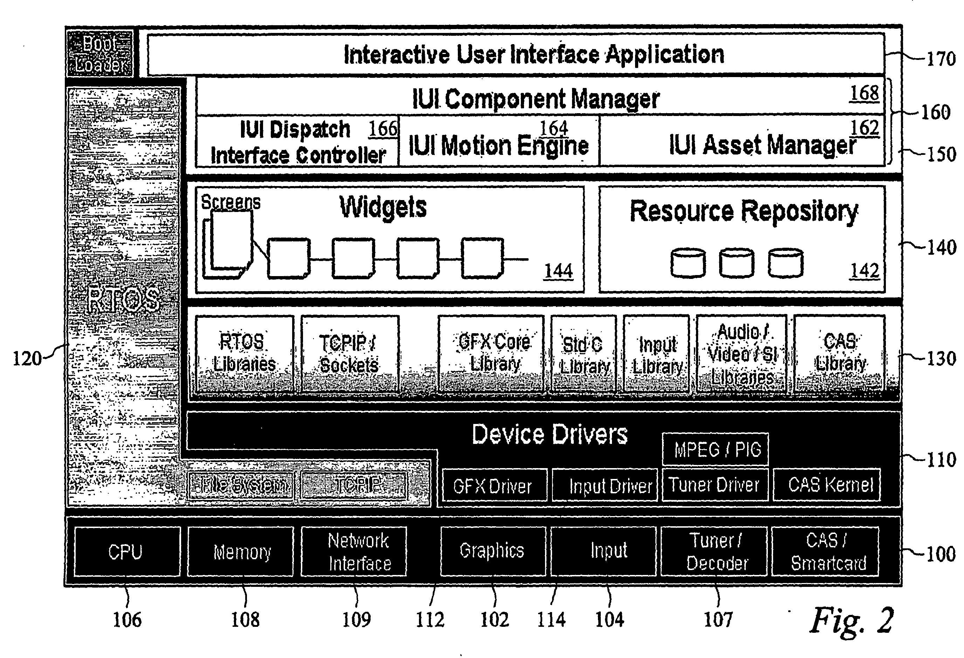

The architecture of the set-top-box which makes this feasible will be explained with reference to Fig. 2. As is well-known, a set-top-box generally has a hardware platform 100 which provides a variety of interfaces, including a graphics interface 102 and an input interface 104 and normally a sound interface (not shown). A variety of standard drivers including a graphics driver 112 and input driver 114 are provided for controlling the interfaces. The hardware has a processor 106 and memory 108 which runs the software, including a real time operating system 120.

At the level above the core device drivers 110, there is a Widget Software Development Kit ("SDK") Porting Layer comprising libraries 130 used by applications to interface with the operating system and device drivers 110. The IUI Porting Layer is an important feature (which may be provided independently) and comprises, a set of Hardware independent API libraries that make IUI Applications hardware independent.

At the level above this is the Application SDK 140 which comprises so-called Widgets 144 and a Resource repository 142.

Above this, in what would conventionally be the set-top-box application layer 150, the Interactive User Interface framework 160 and Interactive User Interface Application 170 are provided.

In overview, the key features of the IUI Core (each of which may be provided independently) are summarised below:-
o IUI Component Manager 168
o IUI Object Model Dispatch Interface Controller 166
o IUI Motion Engine 164
oIUI Asset Manager 162
oIUI Management System (not illustrated, operating "behind the scenes")

The key features it is desirable to implement in the IUI Component Manager (each of which may be provided independently) are:-
o Component method Invoking, dispatch methods, query, debug dump, etc.
o Screen context changes
o Component Base properties access
o Component Base context access
Optional selective execution of Motion Engine core code

The key features it is desirable to implement in the IUI Object Model Dispatch Interface Controller (each of which may be provided independently) are:-
o Invoking of dynamically bound functionality
o Dynamic loading of support widgets
o Dynamic linking from widgets.

The key features, or advantageous implementations, it is desirable to implement in the IUI Motion Engine (each of which may be provided independently) are:-
o Motion and animation sequences of Base Widget instances
o Support of several (in a preferred implementation tens, for example 40 or more) high-speed animation commands, most preferably including angle rotation with translation, etc.
o Support of different screen refresh animations
o Support for palette fading, alpha blending, scaling, etc.
o Command sequence control
o Command extension support

The key features it is desirable to implement in the IUI Asset Manager (each of which may be provided independently) are:-
o Acquiring new assets database from various sources, e.g. disc, rom, ram, network, etc.
o Intelligent Asset Caching
o Transparent Encryption / Rights Management
o Transparent Decompression / Compression
o High speed selecting/acquiring of assets by identifier from a given database
o Updating assets
o Storing assets database

The key features it is desirable to implement in the IUI Management System (each of which may be provided independently) are:-
o Optimal damage repair of screen
o Ordering of widgets (SendToBack, BringToFront, etc.)
o Clipping

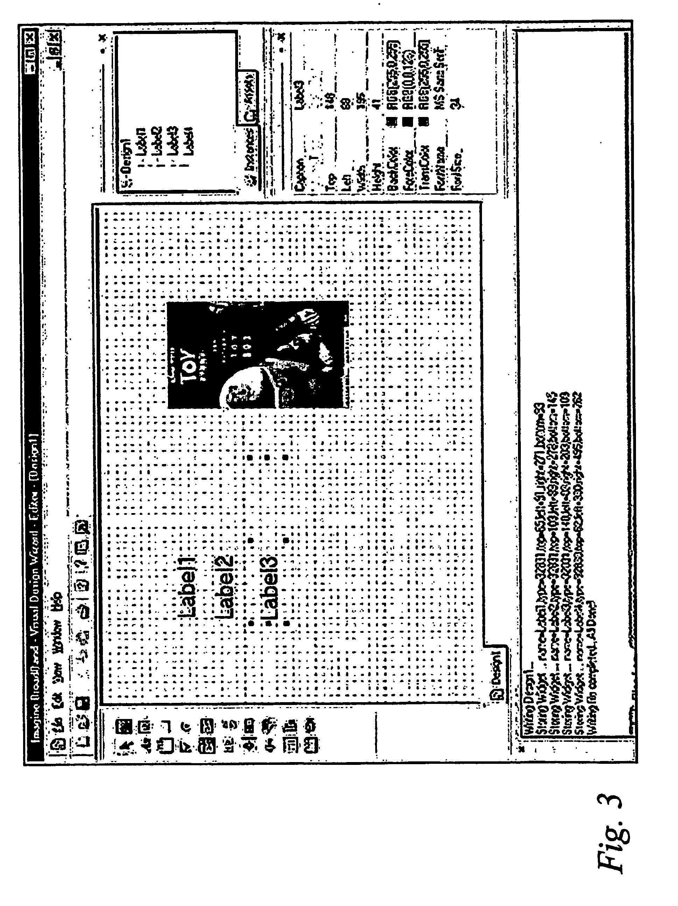

An advantageous feature of such a structure is that it becomes relatively easy to write new applications that will run efficiently. This can be facilitated by development tools. Referring to Fig. 3, a development environment using an aspect of the invention will be explained. An embodiment may provide a toolkit enabling rapid application development using a GUI development environment. The key features of this, each of which may be independently provided, may be summarised as:-
Drag-and-Drop Graphical User Interface
   o Application Builder
   o Motion Path Sequencer
   o Menu Builder
   o Resource Manager
IUI Foundation Components:
   - Screen container, Text Caption, Image View, Shape, Text Entry, Toggle, Slider, etc.
Code Generator
Resource Compiler (Hardware Specific)
Widget Creation Wizard

Those skilled in the art will appreciate from the above high level description that numerous embodiments of the middleware are possible and are straightforward to achieve incorporating this novel architecture. The number of features included in the middleware may vary depending on the level of sophistication required for a particular implementation; at its most basic, an initial port of the middleware may include only simple graphics functions, preferably written in a low level language, for example compiled from C or written directly in assembler, leaving the application to perform more complex tasks. The more functions that are provided by the middleware, the simpler applications may become.

The implementation of the asset manager may draw by analogy from techniques employed in design of conventional filing systems. Specifically, pursuant to the invention, it has been appreciated that techniques used for example in caching and decompression of files may be applied, with modification of detail, to the novel management of assets within the memory of the set-top-box.

The basic operation of the asset manager is outlined in pseudo-code:-

```
Receive request for asset giving asset identifier (asset_id);
        Look up asset_id in database to obtain asset_locator;
        Is asset (asset_locator) stored in cache?
                Yes => Asset_pointer points to asset in cache;
                No => Look up address of compressed asset;
                        Is cache full?
                                Yes => Determine which asset to remove from cache
                        Decompress asset to cache;
                        Asset_pointer pointer points asset to cache;
        Return Asset_pointer
```

In a preferred implementation, the asset manager has in-built multi-lingual support. The operation of this may be performed as part of the asset look up step as outlined below:-

```
        Is asset a language-sensitive asset? (e.g. text or image)
                Yes => Determine current language (e.g. an attribute of
 the screen)
                        Select correct language version of asset from
                        plurality of assets corresponding to asset_id to
                        determine asset_locator
                No-=> Determine asset_locator from simple lookup of asset_id
```

In a simple implementation, the asset manager may determine which asset to remove from cache based on the asset which is the oldest or which was used least recently. In more complex implementations, caching may be intelligent, for example the application may specify a priority order for assets or may supply hold and release commands and the cache manager may control which assets are retained based on commands issued by the application. This may be advantageous since the application programmer may know which assets will be used repeatedly and therefore are desirable to retain in the cache and which assets will not be used again.

The basic core architecture of the motion engine is outlined below in pseudo-code:-

```
 Wait for interrupt corresponding to time increment
        For each block of animation code:-
                Retrieve the context for the block of code
                Execute one instruction
                Determine new object position
                Re-display the object at the new object position
                Save the context
        After executing for all blocks, return to waiting
```

The interrupts are preferably every vertical blanking interval, i.e. every 1/50 second for PAL or 1/60 second for NTSC (this has the advantage that movement will coincide with frame refresh) but other periods may be used, preferably a multiple of the frame period, for example every 2 vertical blanking intervals. Most set-top boxes will provide a hardware interrupt at frame blanking interval frequency; if not, a counter or other available interrupt may be used, or a delay loop may be used. It is preferable if interrupts are used.

On a multi-threaded processor, the code for multiple blocks may be executed by separate threads. It is desirable for the code to be executed for all blocks essentially in parallel. However, because only a single, relatively simple, instruction is executed for each block at each interval, even on a relatively slow single-threaded (e.g. 50 MIPS) processor, there is normally adequate time to execute all blocks. The motion engine may typically require calls to the display drivers to display the object. Preferably, at least a part of the motion engine and the driver calls are written in a low-level language, preferably assembler; since the function is relatively simple, the amount of low-level coding required for a new hardware platform is not great. If the instruction does not alter the object position, the step of re-displaying may optionally be omitted; this may be determined either by comparing the previous position to the new position or by noting that certain instructions (e.g. delay instructions) may not require repainting of the display.

A preferred feature of the motion engine, which may be independently provided, is that the object to be displayed may be flagged to be invisible and/or may be positioned to be off the viewable display area; this may enable complex motions to be started and/or enable delays to be effected while preparing a motion without the object being visible. Preferably the motion engine has means for determining that an object is invisible or is off the screen and is arranged to curtail processing of a display routine in such a case; this feature may be provided independently.

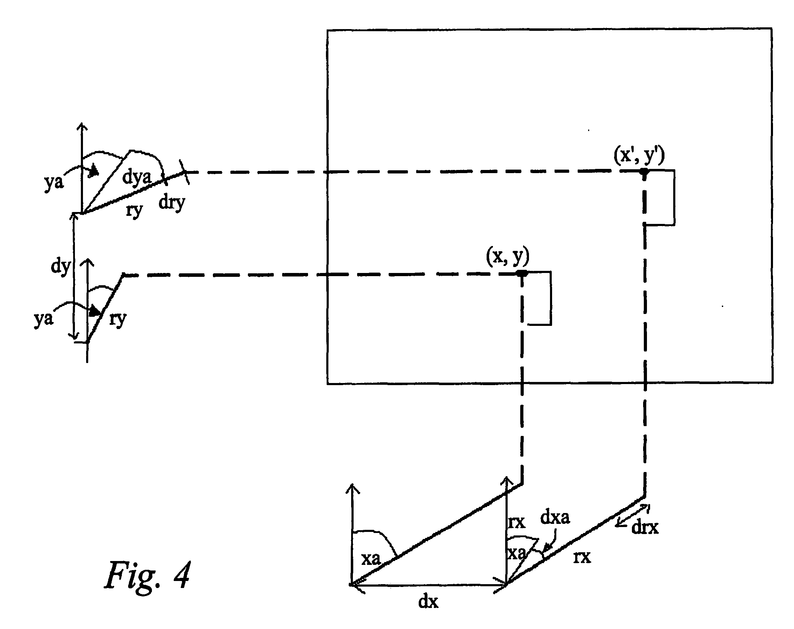

Referring to Fig. 4 and Appendices 1, a surprisingly powerful motion engine feature will now be described.

As explained above, a particular problem of animation is the coordination of two or more complex motions. The motion engine effectively provides a virtual machine with an independent context for each block of animation code. In the embodiment described, the context includes:-
a plurality of registers and/or counters (in this embodiment 7 counters);
a program counter (which is the same for each context);
a stack;
motion and/or position parameters (in this embodiment comprising offsets, radii and angles for each of the x and y components, as further explained below).

As can be seen from Fig. 4, the x and y components of the position of an object (typically the uppermost, leftmost corner of the bounding box, although other anchor points may be used) are treated as being given by the corresponding x and y components of respective rotating lines.

The motion engine preferably uses a form of Cartesian (x, y) co-ordinates (or x, y, z) to specify position as this is generally computationally simpler and generally the x component is considered as going left to right horizontally across the display and the y component may go from top to bottom (generally conventional for a television display application) or bottom to top. However, use of other co-ordinate systems (for example oriented differently, non orthogonal or even polar (r, θ)) may be used and the techniques disclosed herein may be adapted appropriately.

The initial angles and radii of the lines and start position are defined by a command (see Appendix 1 which explains the SETRPOS command, and Appendix 2 which illustrates an example of code using the command to perform a simple animation), here a SETRPOS command, which sets:-
initial x and y positions (x,y);
initial x radius rx;
initial y radius ry;
initial x angle xa; and
initial y angle ya.

It is noted that the initial object (x, y) position is preferably specified as this may be more convenient for a programmer and enables both x and why notional rotational centres to be determined. However, the notional centres themselves may be specified in place of the object location (or these may be specified in addition to the object point and the radius and start angle deduced).

To move the object, a ROTATE command specifies:-
the number of increments for which the rotation continues (e.g. 1 corresponds to one step, 50 corresponds to one second of motion in a PAL system);
the change in x angle dxa;
the change in x radius drx;
the change in x offset dx;
the change in y angle dya;
the change in y radius dry;
the change in y offset dy;

It is noted that the motion generated by the above mentioned command is similar to the Lissajous figures generated from two waveforms independently applied to x and y inputs of an oscilloscope, the rotation command giving the ability to vary effectively the amplitude, frequency and x and y axis offsets of each signal. Referring back to the development tool aspect mentioned above, waveform analysis tools, such as Fourier analysis and other audio modelling tools may be adapted to determine approximate appropriate co-efficients for an input motion. In addition or alternatively, a user may be presented with a library of standard motions, which may then be modified. For example, simple translation is achieved by setting the rotation angle increments and radius increments to zero and simply setting the translation coefficients. Simple circular or elliptic rotation is achieved by setting the angular increments equal, the translation coefficients to zero, and the radii to equal for a circle or as desired for an ellipse.

One useful feature of the architecture disclosed herein is that an efficient Internet browser may be constructed using a remote server to compile at least partially at least a portion of the content of a web page (or other information for display). For example, the content of web pages such as HTML pages may be compiled into simple widgets in which images and/or text boxes are processed into images suitable for direct copying to screen memory or hardware-accelerated display and encoded position and size attributes, thereby reducing the processing required by the target platform and also advantageously reducing the bandwidth required for transmission of the data.

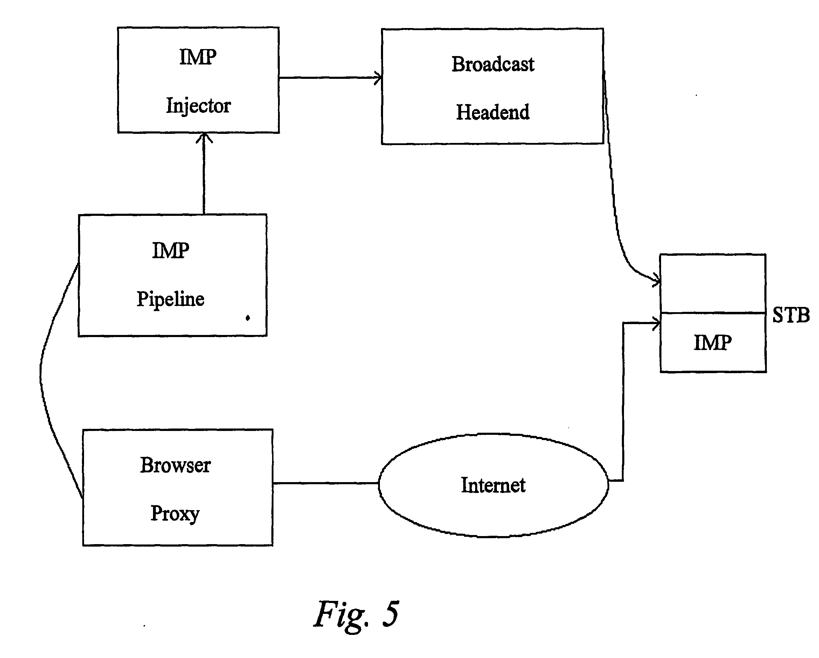

An embodiment of this aspect of the system will be explained further with reference to Fig. 5. A user sends a request for internet content from a set top box to a browser proxy. The browser proxy obtains the internet content which may be, for example, a web page and passes it to the IMP pipeline, which transmits the information to the Broadcast Headend via the IMP Injector.

Before transmitting the information to the user device, in this embodiment a Set Top Box, the broadcast headend translates the information from a device independent format (e.g. HTML) into a format which can more easily be transferred by the user device to a display for the user. For example, if the requested information contains bitmap (bmp), jpg or gif images, the images may be translated into a device specific format, in particular a format suitable for direct memory access (dma) copy to screen or for hardware accelerated display.

According to a preferable embodiment, the screen of the user device may be split between modes at least vertically Conversion of the data to a device-specific format is preferably based on the screen mode.

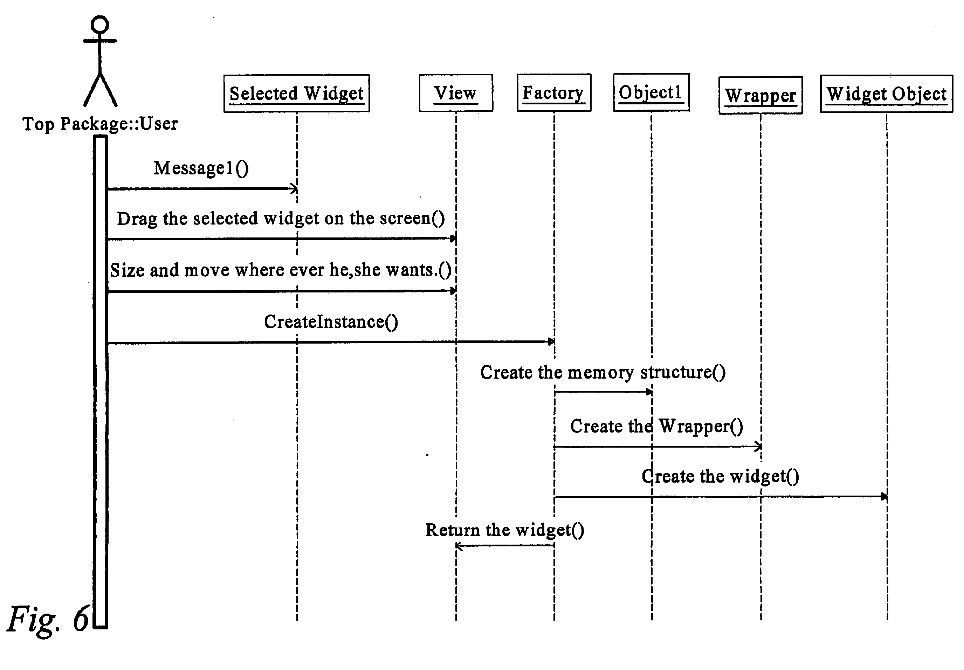

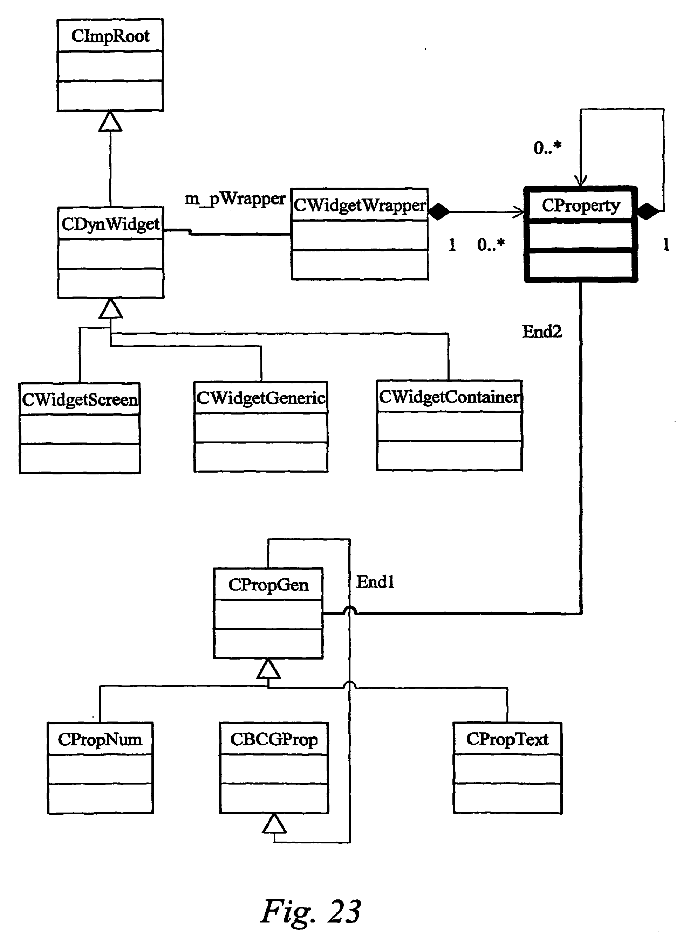

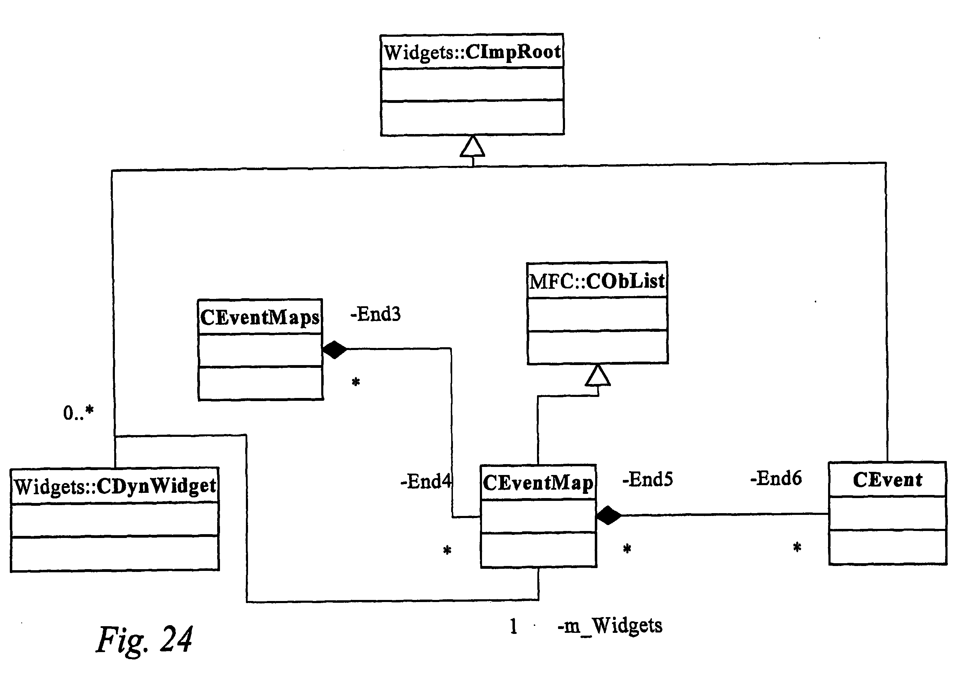

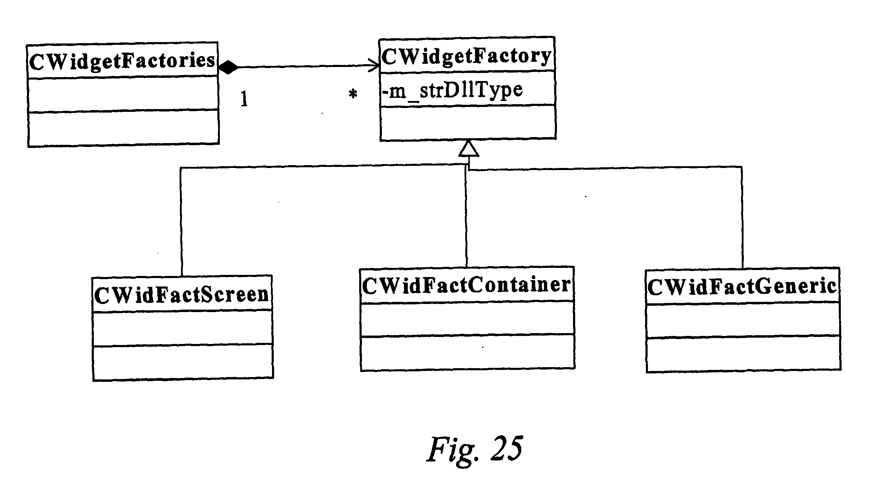

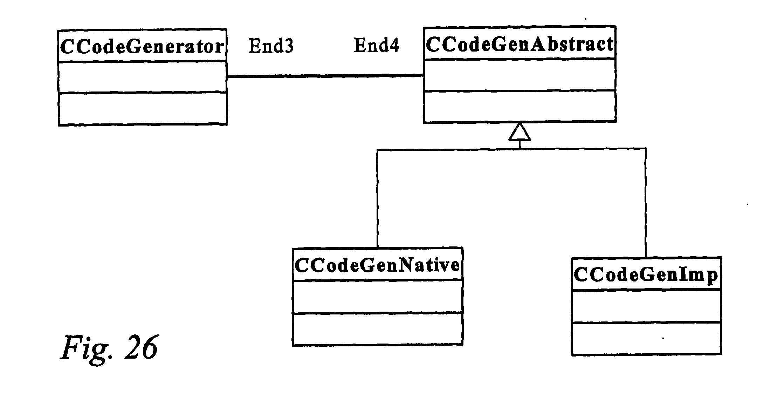

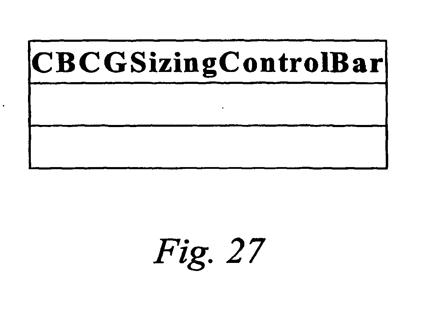

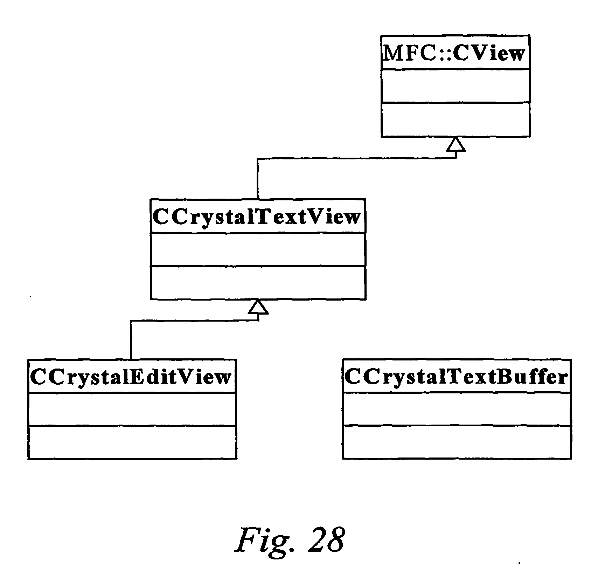

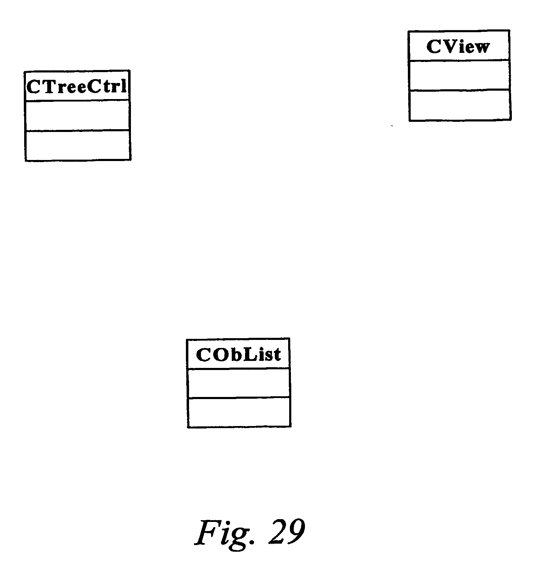

Referring to Fig. 5, the process of widget creation using the widget factory will be explained. A sample of header code for implementing key features is illustrated in Appendix 3.
A further aspect of the invention, which may be provided independently or in conjunction with the other aspects described herein allows the efficient creation of applications which can be run by the set top box or another user device. One embodiment of a system which may be used to create the application is now described with reference to Figs. 6 to 32

As explained above, widgets comprise assets specific for a target platform and code, and this allows efficient small footprint applications. Applications can be created efficiently using a "widget factory" using a number of widgets which may be tailored specifically for the user platform before being transmitted to the user device for display and execution, hence allowing efficient running and display of the application without requiring large amounts of processing power at the user device or complex programming to create the application.

Development of applications is facilitated by the widget factory as a number of the attributes of the widgets are automatically generated by the "widget factory". One embodiment of the process of widget creation in the widget factory is shown in Fig. 6 and is based on dragging user resources (e.g. images or text) onto the screen.

According to one embodiment, the functions of the Widget Factory include automatically generating self-contained components suitable for display on the user device from widget target (i.e.STB) source code. A generic term for the software which runs on the user device to implement the application may be the Visual IMP. The plug-in self-contained components may be called widget-DLLs (Dynamic Link Libraries).

The creator of the application in the widget factory may select an object (e.g. an image or text box) for the widget and moves it onto the screen using a drag and drop interface. The user can drag the object to any position and can resize the widget as necessary, hence setting size and position attributes for the widget.

In this embodiment, a highly advantageous feature is that the widgets are encoded in XML; this facilitates storage of code and assets and selection of target platforms. A preferred feature, described below, is the dynamic generation of DTDs (Document Type Descriptions) - this greatly assists the process of widget creation.

The widget factory user interface is preferably implemented as a WYSIWYG (What You See Is What You Get) interface; this is achieved by storing details of the target platform and drawing the display dependent on the target platform for which the application is being created.

An advantageous feature is that widgets may be written in a code language, which may be selected from a plurality of available languages by the factory user. Preferably, at least two languages are available. Examples of code languages that may be used include C (and derivatives such as C++), Java or the LUA scripting language or another chosen language. It is particularly preferred to include LUA and C as these languages can be efficiently compiled for a target platform. In the case of languages such as C or LUA, the application is preferably compiled to code for the specific target processor before being transmitted to the the user device. In other cases, for example Java script or more preferably an optimised language the application may be compiled to processor-independent byte code. Preferably at least one language that is fully compiled to code executable by a target processor and at least one language that is compiled to processor-independent byte code, for which the target platform has an interpreter. The byte code may include code for the motion engine described above.

As shown in Fig. 6, when the widget has been selected and moved onto the screen by the user, the widget factory creates a memory structure, a wrapper and the widget itself, before returning the widget to the screen view. The user is then able to see the widget as it will appear in the application to the end user.

The widget factory preferably provides at least some of the following features and benefits:
- the ability to add components (widgets) to the Visual IMP as plug-ins without having to re-compile or re-install the Visual IMP
- the ability to generate widget instance byte code (for non-native IMP applications) as well as C source code (for native applications) automatically from Visual IMP just by adding the plug-in corresponding to the new widget (widget-DLL). This may be performed through a DTD (Document Type Description) that can be generated at runtime by the widget-DLL. The Widget Factory may be used to generate the code in the widget-DLL that enables it to be self-contained and create its byte code generation DTD at run-time.
- the ability to simulate graphic representation of widget instances using an IMP port embedded in Visual IMP as well as simulating the widget instances data structure. This may be made possible through a generic interface generated by the Widget Factory for each widget-DLL, this may be enabled by the fact that the original target widget source code is encapsulated in the widget-DLL.

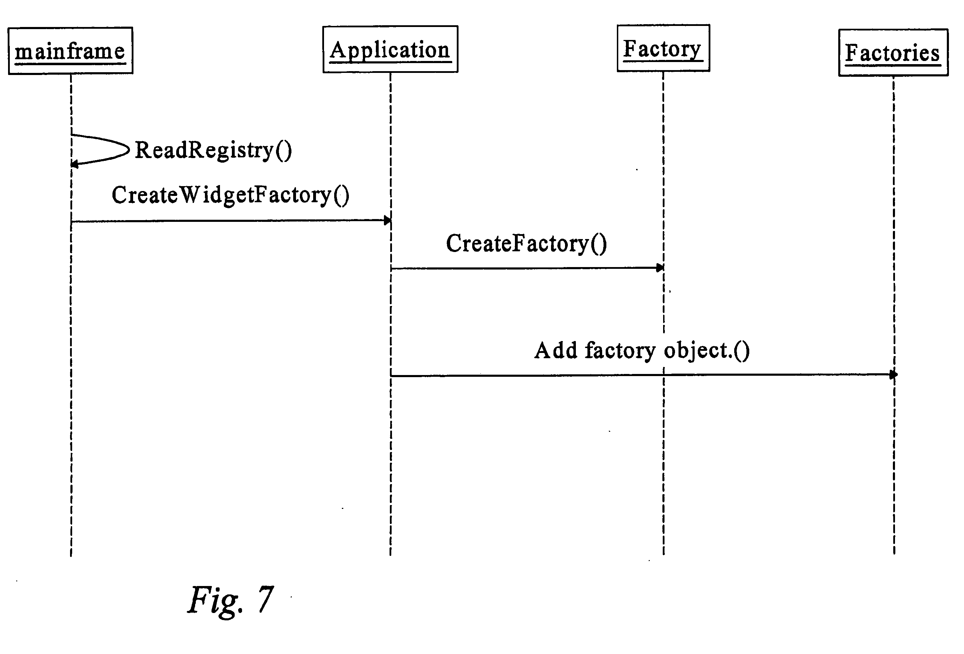

The widget may be loaded into the application on the end user terminal as shown in Fig. 7.

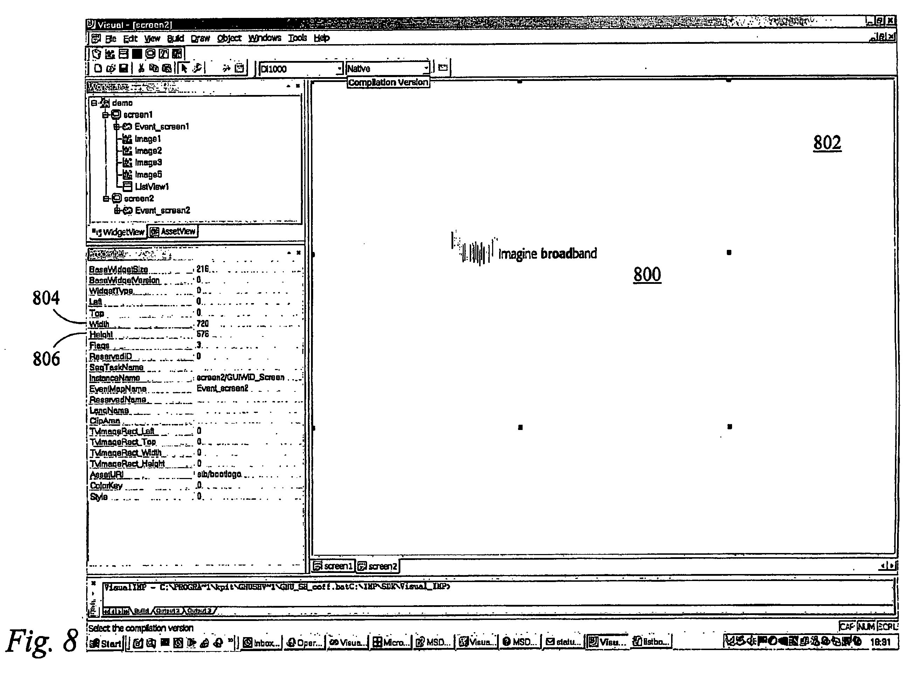

Figs. 8 to 19 show screen shots of the process of creating an application using the widget factory.

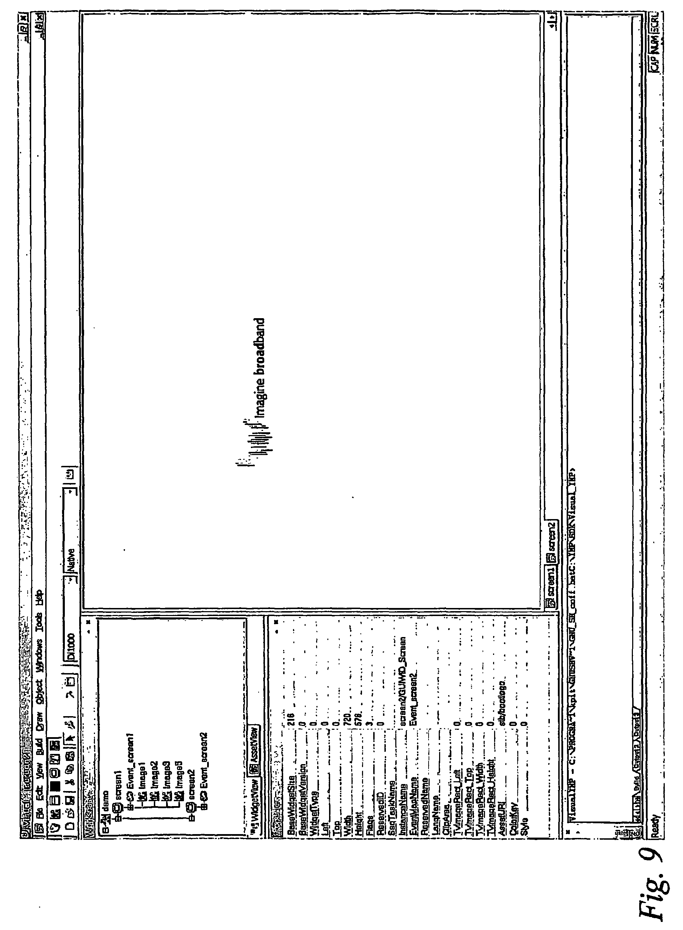

Fig. 8 shows a screen shot of an image being added to the application. The main screen area 802 shows the application as it will appear to the end user. The width and height of the image may be adjusted as indicated at 804 and 806. Fig. 9 shows a screen shot after the image has been deselected and added to the application.

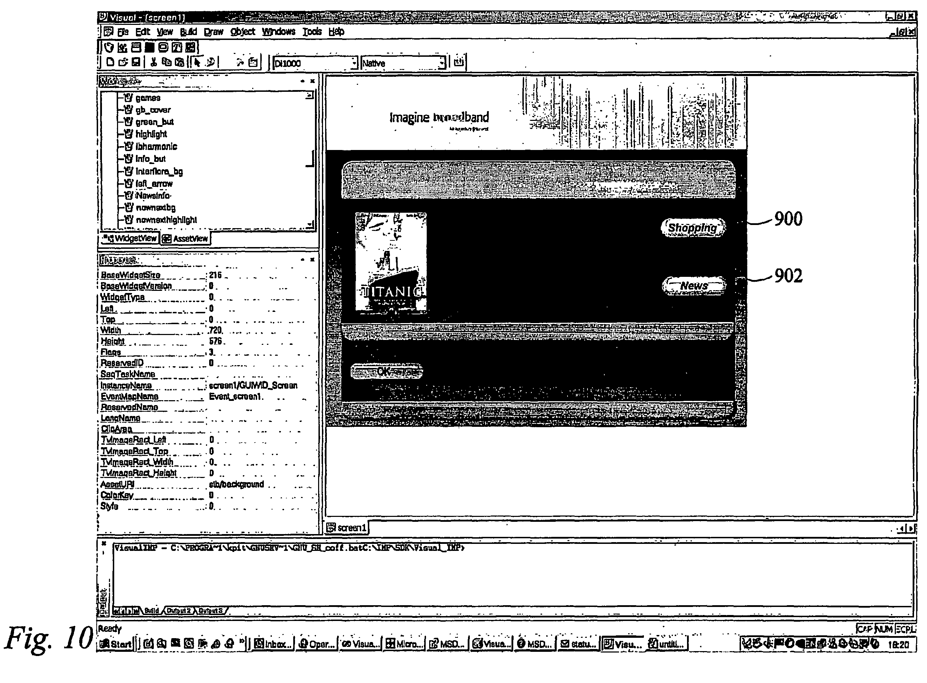

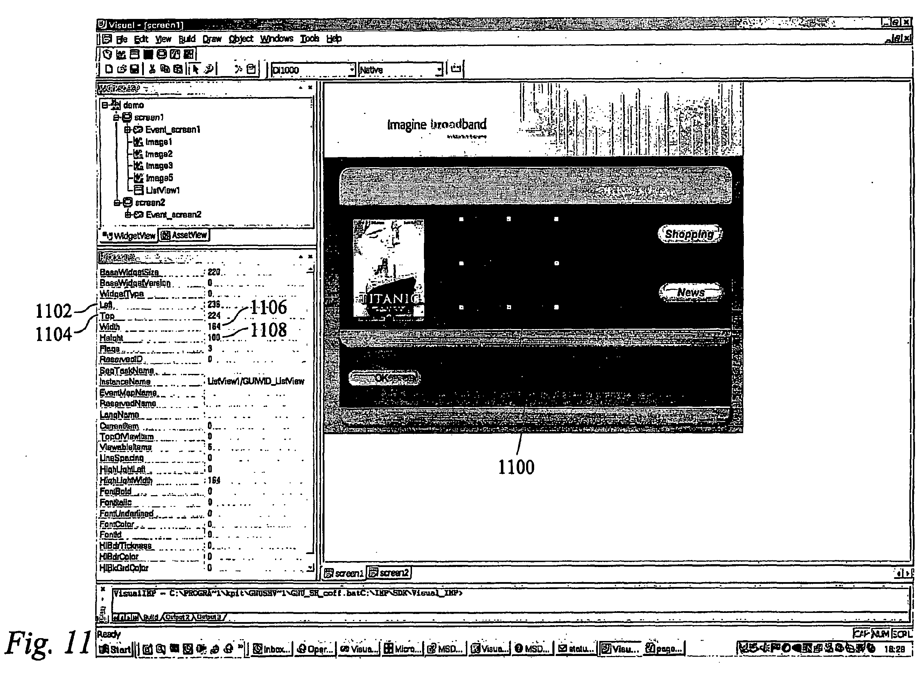

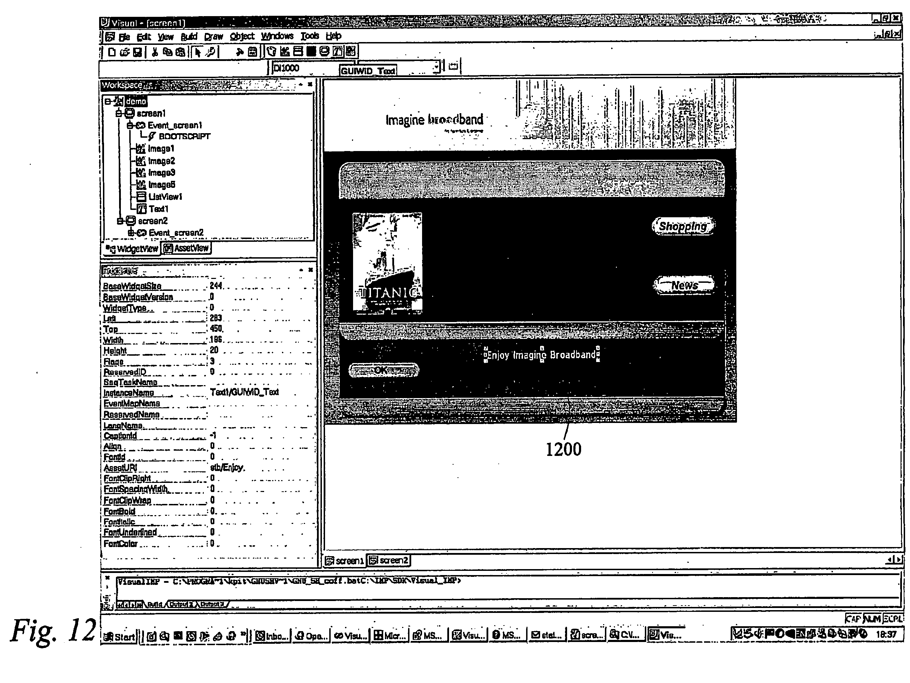

Fig. 10 shows a further screen shot of an application in development. Buttons 900, 902 may be added to allow a user to access other parts of the application or other applications. Fig. 11 shows the addition of a list object 1100 to the application. Parameters such as the position of the object 1102, 1104 may be set as well as the width 1106 and height 1108 of the object. Fig. 12 shows a screen shot of the same application with a line of text 1200 added. Again, the position and size of the object may be set and is shown on the control screen.

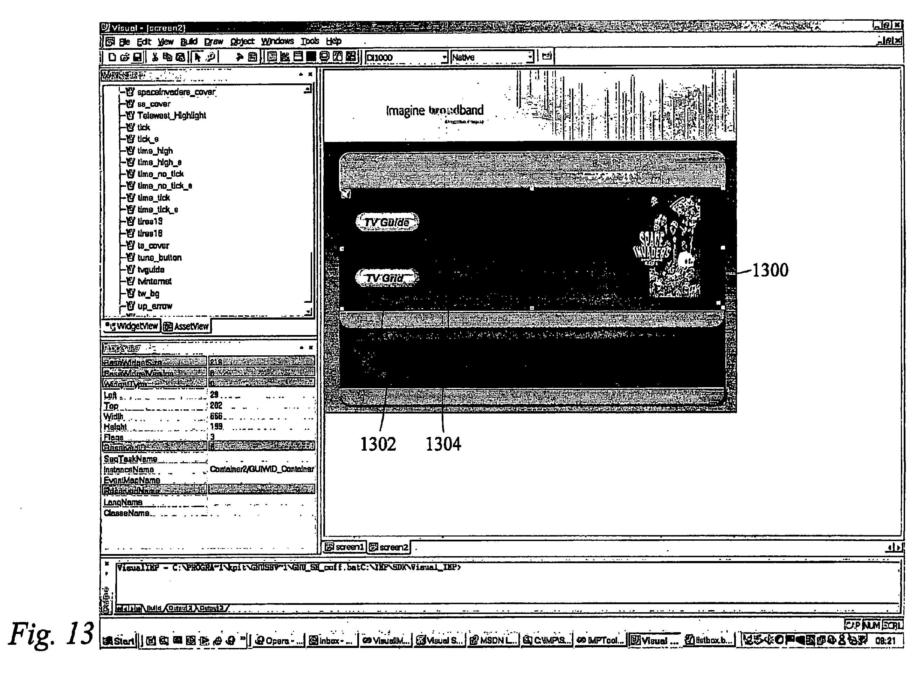

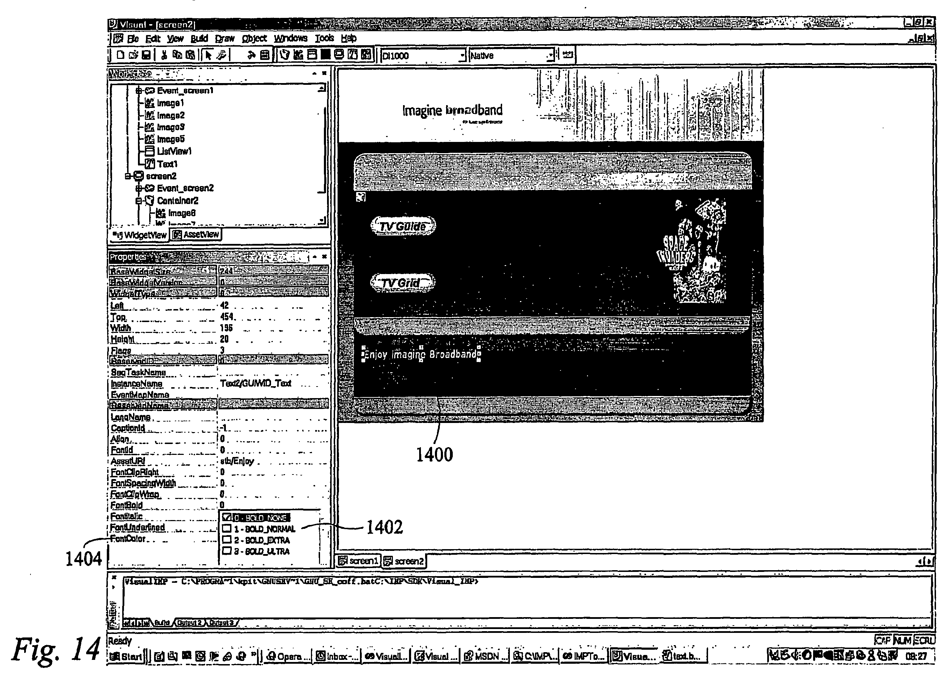

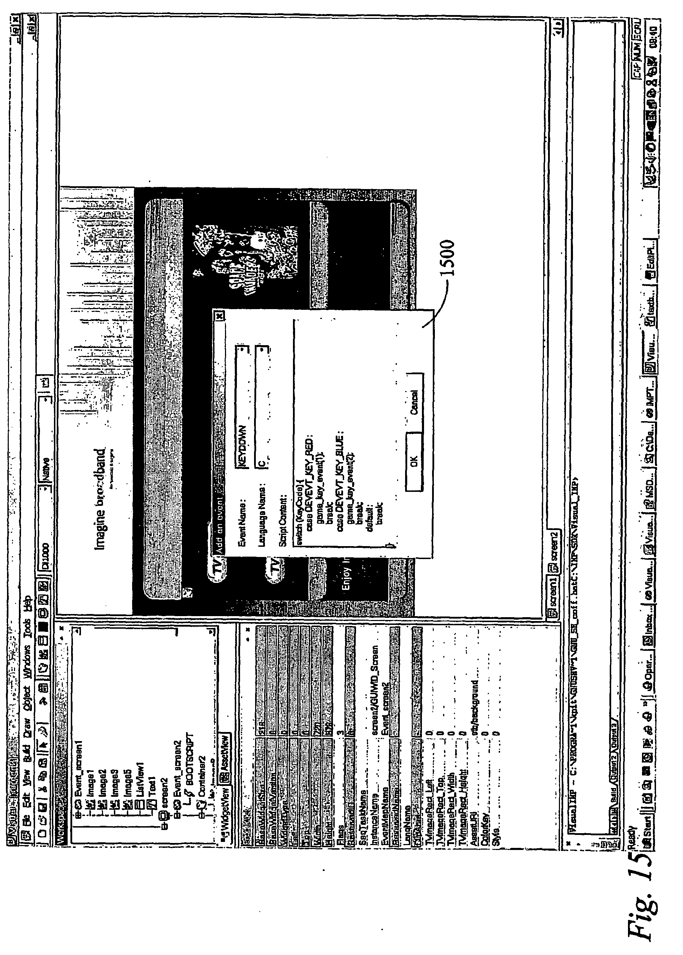

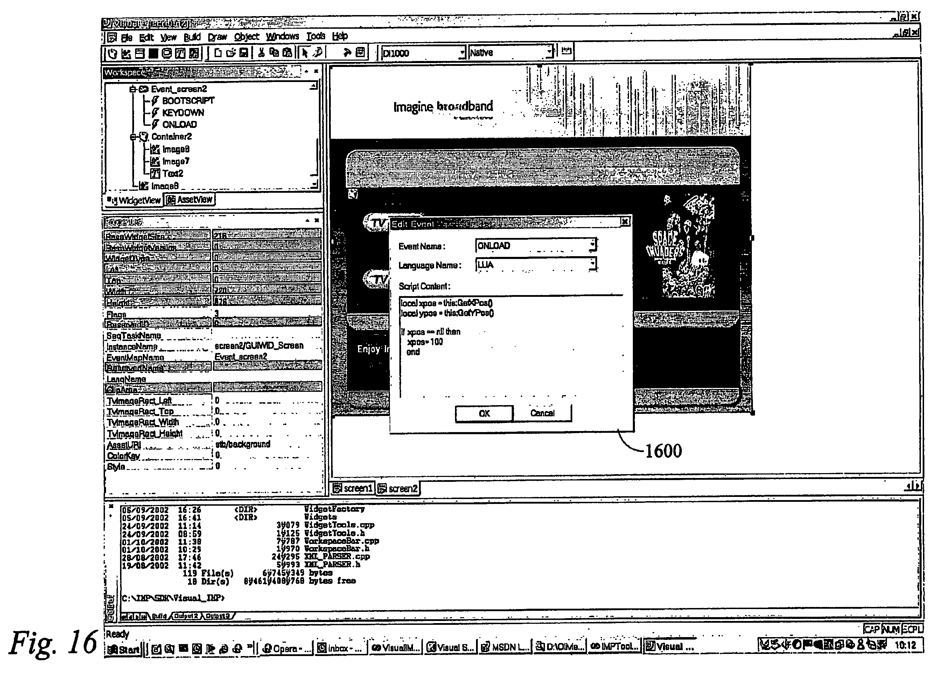

Fig. 13 shows a screen shot in the process of creating a second application. Buttons 1302, 1304 and an image 1300 are placed into the application and appear on the screen as they will appear to the end user. Fig. 14 shows the addition of text 1400 to the application. Properties of the text, such as the colour 1404 and whether the text is bold 1402, underlined or italic may be set by the creator of the application and change the appearance of the text both to the end user and on the creator's screen. Fig. 15 shows the addition of an event 1500 to the application. In this example, the event is scripted in C. Fig.16 shows the editing of an event 1600 in the language LUA.

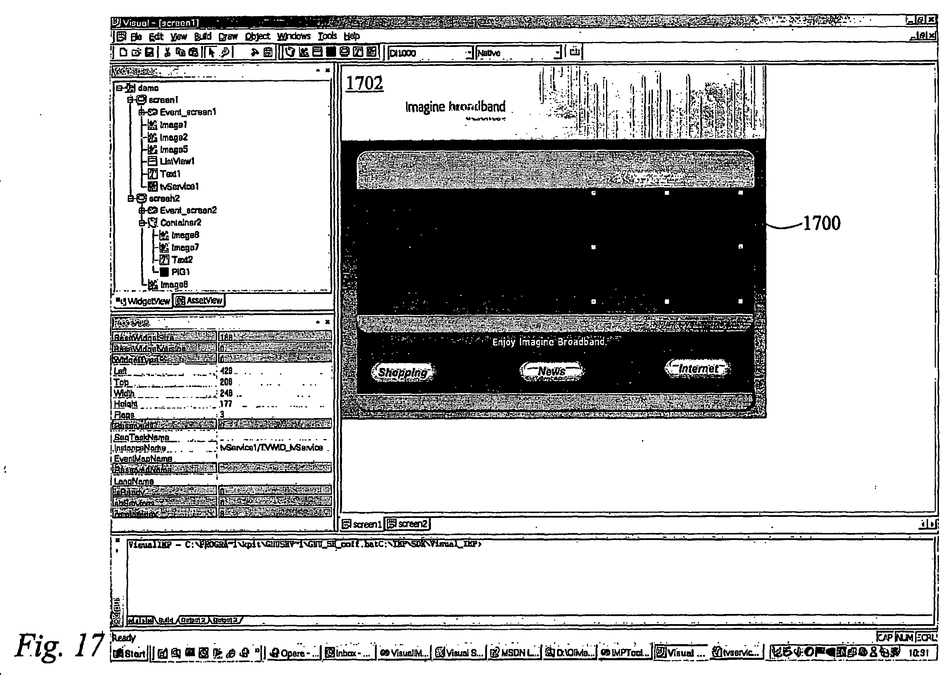

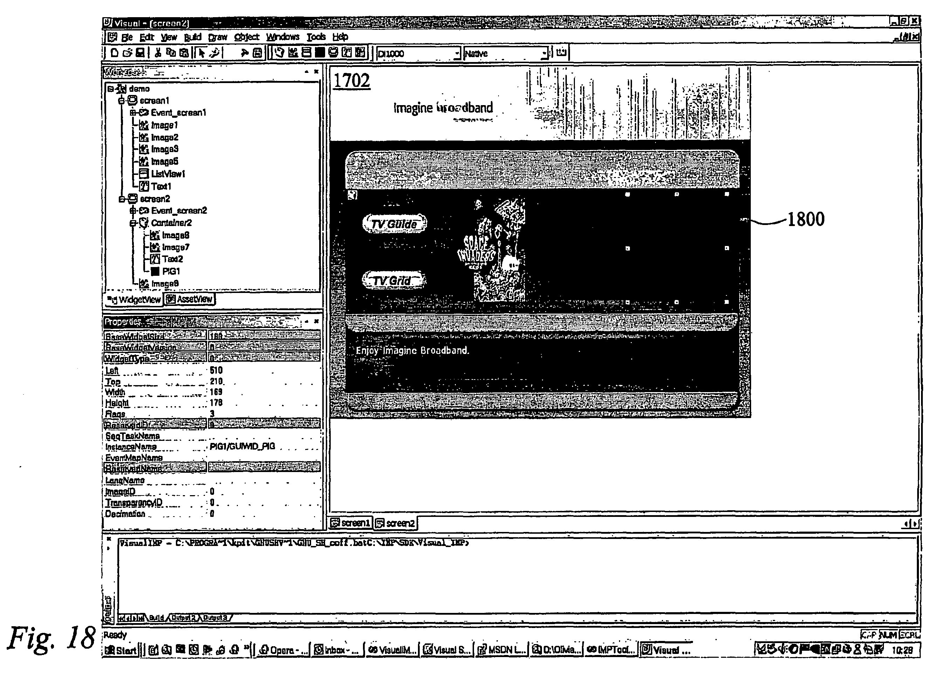

Figs. 17 and 18 show further examples of the addition of objects 1700,1800 into the application by adding them to the GUI 1702.

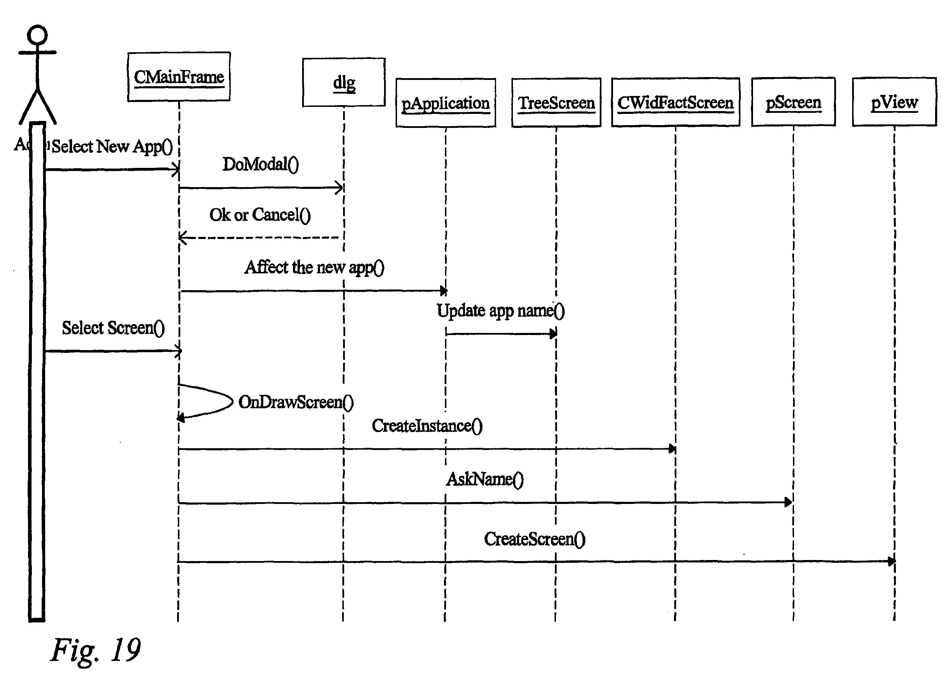

Fig 19 shows the process of creating an application according to one embodiment of the present invention.

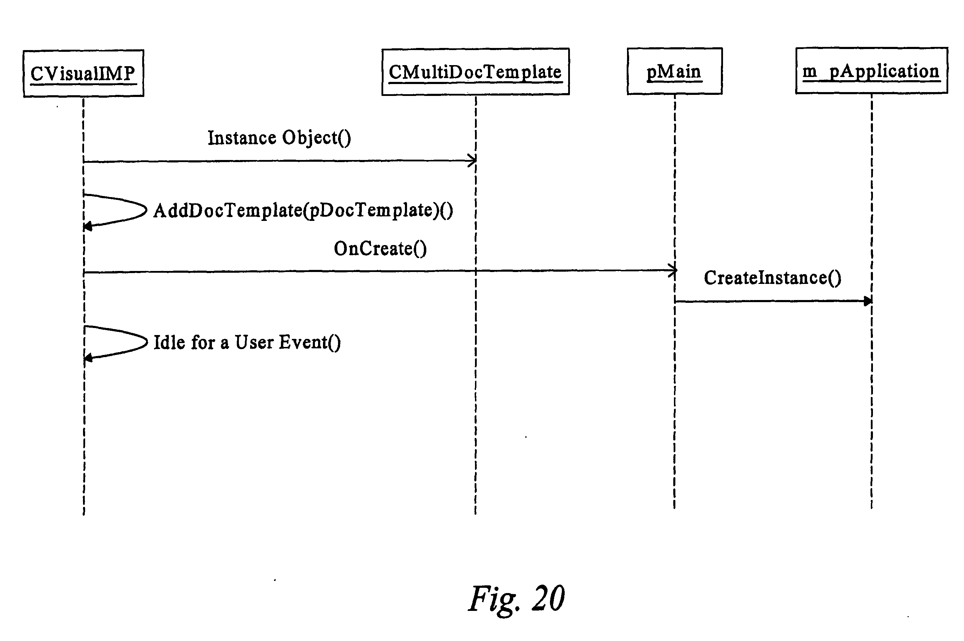

Fig. 20 shows the process of starting an application according to one embodiment.

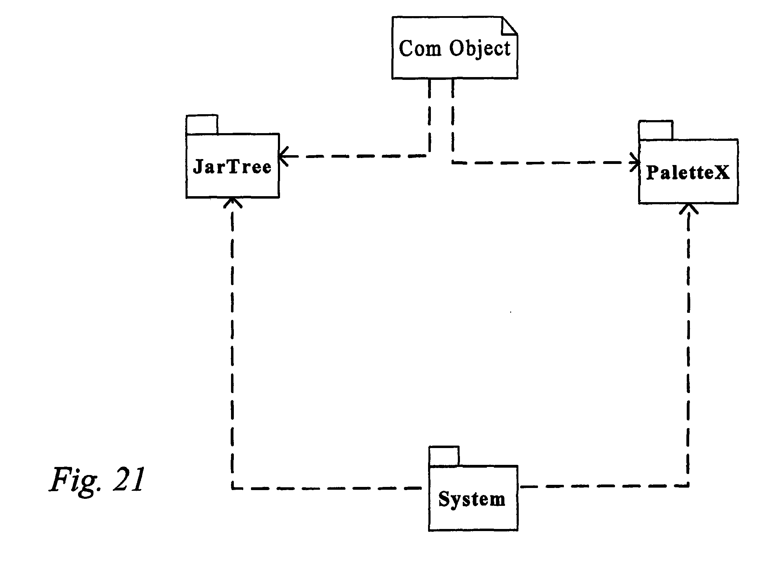

The integration of new widgets into the end user platform, which is known as the Visual IMP in this embodiment, will now be described in more detail. Fig. 21 is a schematic diagram of the components of the Visual IMP.

In general, macros may be used to create the Document Type Description (DTD). The code using the macros may be generated automatically and the skeleton of a Widget may also be automatically generated.

The following rules may be used to create a DLL of widgets in such a way that the main core (body) of the widget may be used both in embedded systems in runtime and in design time on the Visual IMP. This means that the core of the widget does not have to be re-written for integration in the Visual IMP. By using widgets as a DLL, the Visual IMP can get all the information it needs from the widget itself during the design process. This is an important feature that can be independently provided.

Functions of the Visual Imp via widgets implemented as DLLs preferably include:
- > Dumping the widget as C structure
- > Giving the list of attributes of a widget as a dynamic table that the Visual IMP may use to show the properties of the widget
- > Exporting the DTD of the widget as a string in XML format
- > Allowing-painting of the widget.

A sample of source code which allow a structure to be exported in C is given in Appendix 4. Source code which allows the export of a structure in DTD is given in Appendix 5 and source code which allows the export of a structure as a Table is given in Appendix 6.

These functions may be implemented by using C Macros. One example of the code which may be used to implement the functions is shown in Appendix 7.

In one embodiment, the system generates XML code. Both the widgets and the overall application may be written in XML, which may then be translated by the byte code generator (IMP Translator) into byte codes, which may be memory dumps of instances of the widget. The type of user device or target machine (for example a STB or mobile phone) for which the byte code is generated may be entered as a parameter into the byte code generator.

A GUI tool may be used to define widgets. This may allow attributes of the widgets to be defined and also the writing of the body of the widget. C files may then be generated, which may use MACROS to define the structure of the widget. This may allow widgets to be created in a standard and plugable way, i.e. to generate directly the DLL of the widget by compiling it.

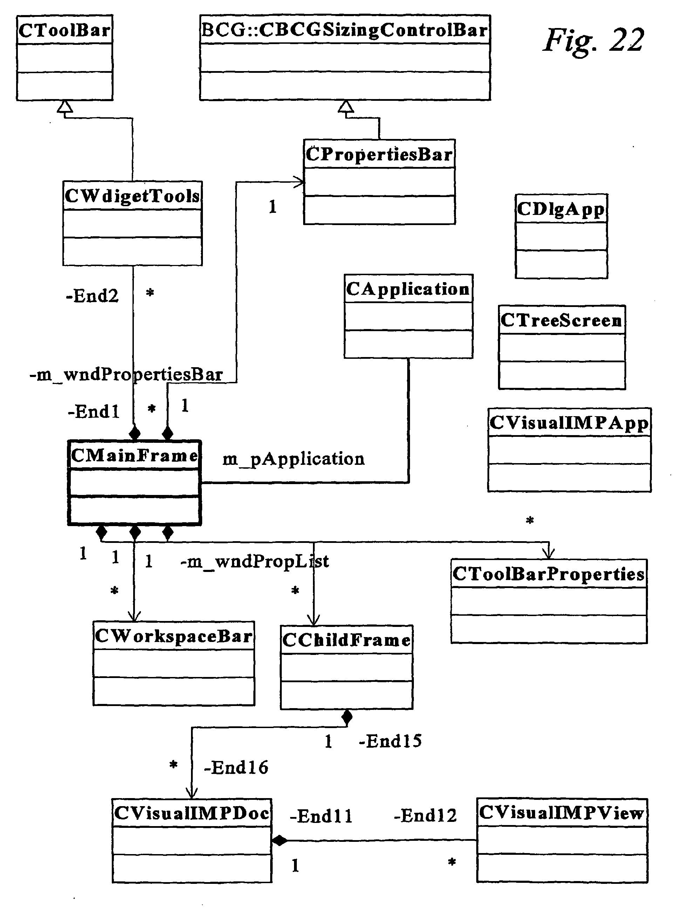

Figs. 22 to 29 are exemplary schematic diagrams of the structure associated with the widget factory. The structures illustrated are not intended to be limiting but may assist in the planning of the layout of a suitable system associated with the widget factory and events or widgets which may be used in creating applications.

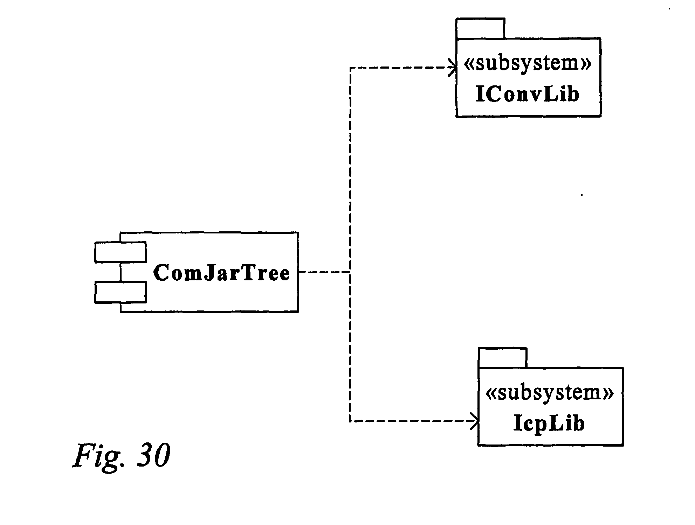

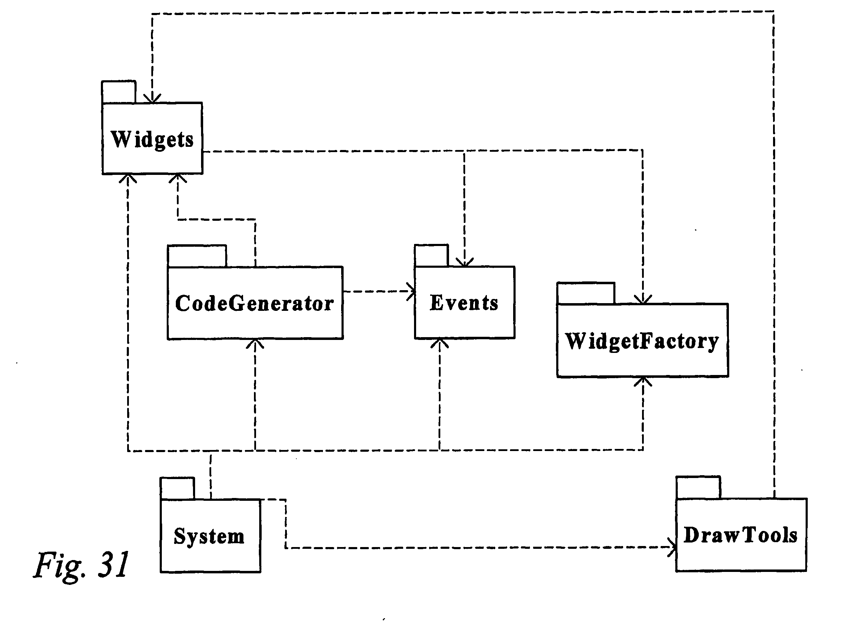

Figs. 30 and 31 are exemplary schematic diagrams of components of the system described herein. The components of the system shown and their structure are not intended to be limiting but may assist in the creation of a system as described herein.

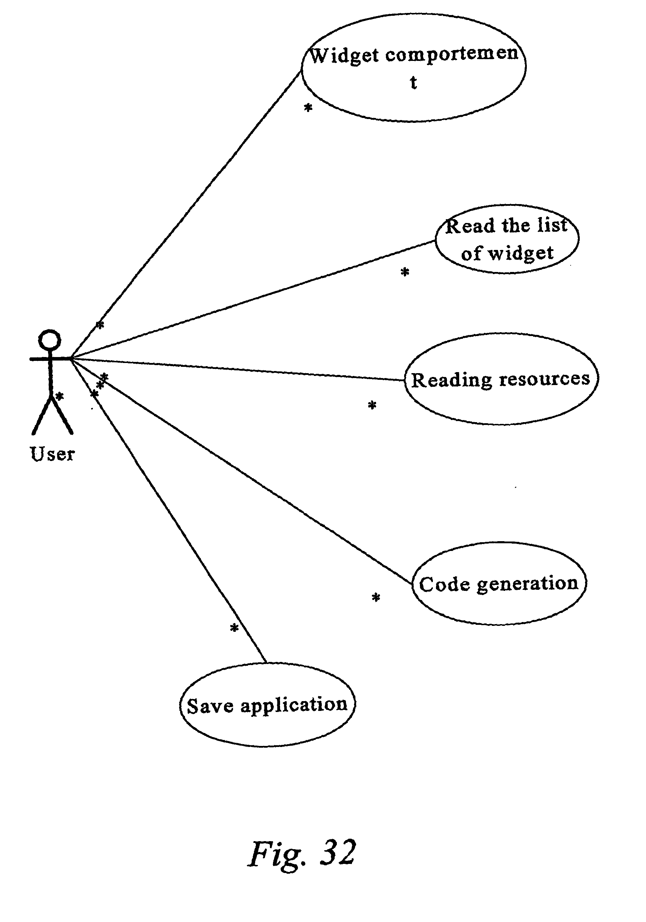

Fig. 32 shows the functions which may be offered to the user by one embodiment of the system. Functions include reading the list of widgets, reading the resources available to the system, generating code and saving the application that has been created.

Some of the features and advantages of the Interactive User Interface Development Framework STB development environment, each of which may be provided independently, are outlined below:-
o Optimisation of STB CPU/Memory resources:
   Applications are compiled into extremely low footprint and optimised machine code.
o Dynamic Linking of Application Objects:
   Objects are linked in the application itself and can be downloaded on demand.
o Optimisation of STB Graphical Capabilities:
   Graphical resources (images, fonts, shapes) are compiled to a format optimised for the hardware platformo Portability to Multiple Devices via high-level APIs: Hardware resources are abstracted using hardware independent libraries.
o Rapid Application Development:
   User Interfaces can be developed using a drag and drop GUI tool. Improved reuse of application code facilitates faster development times, with lower development costs and increased robustness.
o Memory Size/Cpu Speed Scalability:
   - Fully scalable solution from smallest embedded system device in very small rom/ram space to full blown Windows Based Computer.
o Network Interoperability:
   - Seamlessly integrates with existing web based technologies such as a Web Browser and other TCP/IP applications to extend their power and facilitate advancements in their capabilities
o First of Kind Skinnable Look & Feel
   - Non technical people can re-skin the STB Look and Feel using a simple tool. These 'looks & feel' packs can be stored on the Internet and retrieved individually for customer profiles. Improving brand loyalty (less chum) and permitting customers to swap their favourite skins.

Each feature disclosed herein may be provided independently of other features unless otherwise stated. It should be carefully noted that the invention is described herein in the context of a specific application to ease explanation and to avoid excessive repetition but is in no way intended to be limited to the specific detail disclosed. It will readily be appreciated that the architecture and tools disclosed herein have far wider application and thus, unless explicitly stated otherwise or required by the context, all description and claims are to be construed as applicable generally to other contexts. The disclosure of specific means for performing a task, in this application, is in all cases exemplary unless otherwise stated and any means disclosed herein may be replaced by any suitable alternative process. The following appendices contains extracts from example source code which are intended to assist in explaining certain features but are not intended to limit the scope of the invention in any way. Other than the right to facsimile reproduction of the published patent application, all copyright is reserved. Appendix 1 contains a header file useful for explaining the operation of the complex rotation command provided by the motion engine. Appendix 2 gives some example code, automatically generated, which moves various logos about on a screen, illustrating the compactness of the animation code which may be achieved with the invention. The subsequent appendices give examples of code for use in the widget factory.

Appendix 1

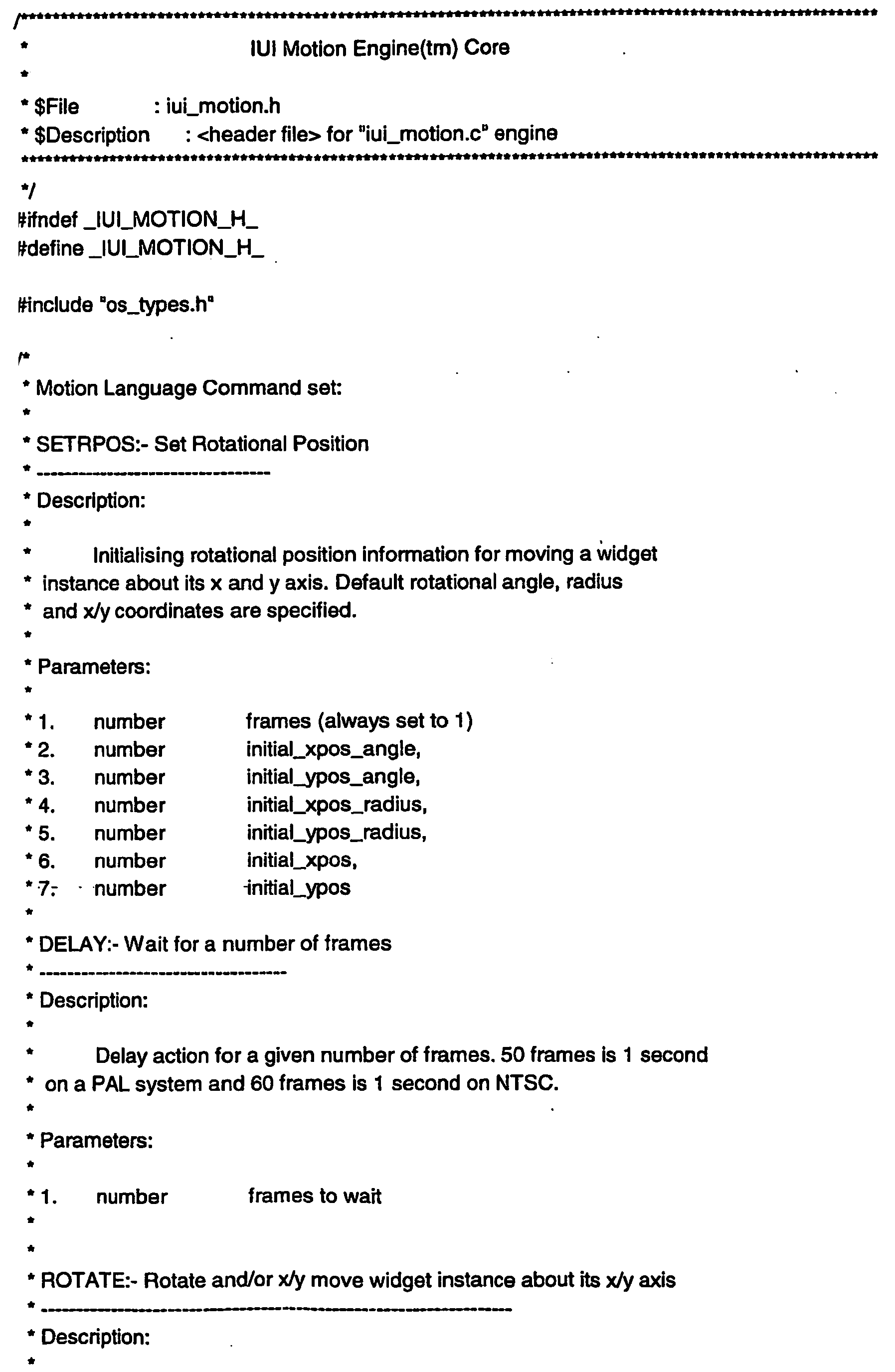

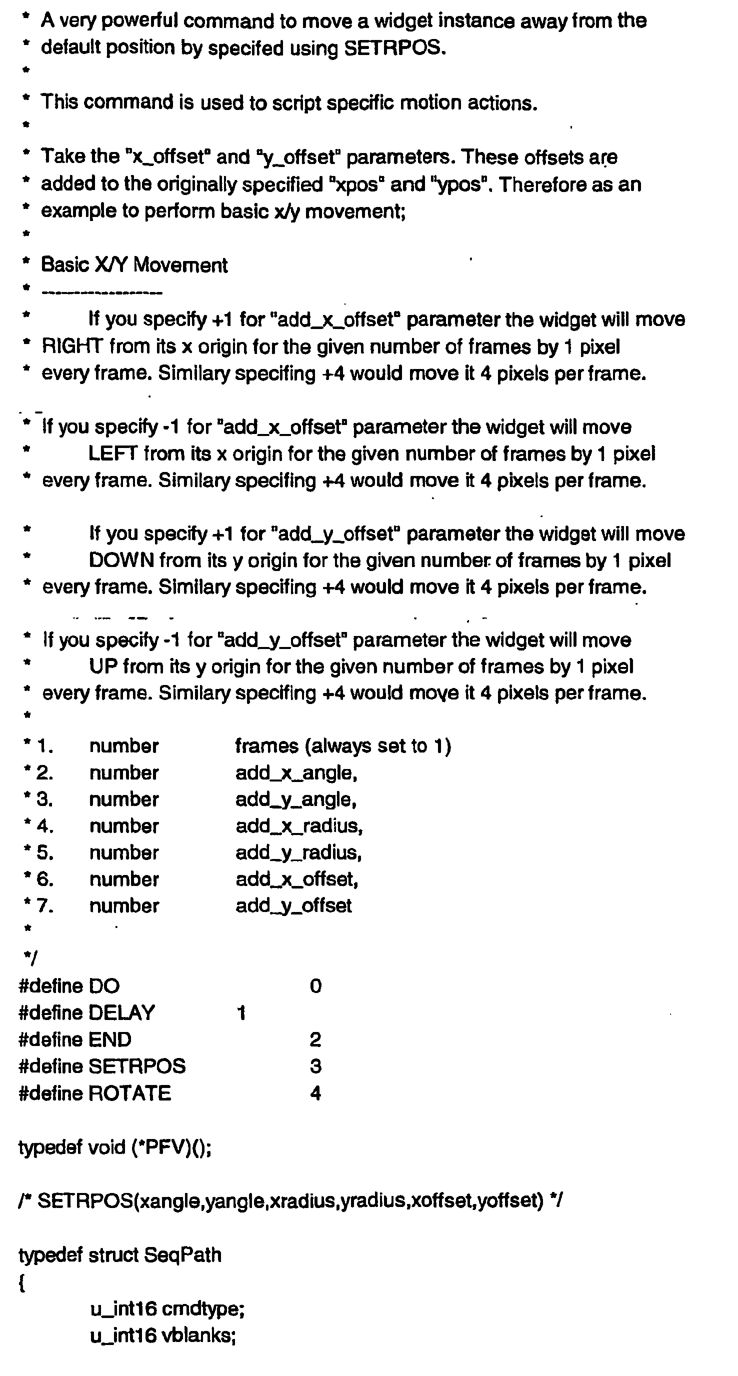

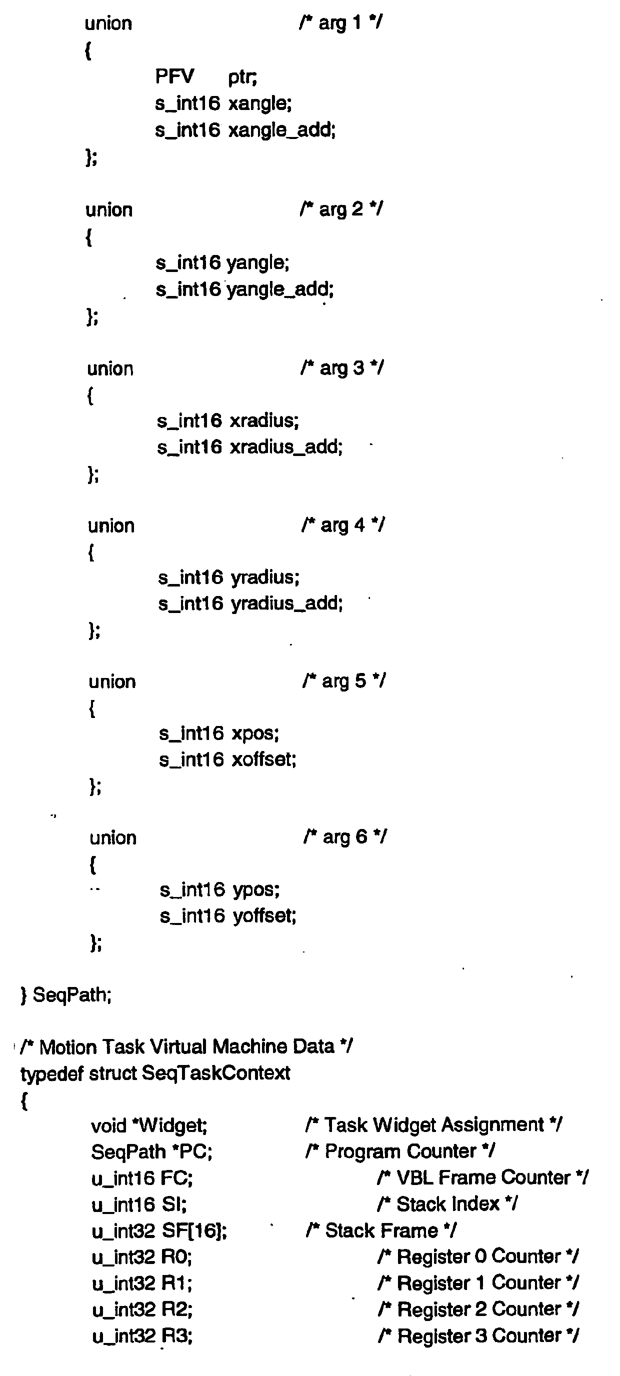

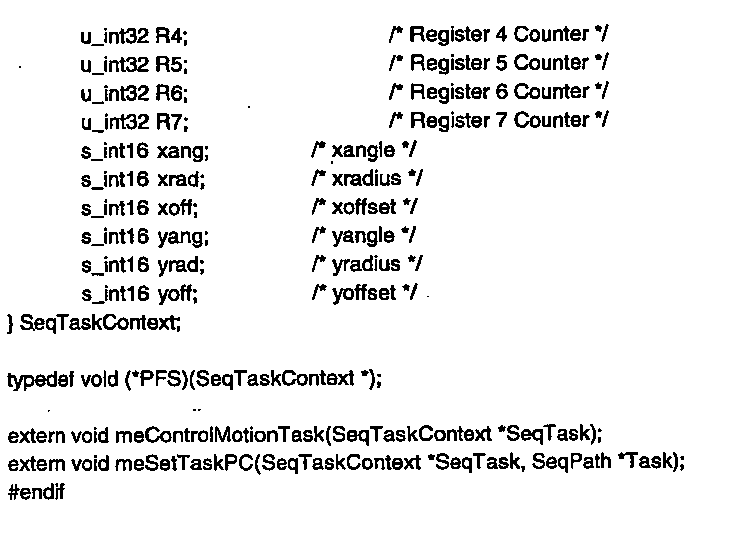

Appendix 2

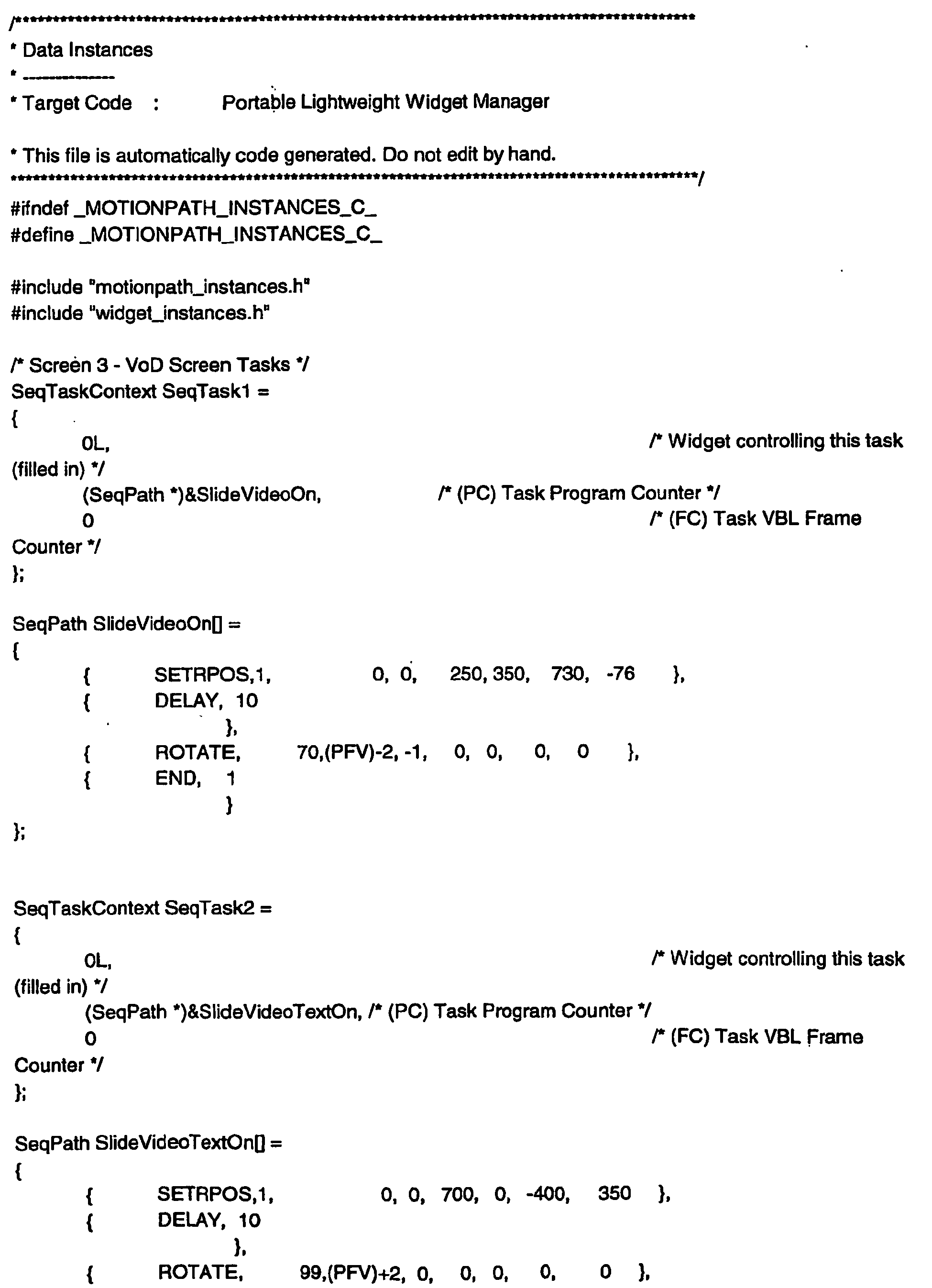

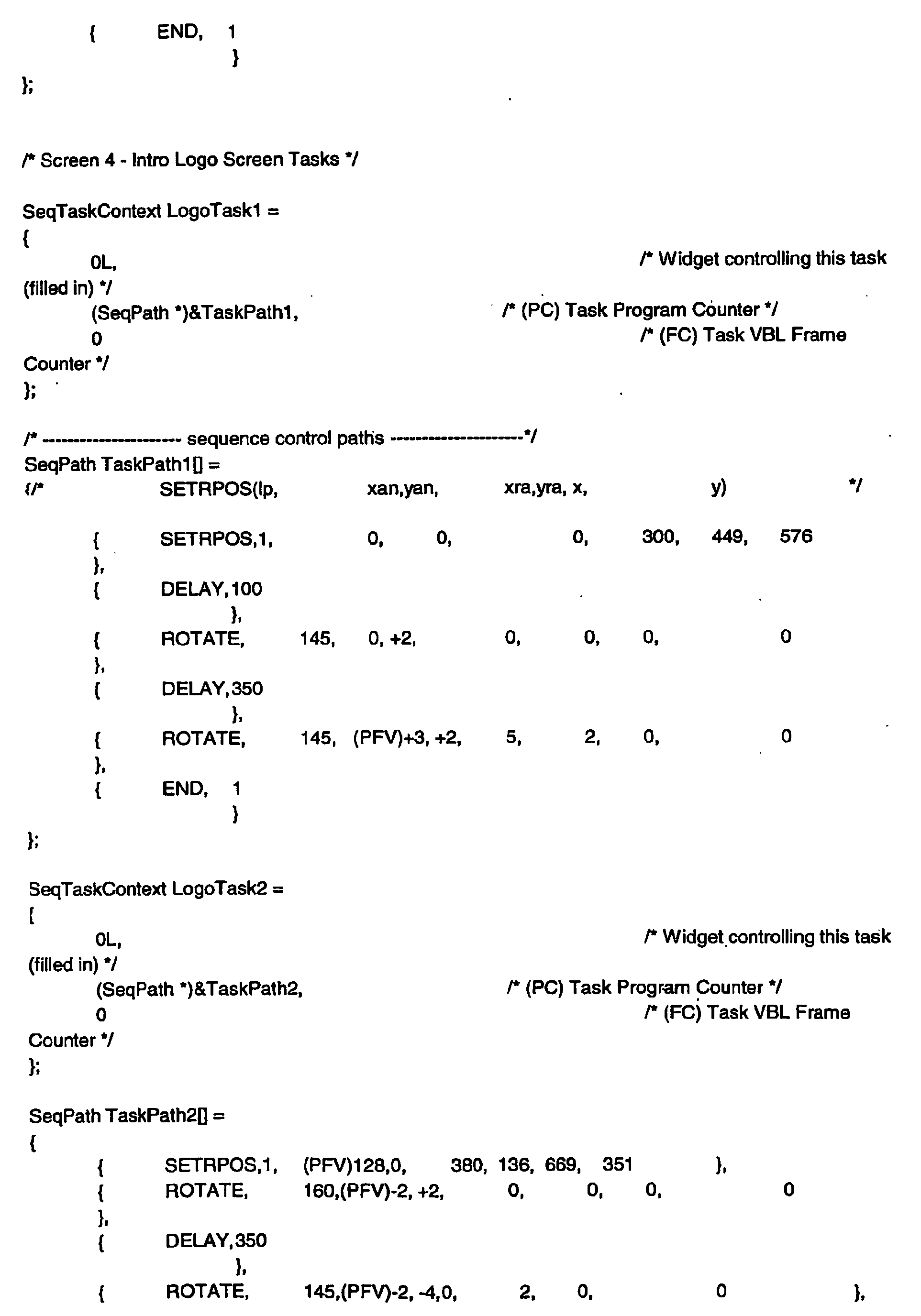

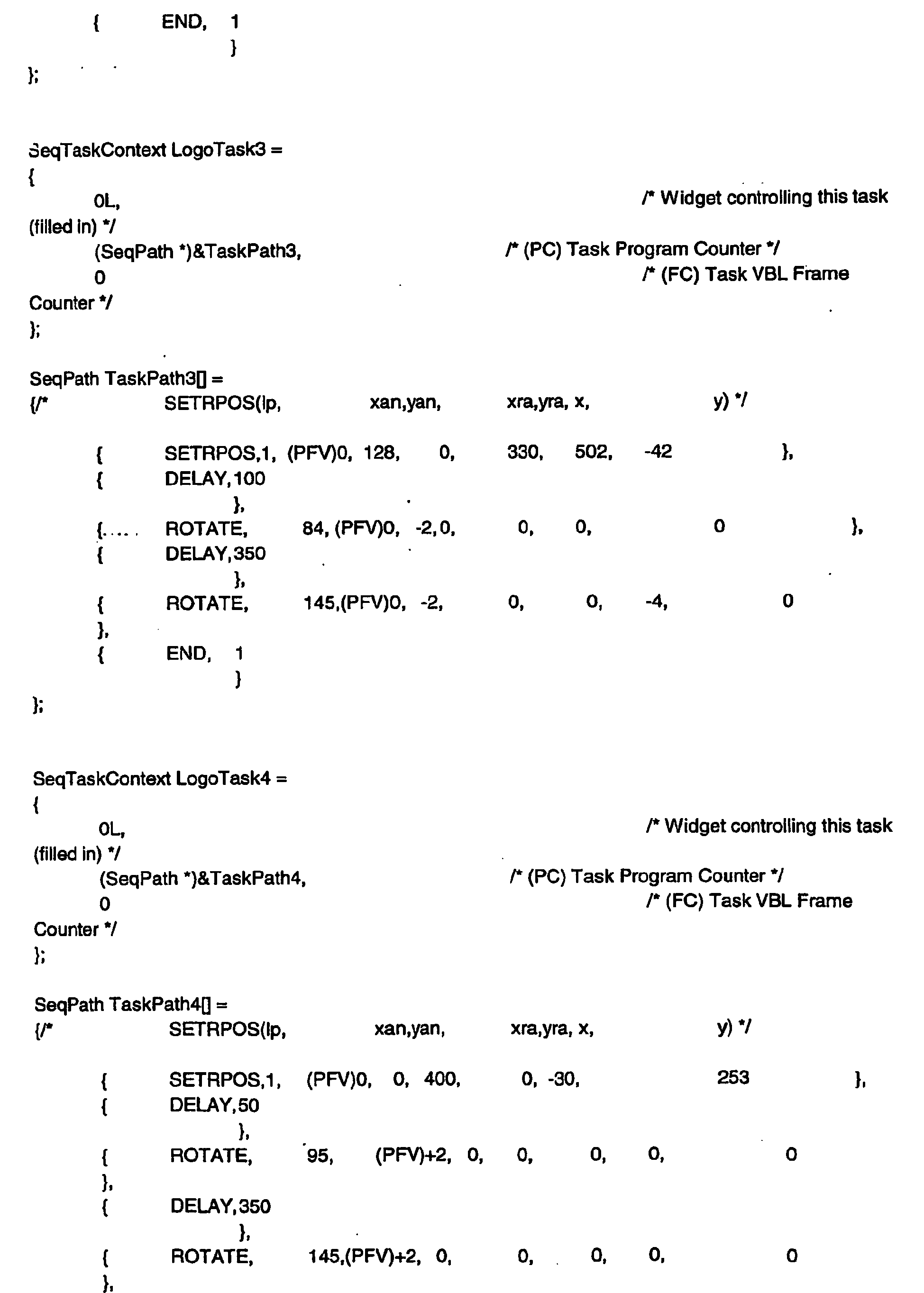

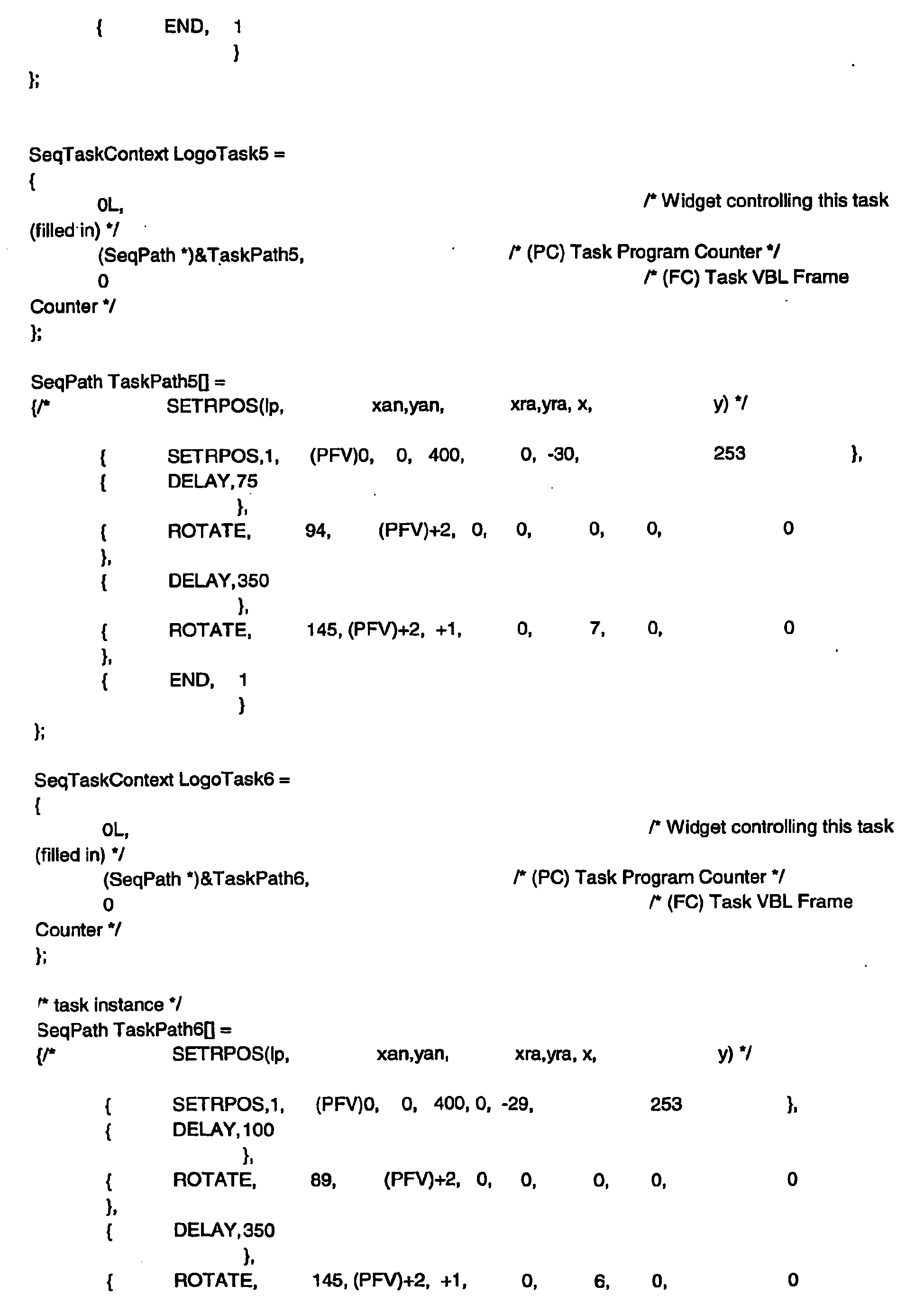

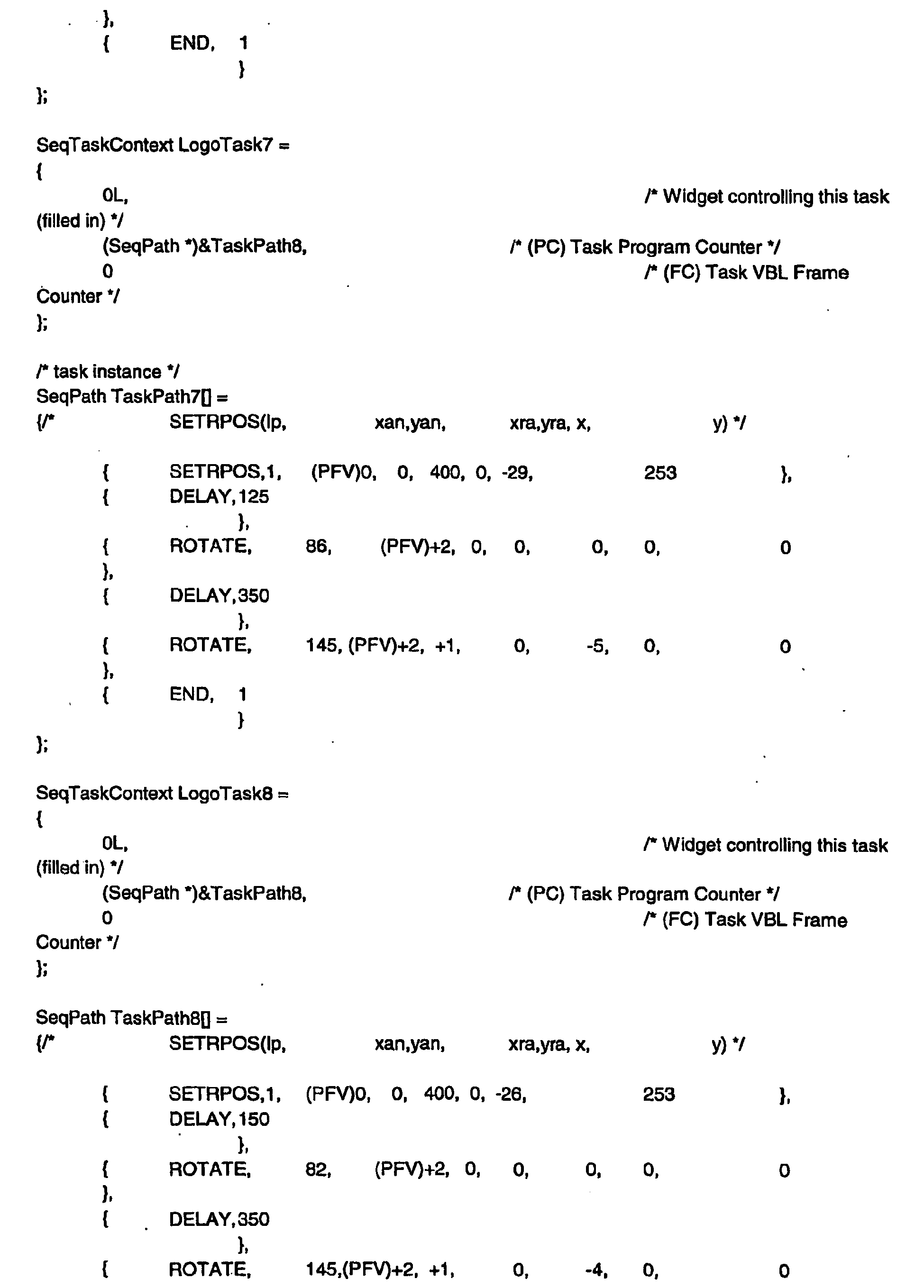

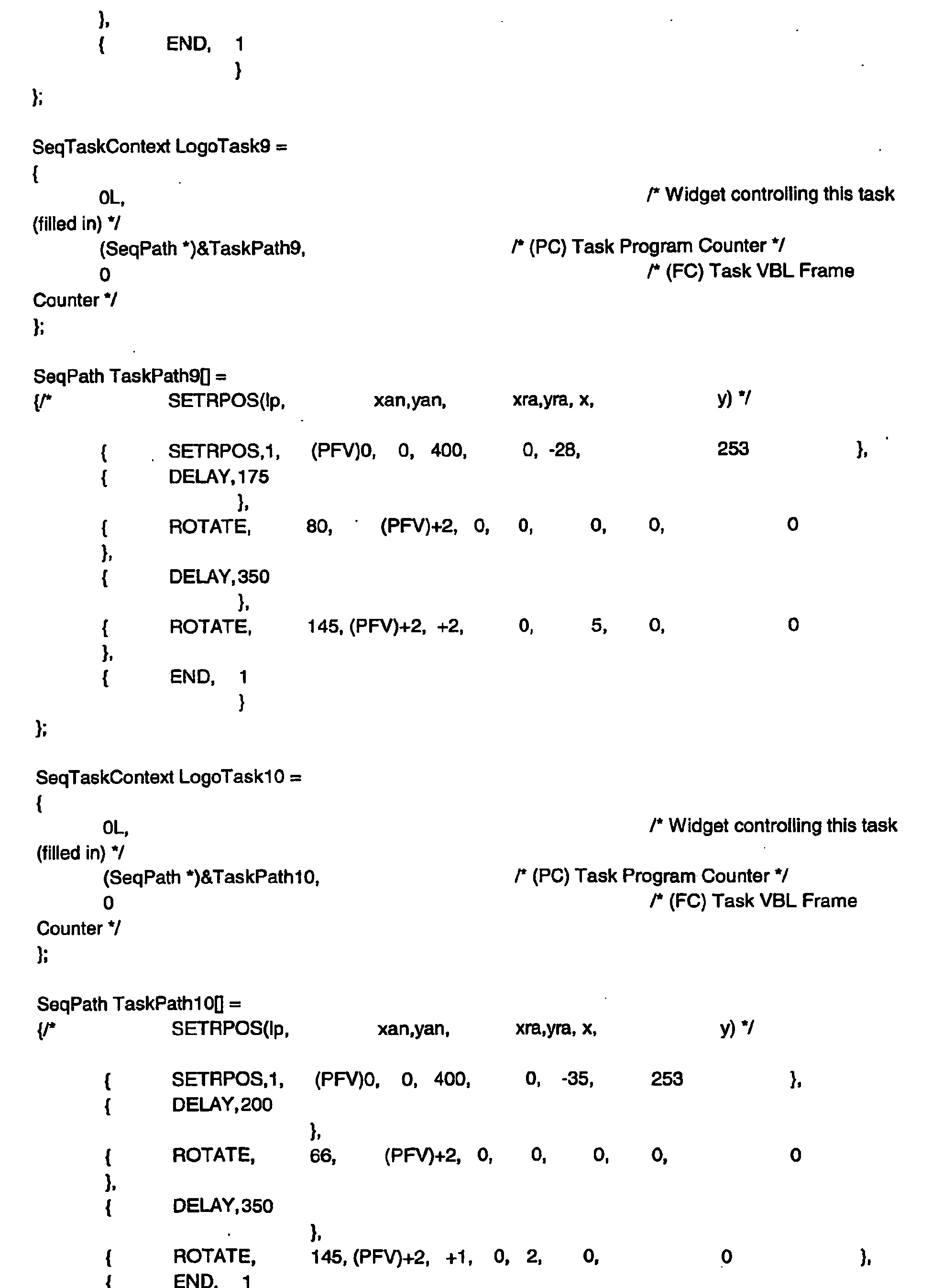

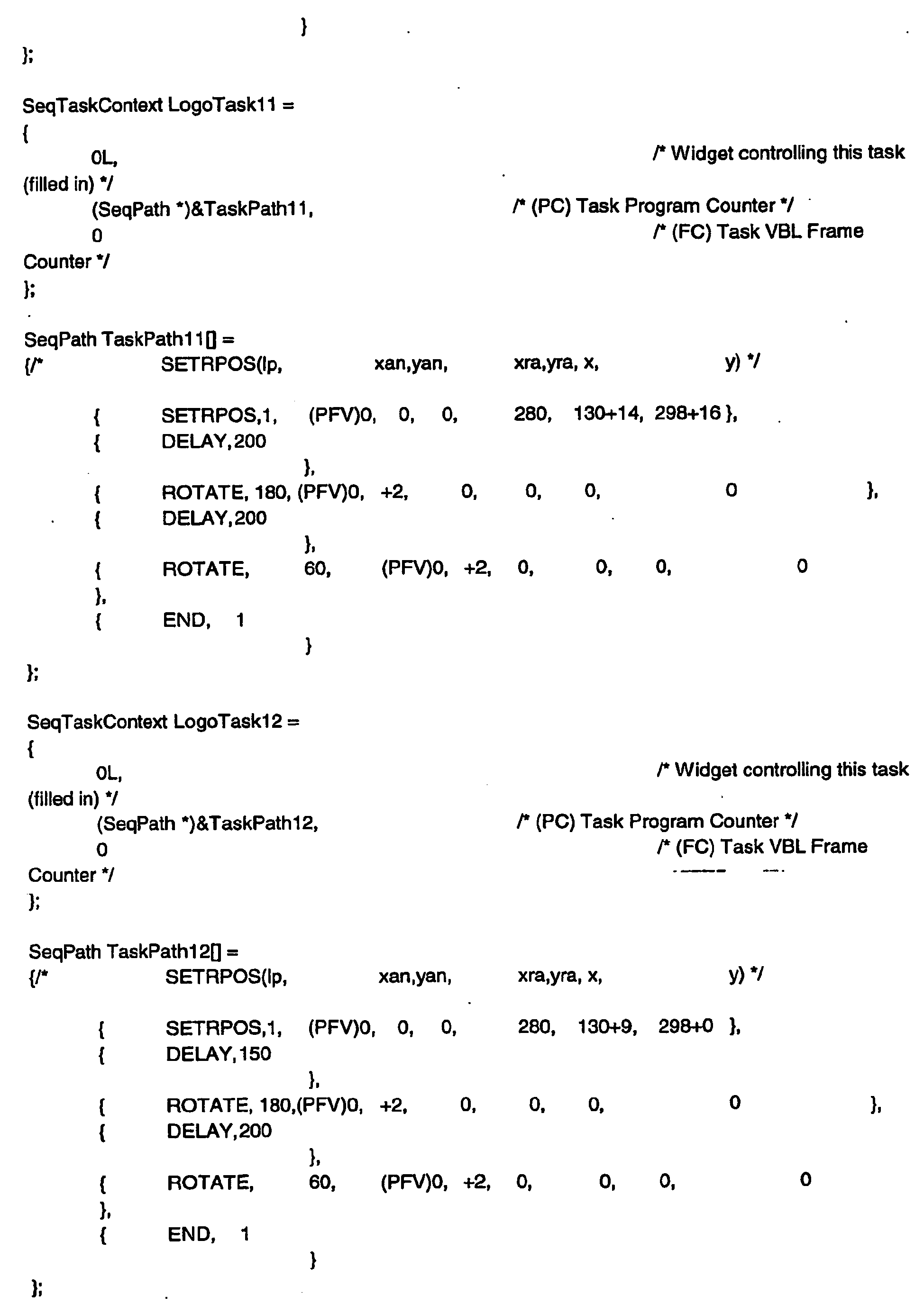

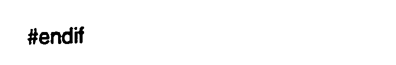

Appendix 3

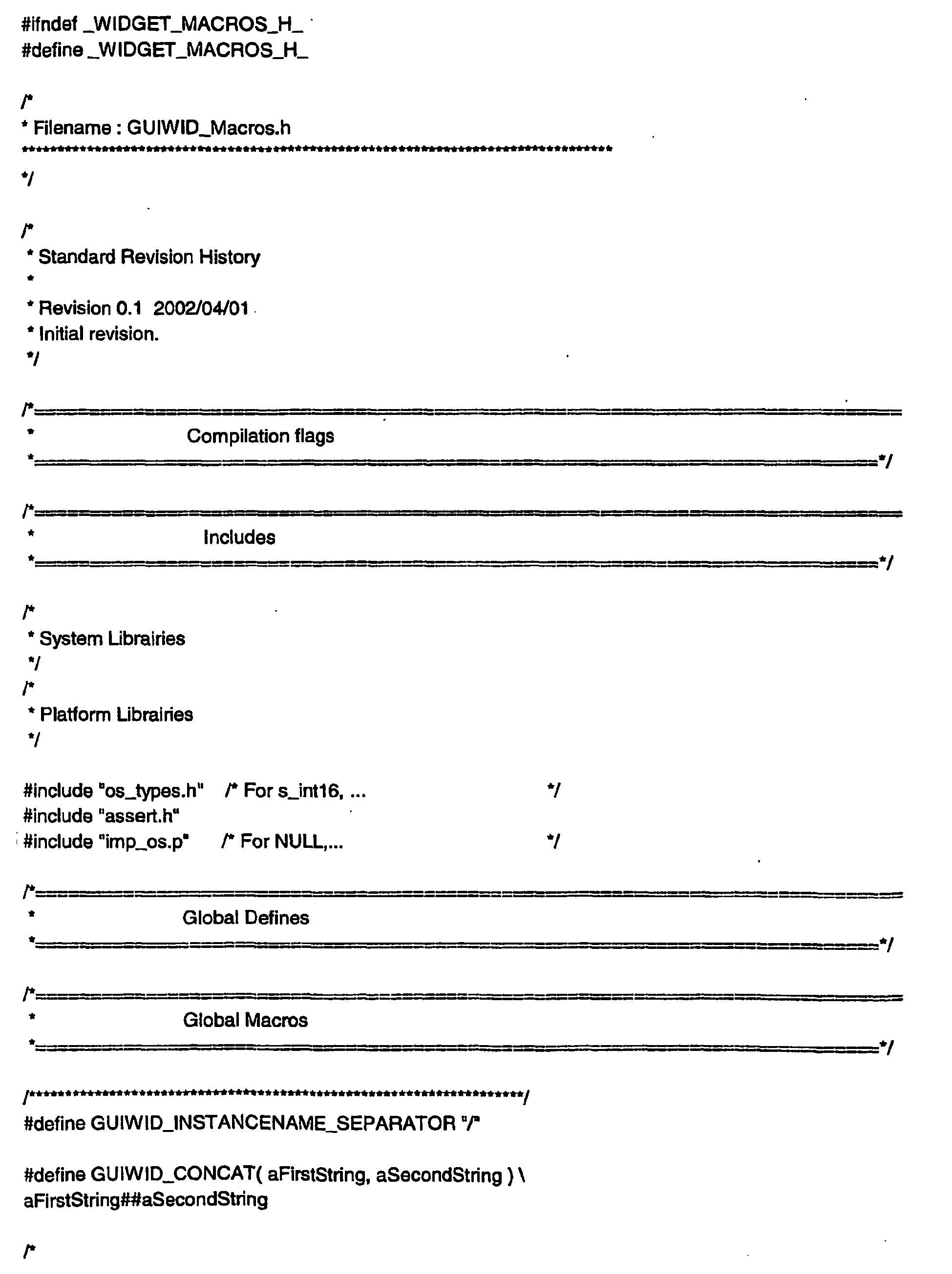

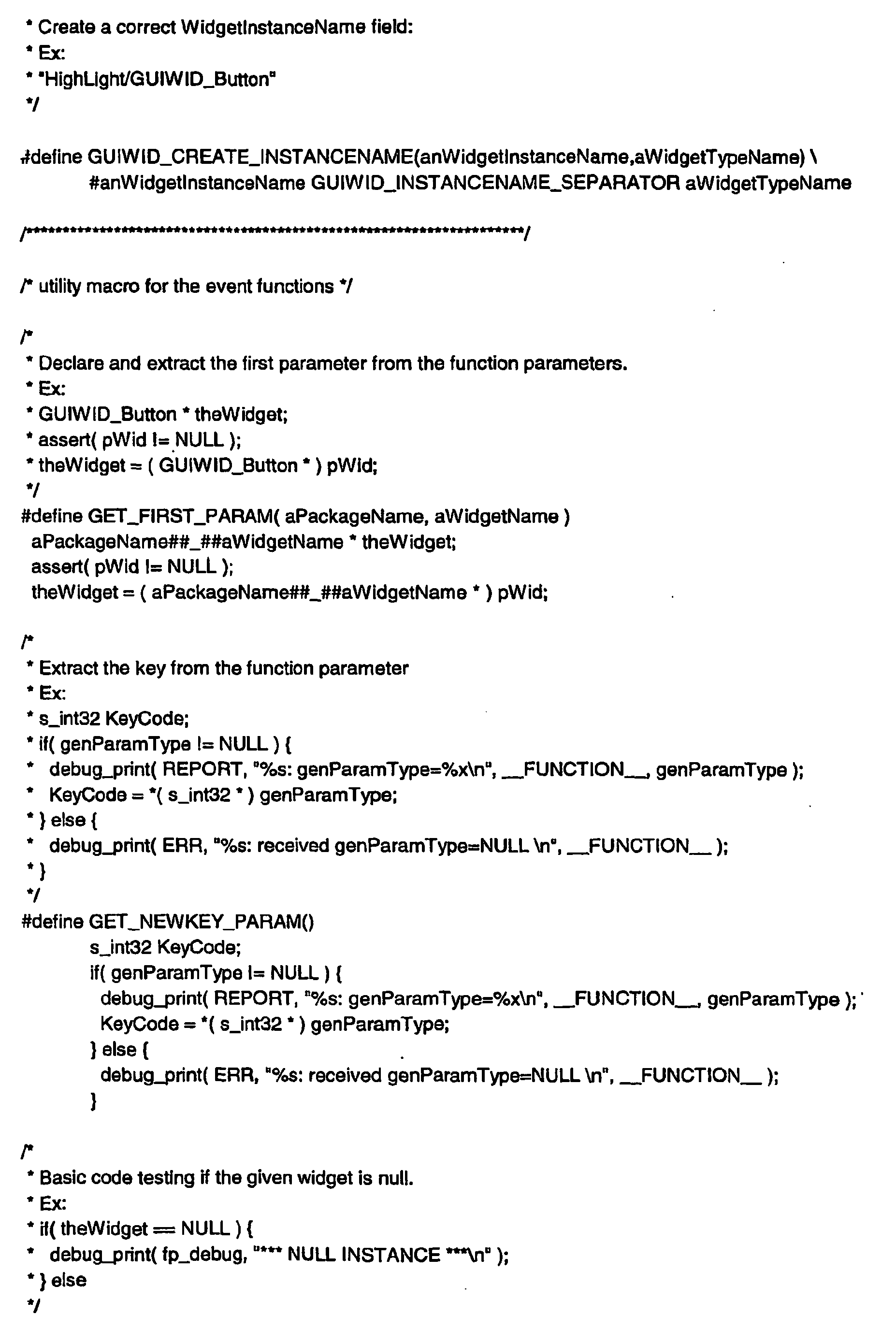

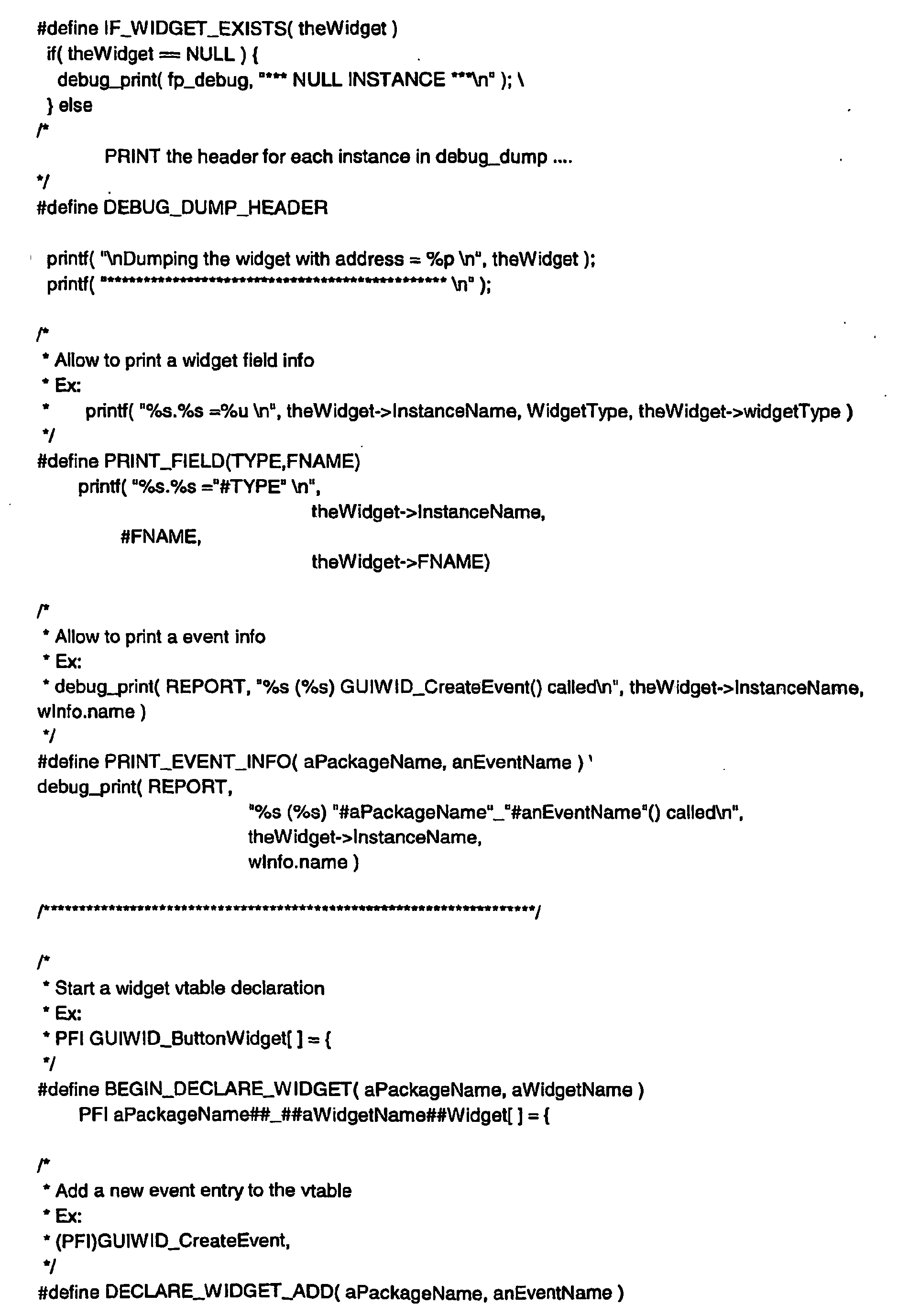

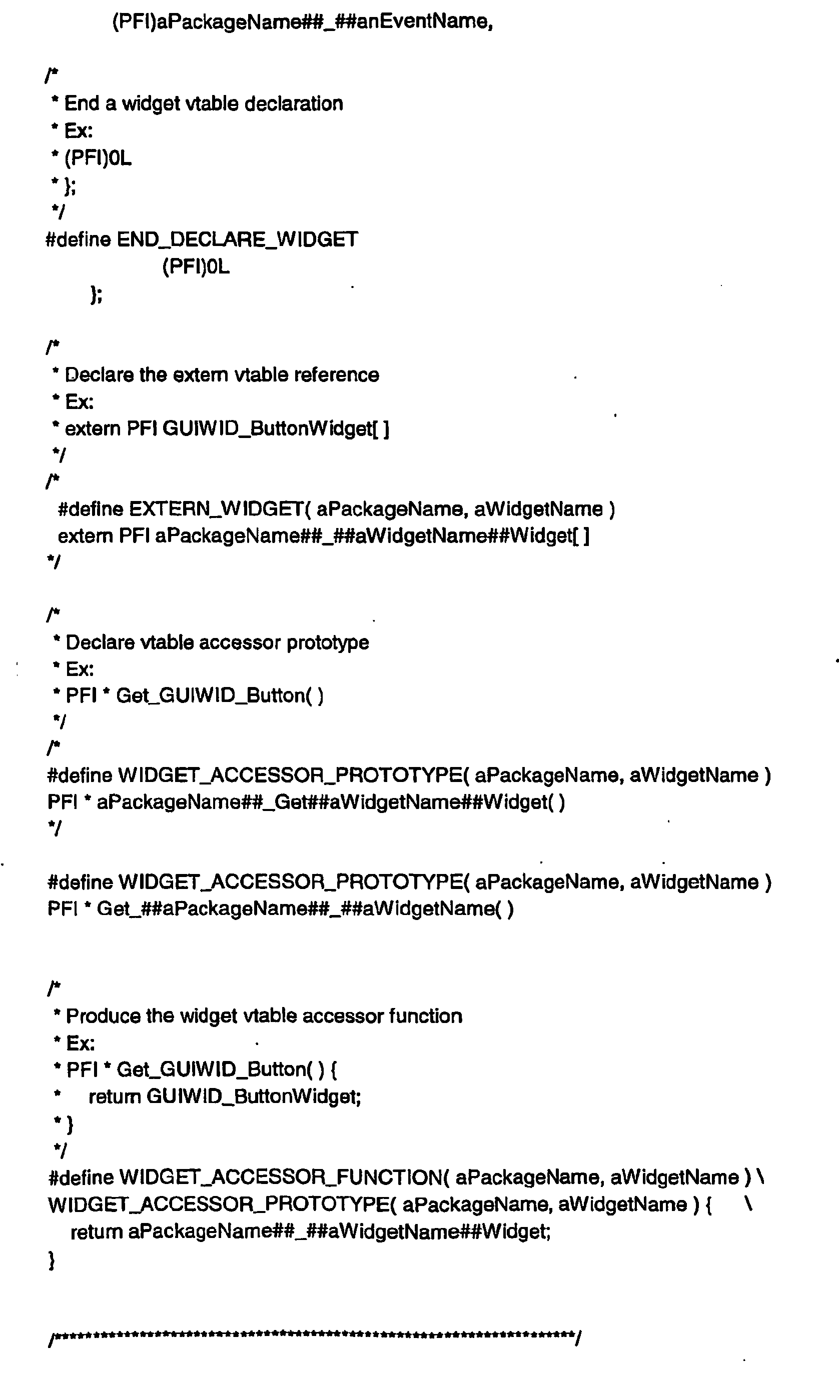

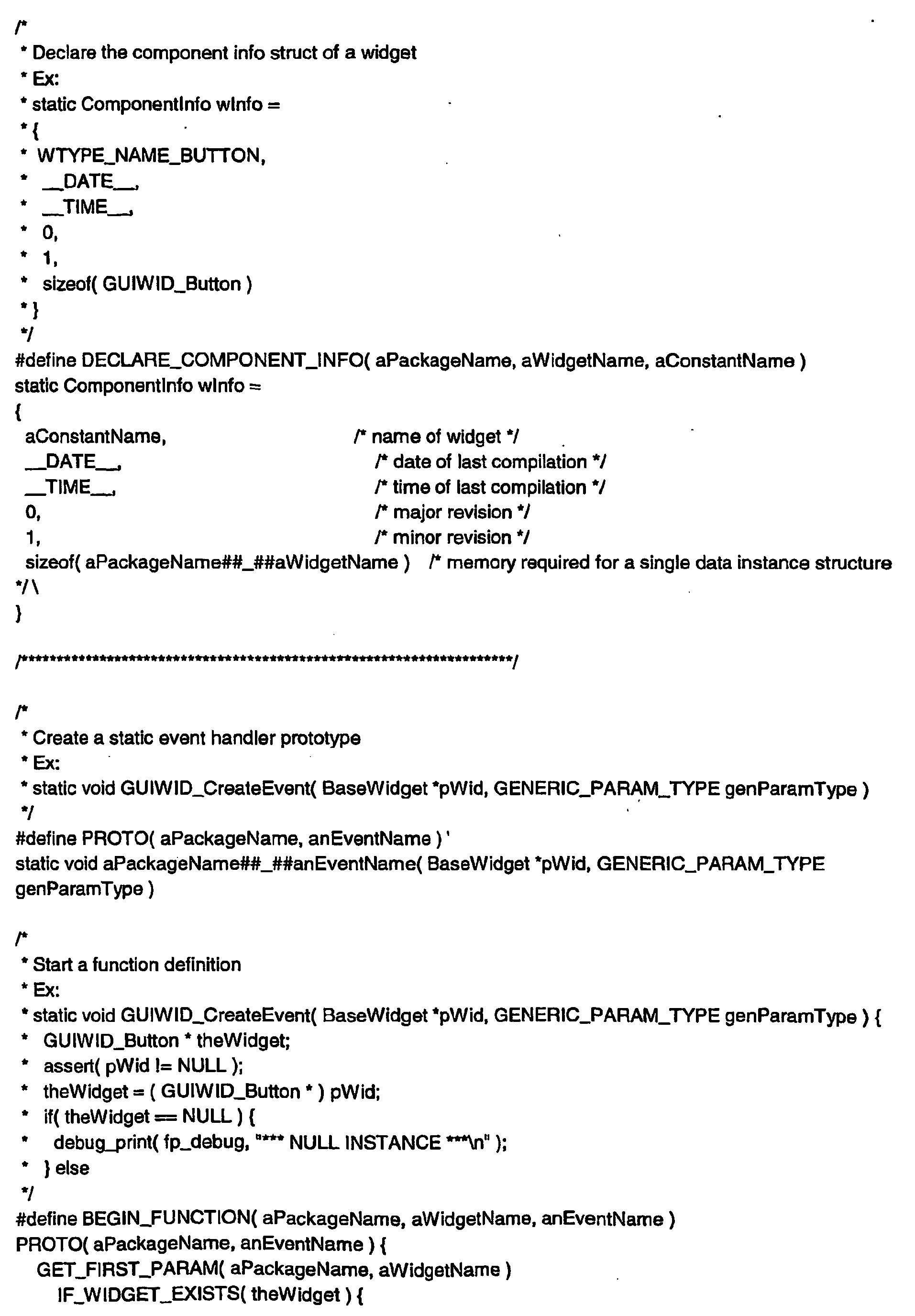

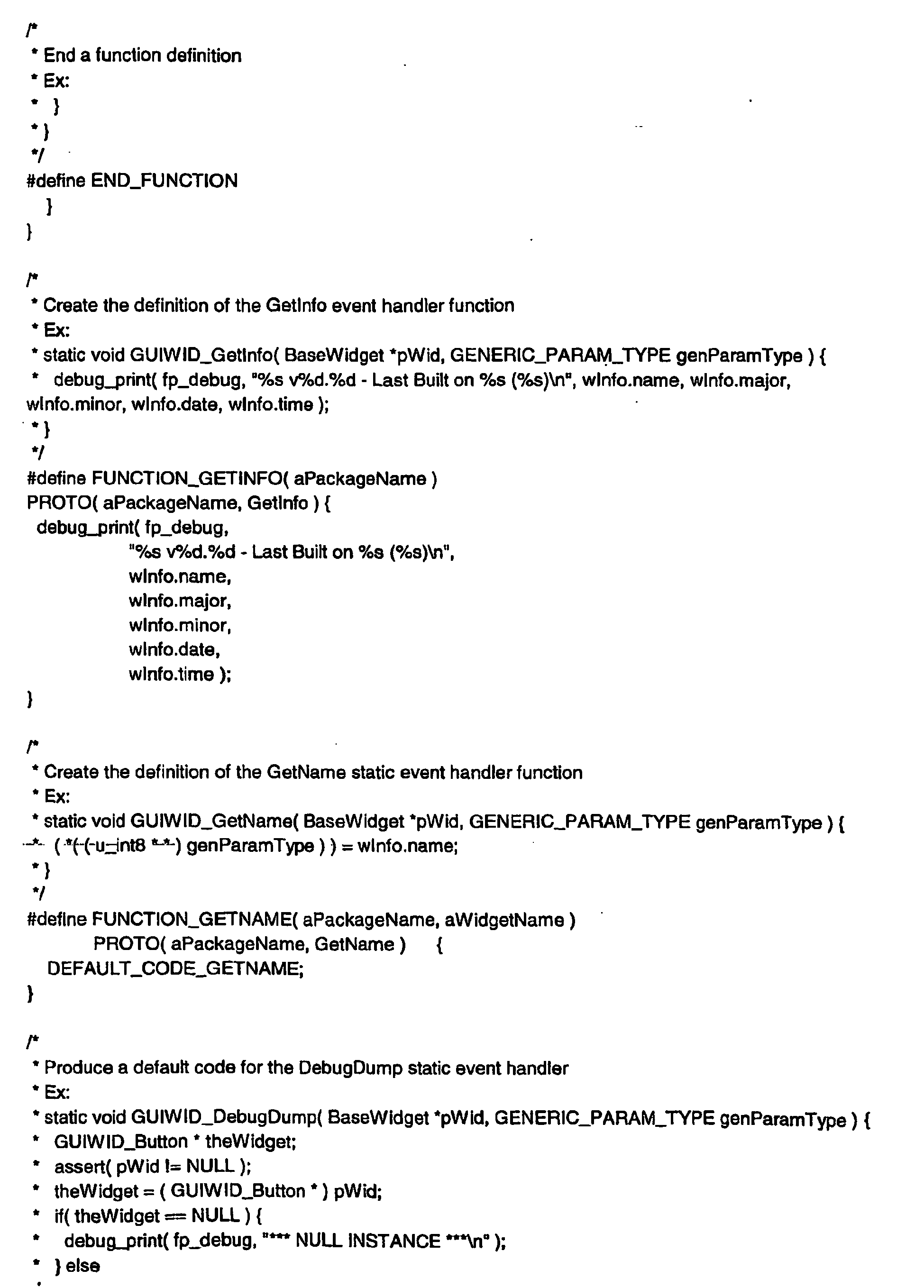

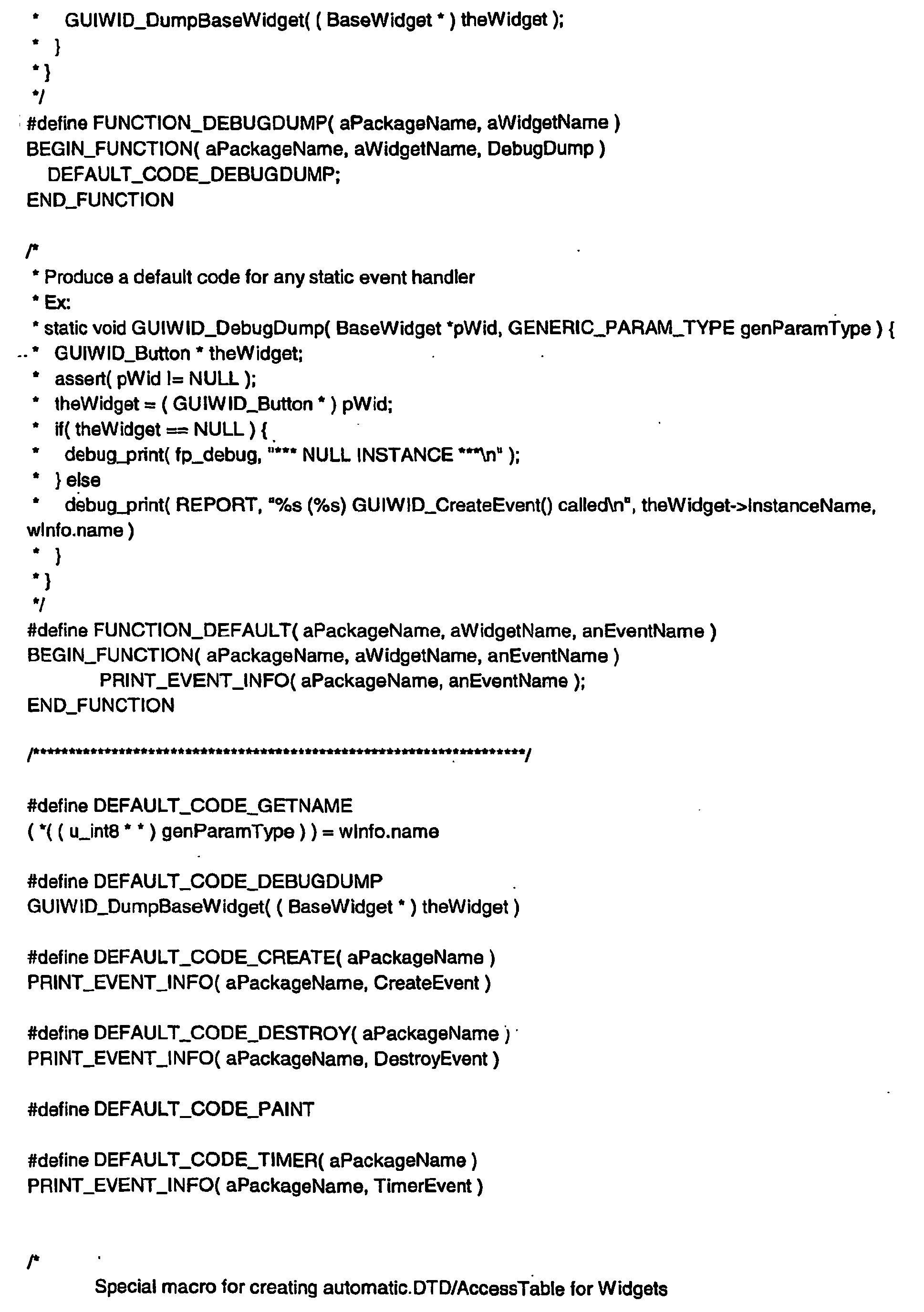

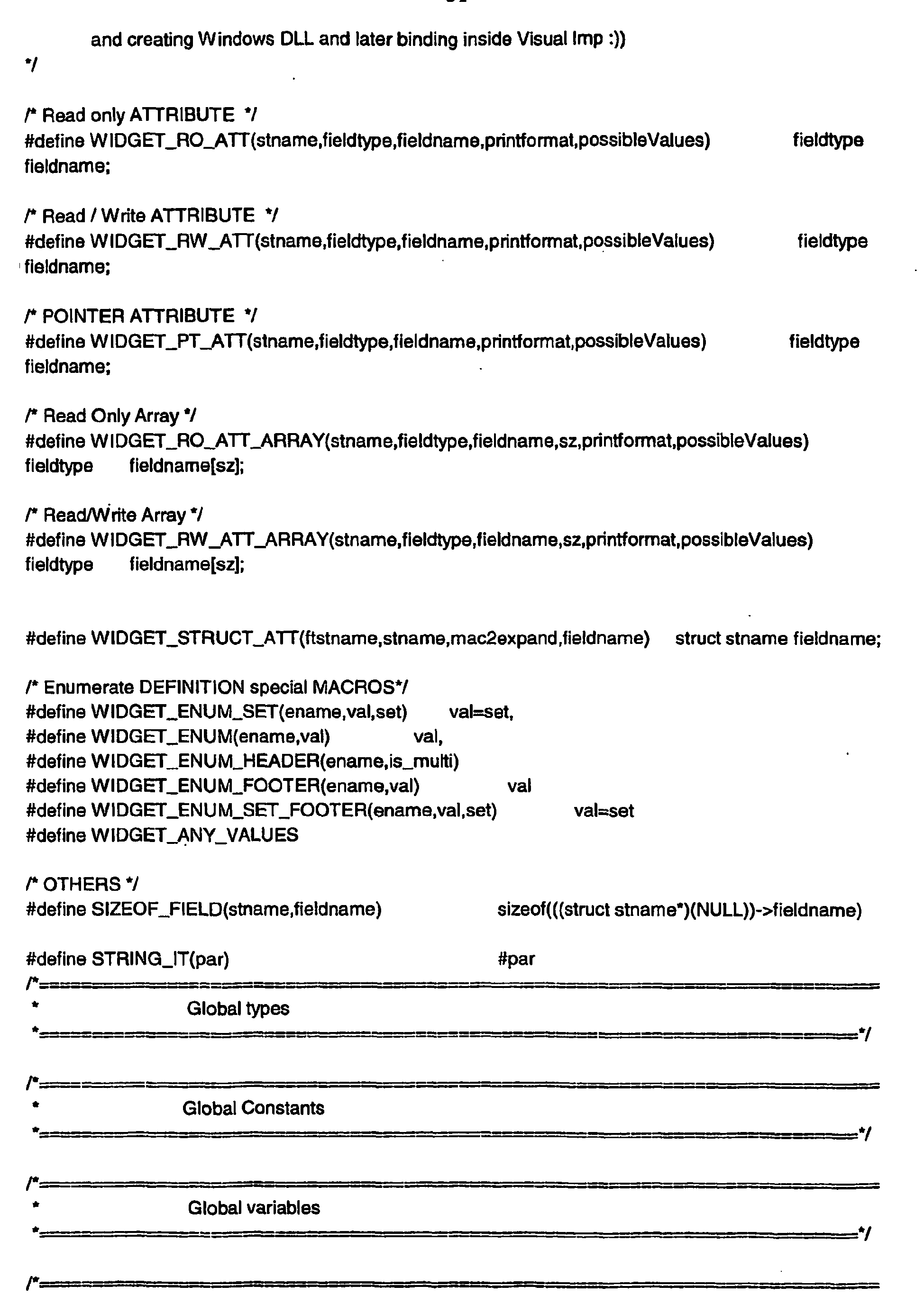

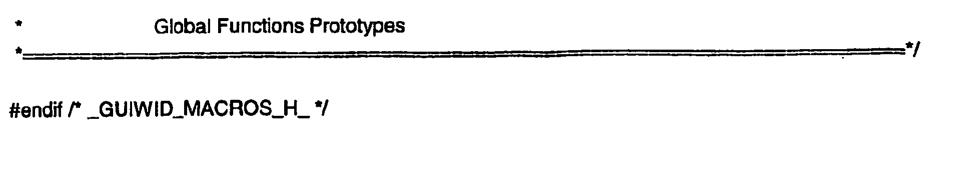

Appendix 4

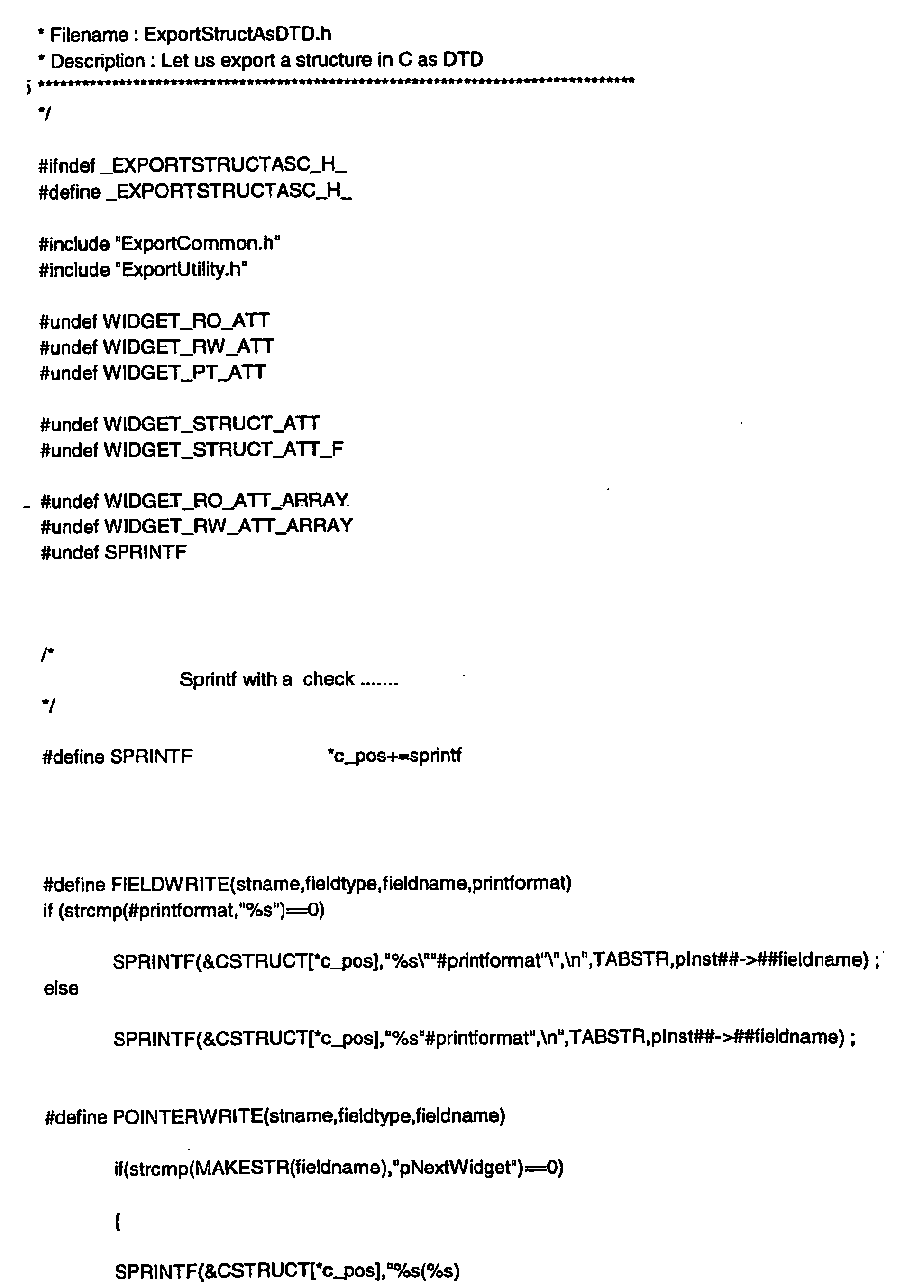

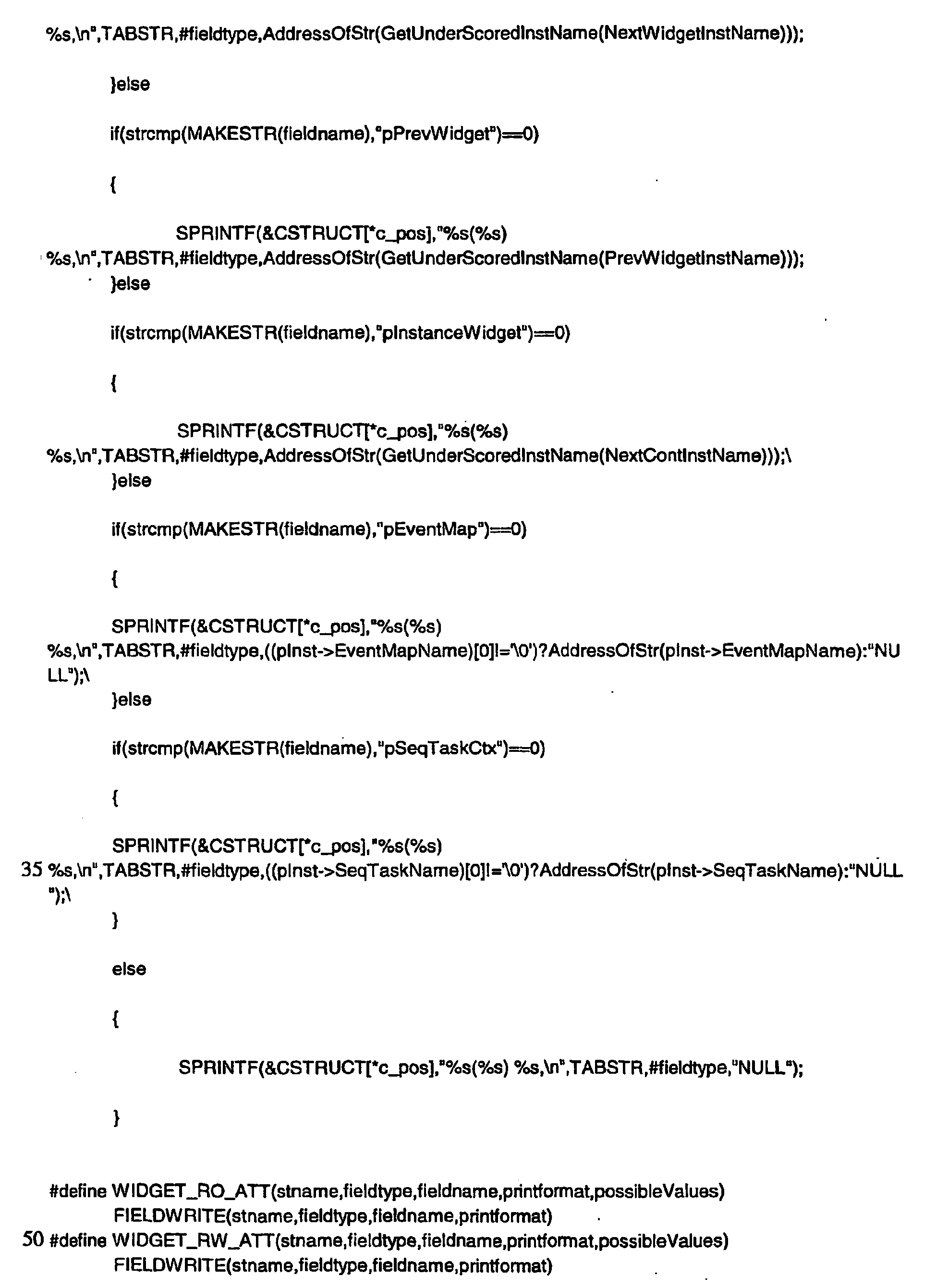

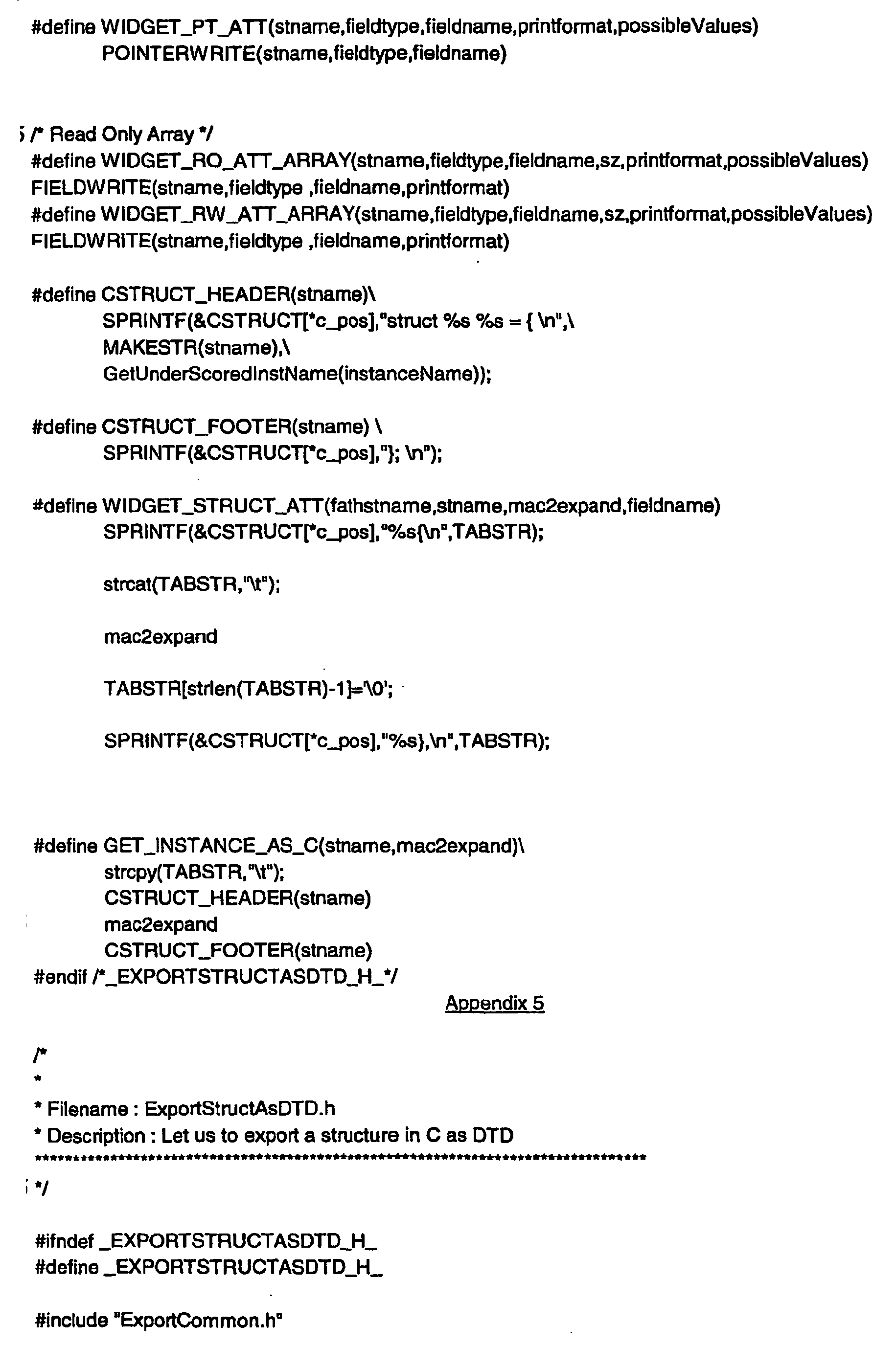

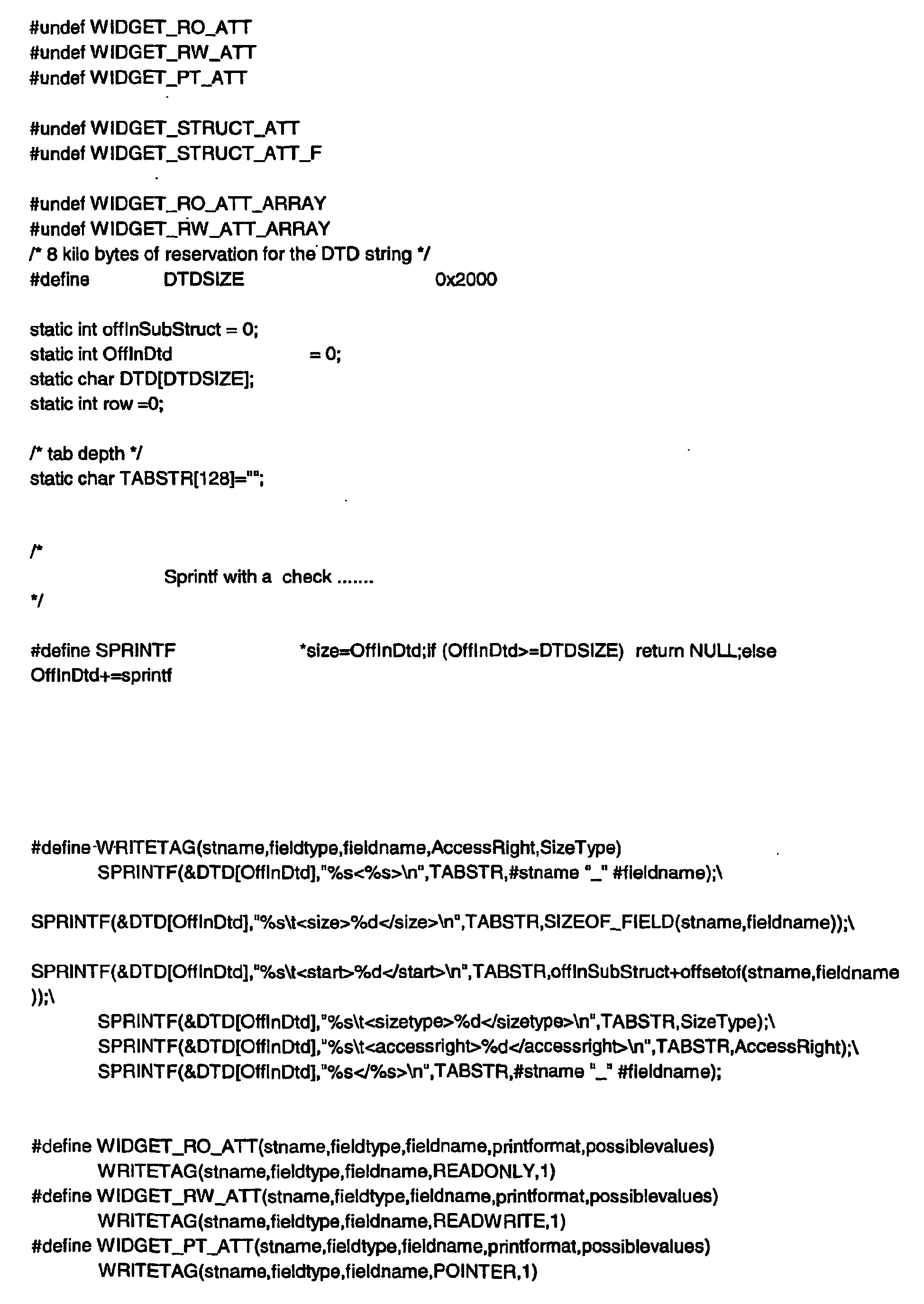

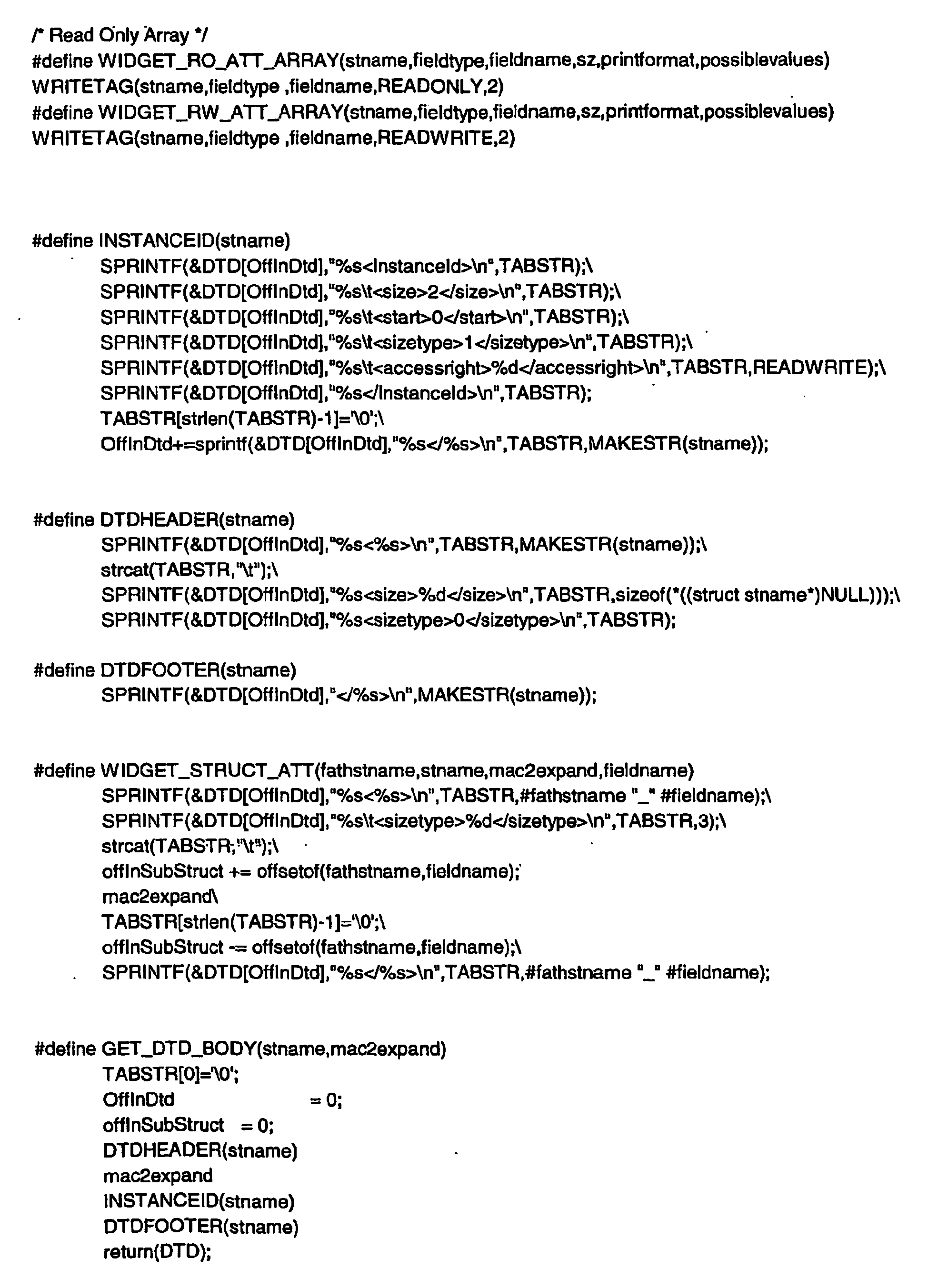

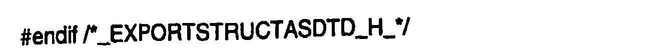

Appendix 6

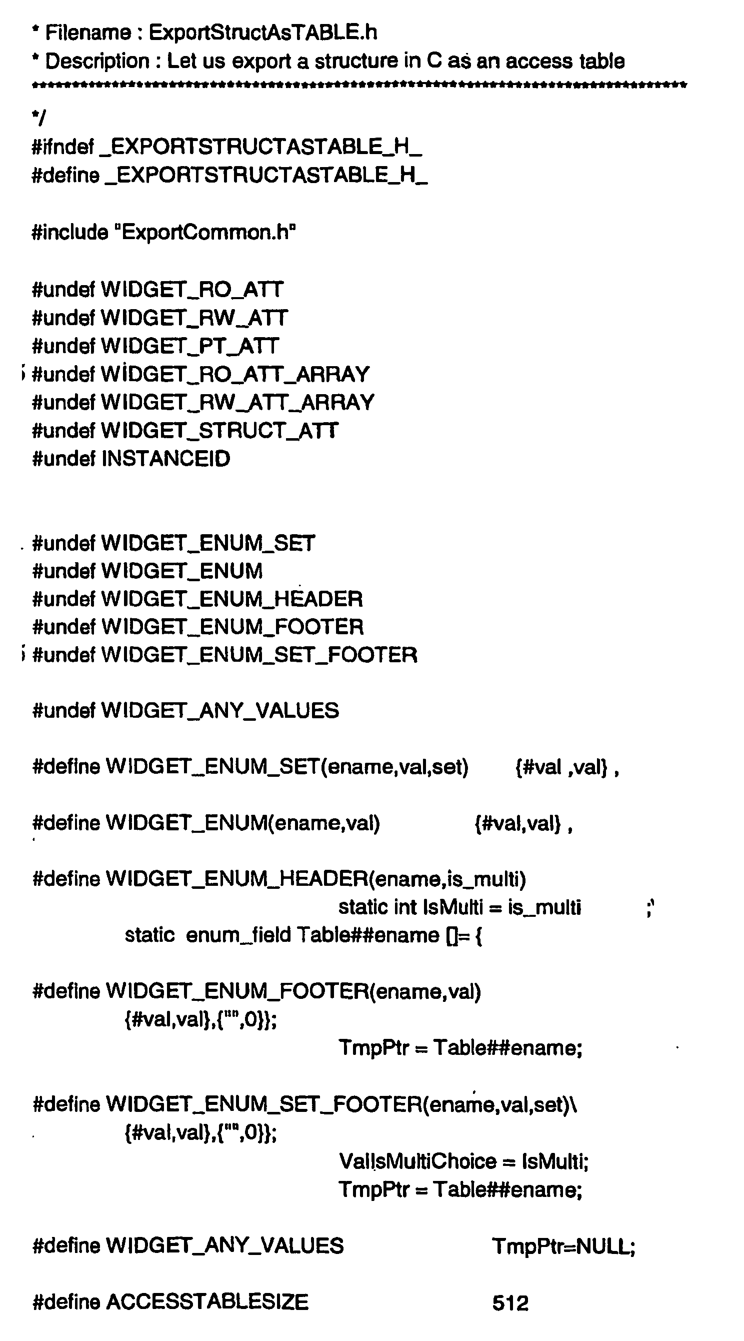

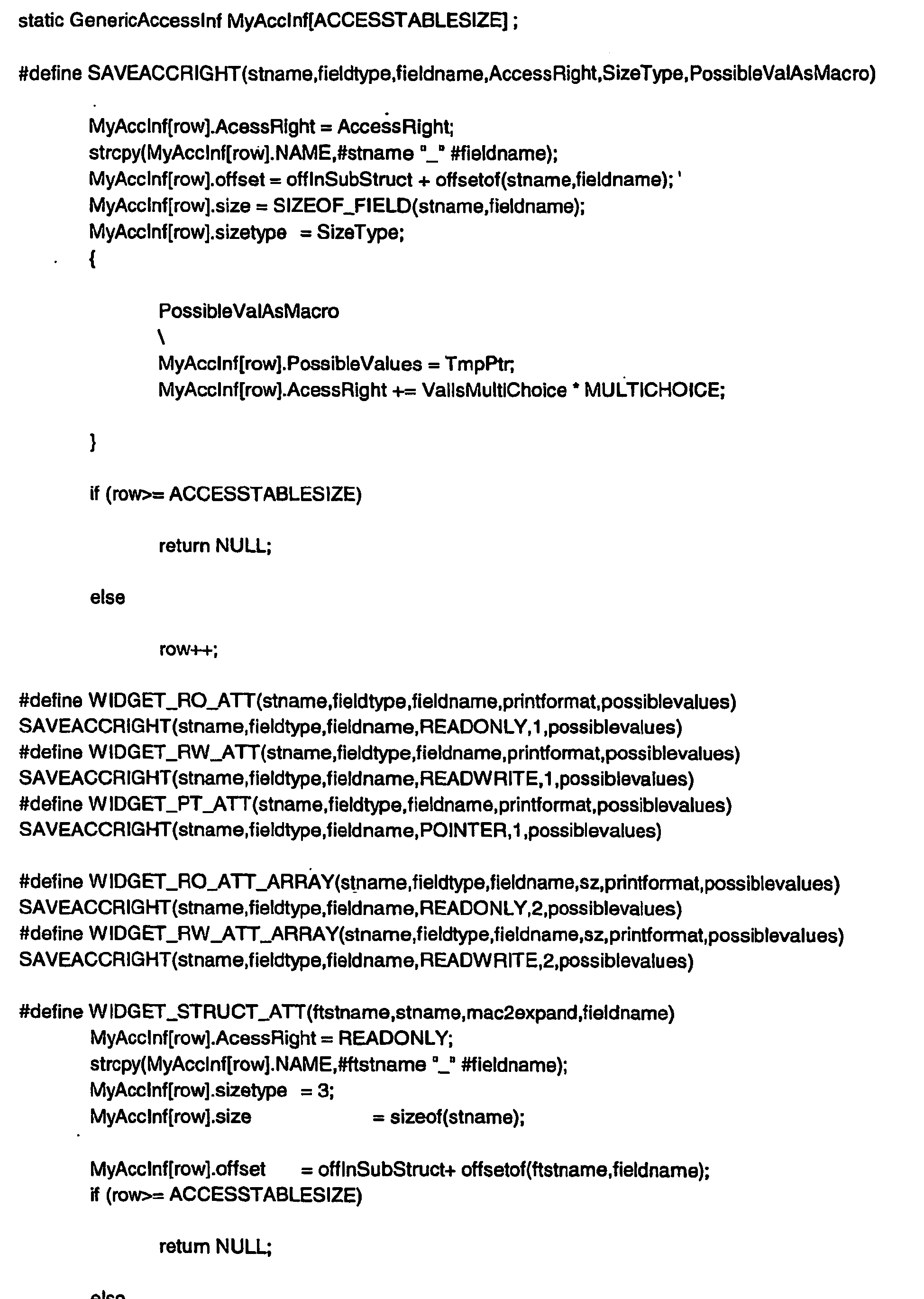

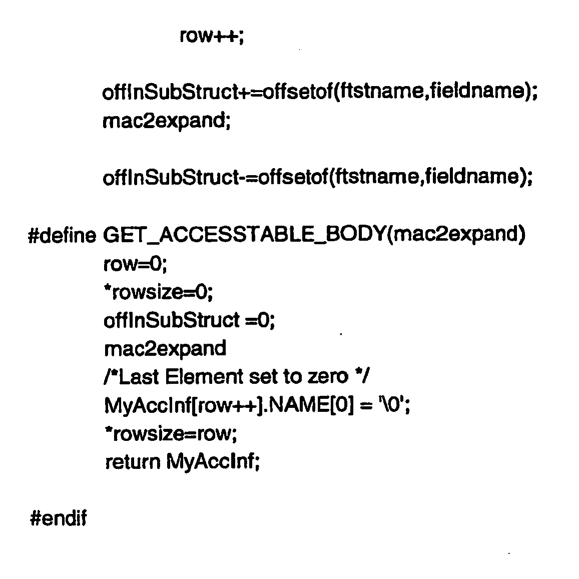

Appendix 7

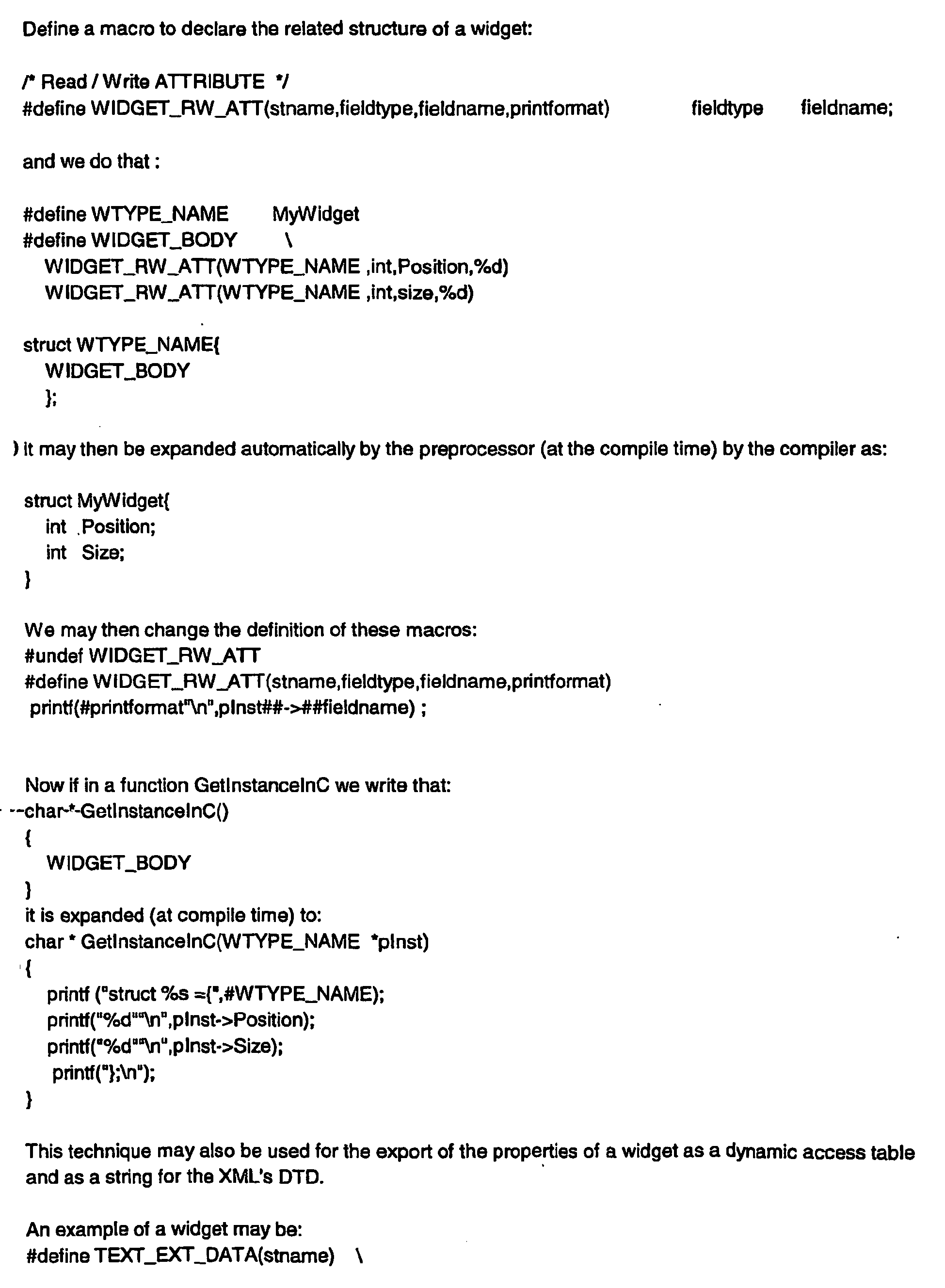

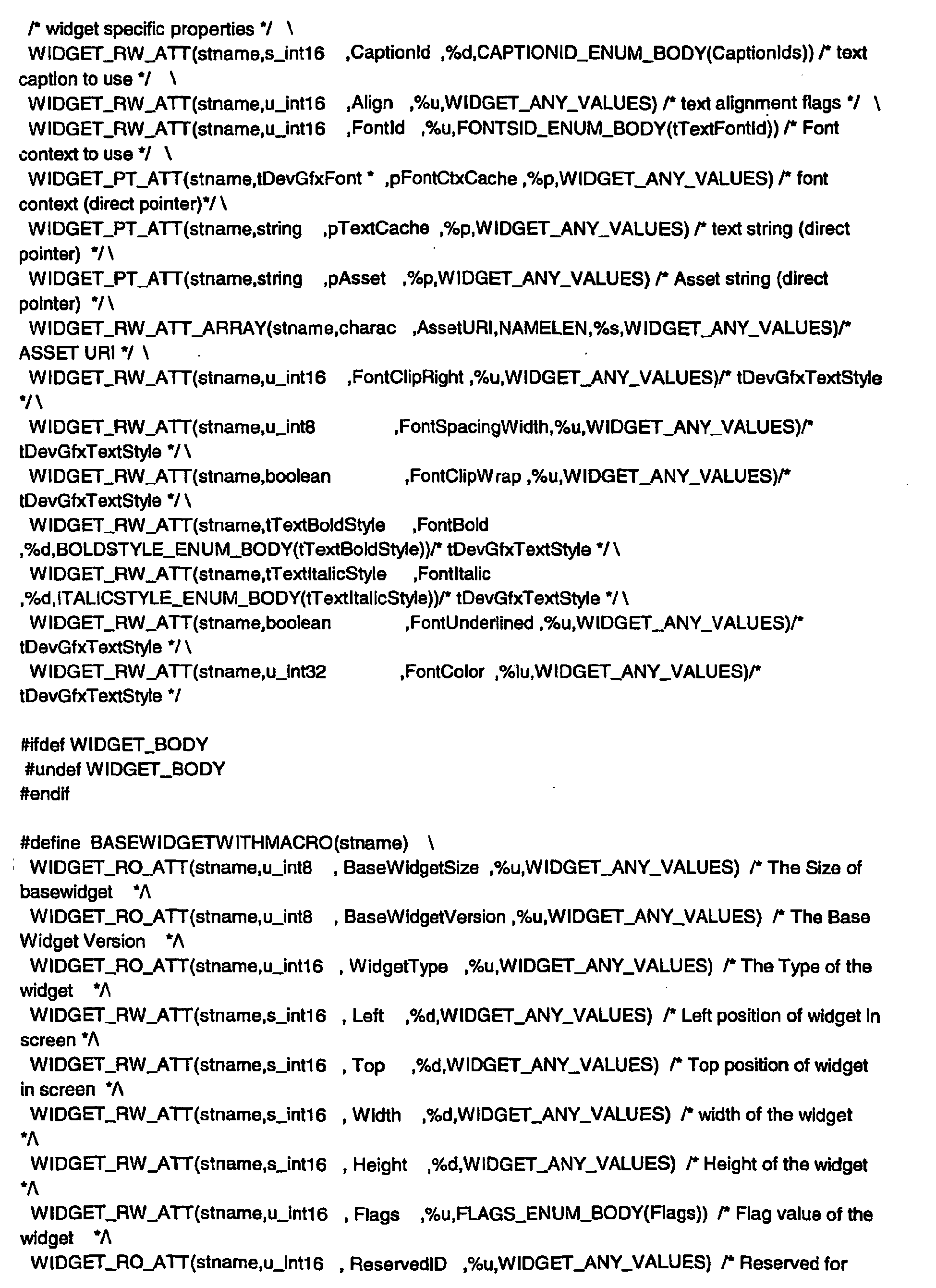

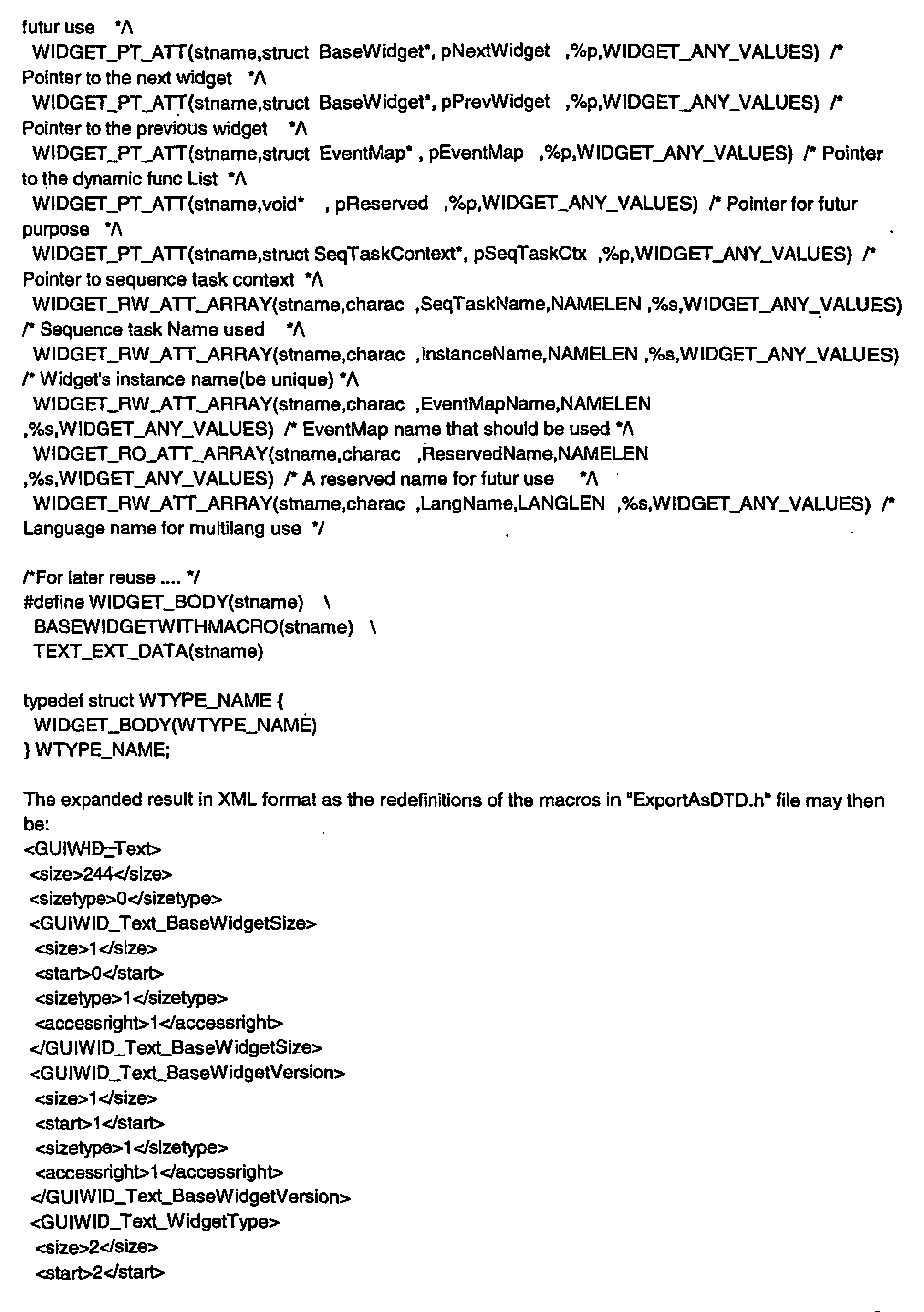

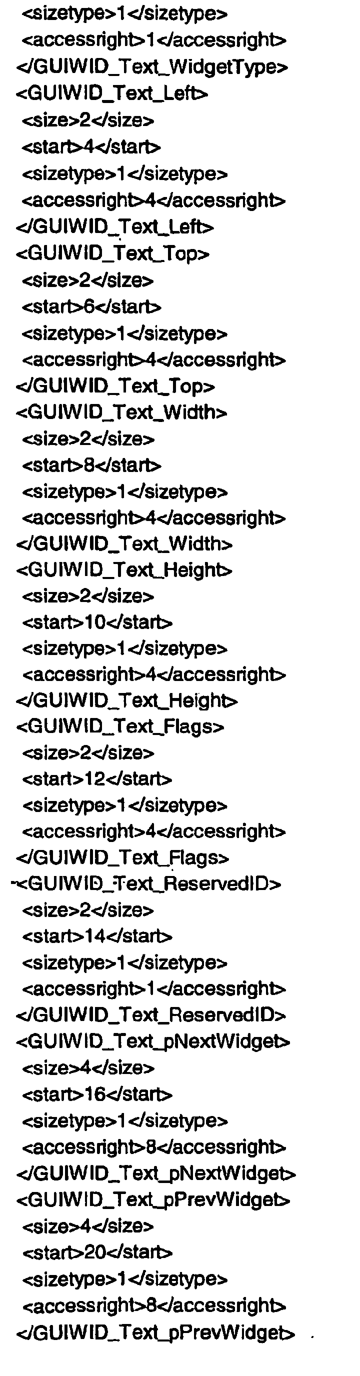

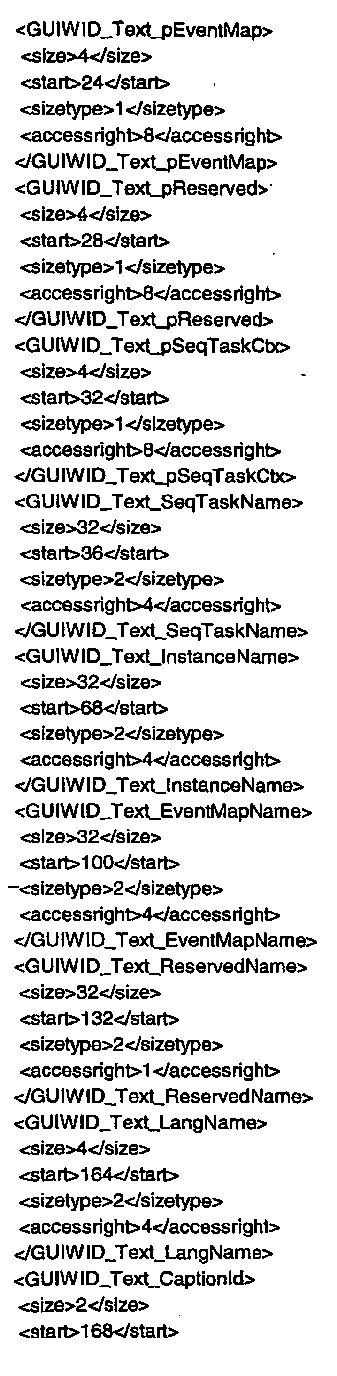

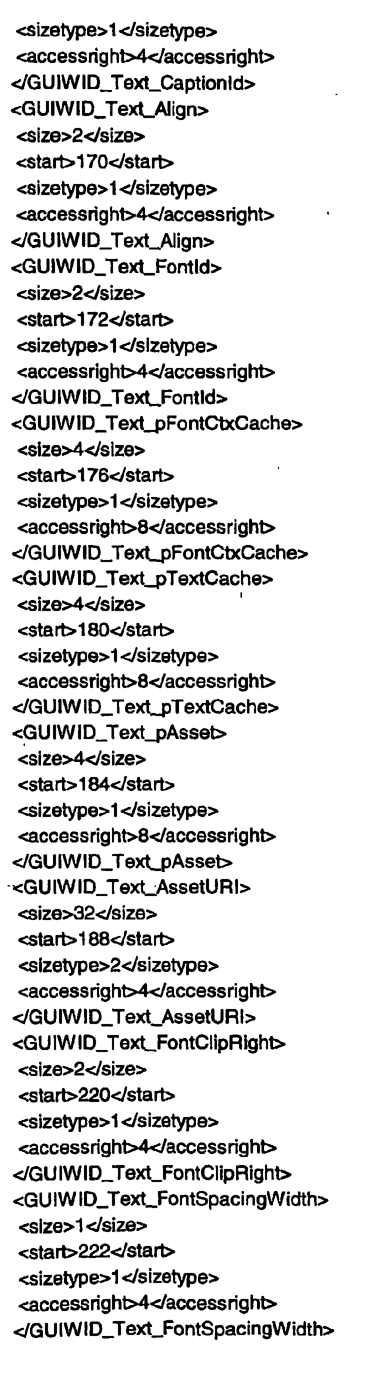

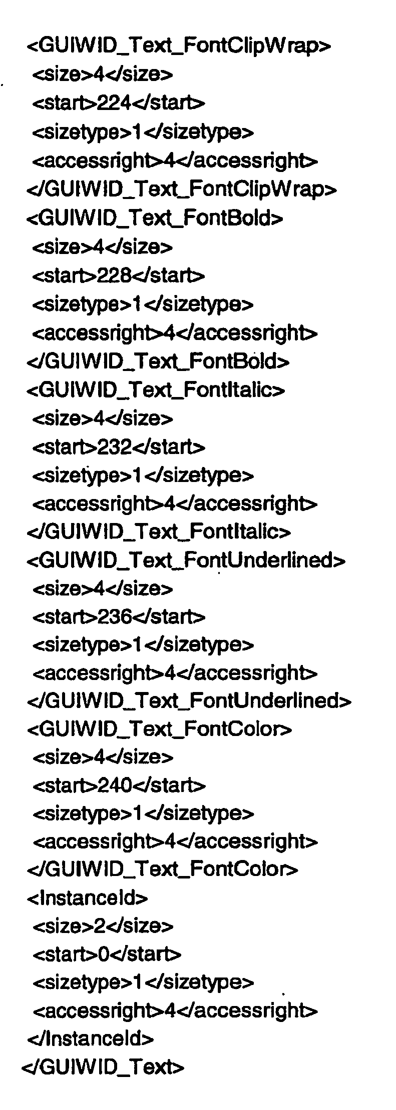

## Claims

1. Data processing apparatus comprising:
a hardware platform (100) including a processor (106), memory (108), at least one input interface (104) and at least one output interface; and
a software platform (120) including respective device drivers (112,114) for the interfaces;
middleware (140, 160) optimised for said hardware platform providing an API for an interactive user interface application (170), the middleware being arranged to interface with the interactive user interface application;
**characterised in that** the interactive user interface application comprises a code portion and an asset portion, wherein the code portion is portable between mutually different hardware platforms and the asset portion comprises assets selected for the hardware platform.

2. Apparatus according to Claim 1, wherein the middleware further comprises means for managing the availability and decompression of assets during real-time execution of the interactive user interface application.

3. Apparatus according to Claim 2, wherein the managing means is adapted to maintain version information of assets and to replace older versions of assets with newer versions.

4. Apparatus according to Claim 2 or 3, wherein the managing means is adapted to retrieve a version of an asset based on a language parameter.

5. Apparatus according to any of Claims 2 to 4 wherein the means for managing assets comprises means for performing dynamic loading of objects.

6. Apparatus according to any of Claims 2 to 5 wherein the means for managing assets comprises means for performing dynamic linking of objects.

7. Apparatus according to any of Claims 2 to 6 wherein the means for managing assets comprises means for decompressing assets.

8. A method for providing an interactive user interface application (170) comprising:
providing a hardware platform (100), including a processor, memory, at least one input interface and at least one output interface;
providing a software platform including respective device drivers for the interfaces; and
optimising middleware (140, 160) for the hardware platform to provide an API for an interactive user interface application (170), the middleware being arranged to interface with the interactive user interface application;
**characterised in that** the interactive user interface application comprises a code portion and an asset portion, wherein the code portion is portable between mutually different hardware platforms and the asset portion comprises assets selected for the hardware platform.

9. A method according to Claim 8 wherein the assets arc compressed into a file structure containing a plurality of assets.

10. A method according to Claim 8 or 9 including providing the application and the assets as separate components over a communication link.

11. An interactive user interface application (170) for a target hardware platform (100), wherein the application is arranged to interface with middleware (140, 160) optimised for the target platform, **characterised in that** the interactive user interface application comprises a code portion portable between mutually different hardware platforms in combination with a resource portion comprising assets selected for the target platform.

12. An interactive user interface application according to Claim 11 wherein the resource portion is compressed.

13. Middleware (140,160) optimised for a target hardware platform (100) providing an API for an interactive user interface application (170), the middleware being arranged to interface with the interactive user interface application, **characterised in that** the interactive user interface application comprises a code portion and an asset portion, wherein the code portion is portable between mutually different hardware platforms and the asset portion comprises assets selected for the target hardware platform.

14. A computer program or computer program product comprising software code adapted, when executed on a data processing apparatus, to perform a method according to any of claims 8 to 10.

## Patentansprüche

1. Datenverarbeitungsvorrichtung, die umfasst:
eine Hardwareplattform (100) mit einem Prozessor (106), einem Speicher (108), wenigstens einer Eingangsschnittstelle (104) und wenigstens einer Ausgangsschnittstelle; und
eine Softwareplattform (120) mit jeweiligen Gerätetreibern (112, 114) für die Schnittstellen;
Middleware (140, 160), die für die genannte Hardwareplattform optimiert ist, die eine API bzw. Programmschnittstelle für eine interaktive Benutzerschnittstellenanwendung (170) bereitstellt, wobei die Middleware eingerichtet ist, um an die interaktive Benutzerschnittstellenanwendung anzukoppeln;
**dadurch gekennzeichnet, dass** die interaktive Benutzerschnittstellenanwendung einen Codeanteil und einen Zusatzanteil umfasst, wobei der Codeanteil zwischen wechselseitig verschiedenen Hardwareplattformen portierbar ist, und der Zusatzanteil Zusätze umfasst, die für die Hardwareplattform ausgewählt sind.

2. Vorrichtung nach Anspruch 1, wobei die Middleware ferner Mittel zur Verwaltung der Verfügbarkeit und Dekomprimierung von Zusätzen während der Echtzeitausführung der interaktiven Benutzerschnittstellenanwendung umfasst.

3. Vorrichtung nach Anspruch 2, wobei das Verwaltungsmittel geeignet ist, Versionsinformation von Zusätzen zu pflegen und ältere Versionen von Zusätzen durch neuere Versionen zu ersetzen.

4. Vorrichtung nach Anspruch 2 oder 3, wobei das Verwaltungsmittel geeignet ist, eine Version eines Zusatzes basierend auf einem Sprachparameter abzurufen.

5. Vorrichtung nach einem der Ansprüche 2 bis 4, wobei das Mittel zum Verwalten von Zusätzen Mittel zur Durchführung des dynamischen Ladens von Objekten umfasst.

6. Vorrichtung nach einem der Ansprüche 2 bis 5, wobei das Mittel zum Verwalten von Zusätzen Mittel zur dynamischen Verknüpfung von Objekten umfasst.

7. Vorrichtung nach einem der Ansprüche 2 bis 6, wobei das Mittel zum Verwalten von Zusätzen Mittel zur Dekomprimierung von Zusätzen umfasst.

8. Verfahren zum Bereitstellen einer interaktiven Benutzerschnittstellenanwendung (170), das umfasst:
Bereitstellen einer Hardwareplattform (100) mit einem Prozessor, einem Speicher, wenigstens einer Eingangsschnittstelle und wenigstens einer Ausgangsschnittstelle; und
Bereitstellen einer Softwareplattform mit jeweiligen Gerätetreibern für die Schnittstellen; und
Optimieren von Middleware (140, 160) für die Hardwareplattform, um eine API für eine interaktive Benutzerschnittstellenanwendung (170) bereitzustellen, wobei die Middleware eingerichtet ist, um an die interaktive Benutzerschnittstellenanwendung anzukoppeln;
**dadurch gekennzeichnet, dass** die interaktive Benutzerschnittstellenanwendung einen Codeanteil und einen Zusatzanteil umfasst, wobei der Codeanteil zwischen wechselseitig verschiedenen Hardwareplattformen portierbar ist, und der Zusatzanteil Zusätze umfasst, die für die Hardwareplattform ausgewählt sind.

9. Verfahren nach Anspruch 8, wobei die Zusätze in eine Dateistruktur komprimiert werden, die eine Vielzahl von Zusätzen umfasst.

10. Verfahren nach Anspruch 8 oder 9, welches das Bereitstellen der Anwendung und der Zusätze als getrennte Komponenten über eine Kommunikationsverbindung umfasst.

11. Interaktive Benutzerschnittstellenanwendung (170) für eine Zielhardwareplattform (100), wobei die Anwendung eingerichtet ist, um an Middleware (140, 160) anzukoppeln, die für die Zielplattform optimiert ist, **dadurch gekennzeichnet, dass** die interaktive Benutzerschnittstellenanwendung einen Codeanteil, der zwischen wechselseitig verschiedenen Hardwareplattformen portierbar ist, in Kombination mit einem Ressourcenanteil, der für die Zielplattform ausgewählte Zusätze enthält, umfasst.

12. Interaktive Benutzerschnittstellenanwendung nach Anspruch 11, wobei der Ressourcenanteil komprimiert ist.

13. Middleware (140, 160), die für eine Zielhardwareplattform (100) optimiert ist, die eine API für eine interaktive Benutzerschnittstellenanwendung (170) bereitstellt, wobei die Middleware eingerichtet ist, um an die interaktive Benutzerschnittstellenanwendung anzukoppeln, **dadurch gekennzeichnet, dass** die interaktive Benutzerschnittstellenanwendung einen Codeanteil und einen Zusatzanteil umfasst, wobei der Codeanteil zwischen wechselseitig verschiedenen Hardwareplattformen portierbar ist, und der Zusatzanteil Zusätze umfasst, die für die Zielhardwareplattform ausgewählt sind.

14. Computerprogramm oder Computerprogrammprodukt, das Softwarecode umfasst, der geeignet ist, wenn er auf einer Datenverarbeitungsvorrichtung ausgeführt wird, ein Verfahren nach einem der Ansprüche 8 bis 10 durchzuführen.

## Revendications

1. Appareil de traitement des données, comprenant:
une plateforme matérielle (100) incluant un processeur (106), une mémoire (108), au moins une interface de saisie (104) et au moins une interface de sortie; et
une plateforme logicielle (120) incluant des pilotes de périphérique respectifs (112, 114) pour les interfaces;
un intergiciel (140, 160) optimisé pour ladite plateforme matérielle fournissant une API pour une application d'interface utilisateur interactive (170), l'intergiciel étant arrangé comme jonction avec l'application d'interface utilisateur interactive;
**caractérisé en ce que** l'application d'interface utilisateur interactive comprend une partie codée et une partie d'actif, dans lequel la partie codée est portable entre des plateformes matérielles mutuellement différentes et la partie d'actif comprend des actifs sélectionnés pour la plateforme matérielle.

2. Appareil selon la revendication 1, dans lequel l'intergiciel comprend en outre un moyen pour gérer la disponibilité et la décompression d'intergiciels pendant l'exécution en temps réel de l'application d'interface utilisateur interactive.

3. Appareil selon la revendication 2, dans lequel le moyen de gestion est adapté pour maintenir l'information de version d'intergiciels et pour remplacer des anciennes versions d'intergiciels par de nouvelles versions.

4. Appareil selon la revendication 2 ou 3, dans lequel le moyen de gestion est adapté pour récupérer une version d'un intergiciel sur la base d'un paramètre de langage.

5. Appareil selon l'une quelconque des revendications 2 à 4, dans lequel le moyen pour gérer des actifs comprend un moyen pour accomplir un chargement dynamique d'objets.

6. Appareil selon l'une quelconque des revendications 2 à 5, dans lequel le moyen pour gérer des actifs comprend un moyen pour accomplir un chaînage dynamique d'objets.

7. Appareil selon l'une quelconque des revendications 2 à 6, dans lequel le moyen pour gérer des actifs comprend un moyen pour décomprimer des actifs.

8. Procédé pour fournir une application d'interface utilisateur interactive (170), comprenant:
fournir une plateforme matérielle (100) incluant un processeur, une mémoire, au moins une interface de saisie et au moins une interface de sortie;
fournir une plateforme logicielle incluant des pilotes de périphérique respectifs pour les interfaces; et
optimiser l'intergiciel (140, 160) pour la plateforme matérielle pour fournir une API pour une application d'interface utilisateur interactive (170), l'intergiciel étant arrangé comme jonction avec l'application d'interface utilisateur interactive;
**caractérisé en ce que** l'application d'interface utilisateur interactive comprend une partie codée et une partie d'actif, dans lequel la partie codée est portable entre des plateformes matérielles mutuellement différentes et la partie d'actif comprend des actifs sélectionnés pour la plateforme matérielle.

9. Procédé selon la revendication 8, dans lequel les actifs sont comprimés dans une structure de fichier contenant une pluralité d'actifs.

10. Procédé selon la revendication 8 ou 9, incluant la fourniture de l'application et des actifs comme composants séparés par un lien de communication.

11. Application d'interface utilisateur interactive (170) pour une plateforme matérielle cible (100) dans laquelle l'application est arrangée comme jonction avec l'intergiciel (140, 160) optimisé pour la plateforme cible, **caractérisée en ce que** l'application d'interface utilisateur interactive comprend une partie codée portable entre des plateformes matérielles mutuellement différentes en combinaison avec une partie de ressource comprenant des actifs sélectionnés pour la plateforme cible.

12. Application d'interface utilisateur interactive selon la revendication 11, dans laquelle la partie de ressource est comprimée.

13. Intergiciel (140, 160) optimisé pour une plateforme matérielle cible (100) fournissant une API pour une application d'interface utilisateur interactive (170), l'intergiciel étant arrangé comme jonction avec l'application d'interface utilisateur interactive, **caractérisé en ce que** l'application d'interface utilisateur interactive comprend une partie codée et une partie d'actif, dans lequel la partie codée est portable entre des plateformes matérielles mutuellement différentes et la partie d'actif comprend des actifs sélectionnés pour la plateforme matérielle cible.

14. Programme d'ordinateur ou produit de programme d'ordinateur comprenant un code logiciel adapté pour accomplir un procédé selon l'une quelconque des revendications 8 à 10 s'il est exécuté sur un appareil de traitement des données.
